# EUROPEAN PATENT SPECIFICATION

(11) **EP 3 348 663 B1**
(45) Date of publication and mention of the grant of the patent: **26.05.2021**
(21) Application number: 16843904.0
(22) Date of filing: 26.08.2016
(51) Int. Cl.: C23C 8/10, F04B 39/00, F16C 33/12

(54) **OXIDE COATING FORMED ON FERROUS SUBSTRATE, SLIDING MEMBER ON WHICH SAID OXIDE COATING IS FORMED, AND APPARATUS PROVIDED WITH SLIDING MEMBER**
OXIDBESCHICHTUNG AUF EISENHALTIGEM SUBSTRAT, GLEITELEMENT MIT DARAUF GEFORMTER BESAGTER OXIDBESCHICHTUNG UND VORRICHTUNG MIT GLEITELEMENT
REVÊTEMENT D'OXYDE FORMÉ SUR UN SUBSTRAT FERREUX, ÉLÉMENT COULISSANT SUR LEQUEL LEDIT REVÊTEMENT D'OXYDE EST FORMÉ, ET APPAREIL MUNI DE L'ÉLÉMENT COULISSANT

(30) Priority: 07.09.2015 JP 2015175290
(43) Date of publication of application: 18.07.2018
(73) Proprietor: Panasonic Intellectual Property Management Co., Ltd., Osaka-shi, Osaka 540-6207 (JP)
(72) Inventor: OYAGI, Shingo, Osaka 540-6207 (JP); ISHIDA, Yoshinori, Osaka 540-6207 (JP); KAWABATA, Hirotaka, Osaka 540-6207 (JP); FUKUHARA, Hiroyuki, Osaka 540-6207 (JP); HAYASHI, Hiroto, Osaka 540-6207 (JP)
(74) Representative: Eisenführ Speiser
(86) International application number: PCT/JP2016/003906
(87) International publication number: WO 2017/043034

(56) References cited:
- EP-A1- 1 310 577
- EP-A1- 2 113 580
- EP-A1- 2 818 716
- WO-A1-2013/125197
- JP-A- H0 539 523
- JP-A- H02 204 028
- JP-A- H09 228 972
- JP-A- 2008 241 032
- JP-A- 2009 263 750
- JP-U- S 604 741

## Description

### Technical Field

The present invention relates to an oxide coating film provided on the surface of a base material made of an iron-based material (iron-based base material), a slide member provided with this oxide coating film, and a device including this slide member (slide member made of the iron-based material and provided with the oxide coating film on the surface thereof).

### Background Art

Slide sections are constituted by a plurality of slide members combined with each other via slide surfaces. Typically, in the case of slide sliding or rotation sliding, at least one slide member included in the slide section is provided with an abrasion resistance coating film on a slide surface thereof. As a typical example of this abrasion resistance coating film, for example, there is known an oxide coating film made of an iron oxide based material, comprising a phosphate coating film, a gas nitride coating film, or a triiron tetraoxide (Fe₃O₄) single layer. The oxide coating film comprising the triiron tetraoxide (Fe₃O₄) single layer is typically formed by black oxide coating (finish) (fellmight treatment).

The above-described abrasion resistance coating film is provided to coat the surface of the base material constituting the slide member. The base material is typically made of metal. At least a portion of the surface of this base material is a slide surface. During sliding of the slide section, lubricating oil is fed to the slide surface. The lubricating oil can prevent or suppress abrasion of the slide member sliding and suppress an increase in a slide resistance of the slide member generated due to contact between metals (base materials). This makes it possible to secure smooth sliding of the slide section over a long period of time.

For example, Patent Literature 1 discloses a refrigerant compressor including a slide section which uses the phosphate coating film as the abrasion resistance coating film. In this refrigerant compressor, for example, the phosphate coating film is formed on the slide surface to prevent an abrasion of the slide section such as a piston or a crankshaft. By forming the phosphate coating film, unevenness of the processed surface of machining processing finish can be removed, and initial conformability between the slide members can be improved.

Fig. 28 is a cross-sectional view of a conventional refrigerant compressor disclosed in Patent Literature 1. As shown in Fig. 28, a sealed container 1 is an outer casing of the refrigerant compressor. Lubricating oil 28 is reserved in the bottom portion of the sealed container 1. The sealed container 1 accommodates therein an electric component 5 including a stator 3 and a rotor 4, and a reciprocating compression component 6 driven by the electric component 5.

The compression component 8 includes a crankshaft 7, a cylinder block 11, a piston 15, and the like. The compression component 6 will be described below.

The crankshaft 7 includes at least a main shaft section 8 to which the rotor 4 is pressingly secured, and an eccentric shaft 9 which is provided eccentrically with the main shaft section 8. The crankshaft 7 is provided with an oil feeding pump 10.

The cylinder block 11 forms a compression chamber 13 including a bore 12 with a substantially cylindrical shape and includes a bearing section 14 supporting the main shaft section 8.

The piston 15 is loosely fitted into the bore 12 with a clearance. The piston 15 is coupled to the eccentric shaft 9 via a connecting rod 17 as a coupling means by use of a piston pin 16. The end surface of the bore 12 is closed by a valve plate 18.

The head 19 is secured to a valve plate 18 on a side opposite to the bore 12. The head 19 constitute a high-pressure chamber. A suction tube 20 is secured to the sealed container 1 and connected to a low-pressure side (not shown) of a refrigeration cycle. The suction tube 20 leads a refrigerant gas (not shown) to the inside of the sealed container 1. A suction muffler 21 is retained between the valve plate 18 and the head 19.

The main shaft section 8 of the crankshaft 7 and the bearing section 14, the piston 15 and the bore 12, the piston pin 16 and the connecting rod 17, the eccentric shaft 9 of the crankshaft 7 and the connecting rod 17 constitute slide sections.

In a combination of the iron-based materials among the slide members constituting the slide sections, an insoluble phosphate coating film comprising a porous crystalline body is provided on the slide surface of one of the iron-based materials as described above.

Next, the operation of the sealed compressor having the above-described configuration will be described. Electric power is supplied from a power supply utility (not shown) to the electric component 5, to rotate the rotor 4 of the electric component 5. The rotor 4 rotates the crankshaft 7. By an eccentric motion of the eccentric shaft 9, the piston 15 is driven via the connecting rod 17 as a coupling means and the piston pin 16. The piston 15 reciprocates inside the bore 12. By the reciprocating operation of the piston 15, a refrigerant gas is led to the inside of the sealed container 1 through the suction tube 20, suctioned from the suction muffler 21 into the compression chamber 13, and compressed inside the compression chamber 13 in succession.

According to the rotation of the crankshaft 7, the lubricating oil 2 is fed to the slide sections by the oil feeding pump 10, and lubricates each of the slide sections. In addition, the lubricating oil 2 serves to seal a gap formed between the piston 15 and the bore 12.

The main shaft section 8 of the crankshaft 7 and the bearing section 14 perform a rotation. While the refrigerant compressor is stopped, a rotational speed is 0m/s. During start-up of the refrigerant compressor, the rotation starts in a state in which the metals are in contact with each other, and a great frictional resistance force is generated. In this refrigerant compressor, the phosphate coating film is provided on the main shaft section 8 of the crankshaft 7, and has an initial conformability. In this structure, the phosphate coating film can prevent an abnormal abrasion due to the contact between the metals during start-up of the refrigerant compressor.

Patent Literature 2 discloses a slide member which is used in a slide unit included in a refrigerant compressor for compressing a refrigerant and provided inside a sealed container which reserves lubricating oil therein, the slide member comprising a base material comprising an iron based material, and an oxide coating film formed on a surface of the base material, the oxide coating film having a three-layer structure including a first layer comprising Fe₂O₃, a second layer comprising Fe₃O₄, and a third layer comprising FeO in this order from an outermost surface.

Patent Literature 3 discloses that in a piston structure made of an aluminum alloy, iron-based alloy plates are provided on a front surface of a top portion of a piston body or on a surface of a concave combustion chamber of the top portion of the piston body, the iron-based alloy plates being chemically bonded to each other by a ceramic member interposed between the iron-based alloy plates, the ceramic member being formed by adding at least one of metal oxides that are Al₂O₃, SiO₂, ZrO₂, and Cr₂O₃ to a thick aqueous solution of soluble chromium compound.

Patent Literature 4 discloses a steel wire rod in which scale (oxide coating film) is hard to detach during cooling, storage or transportation, and scale detachment properties are excellent in mechanical descaling.

### Citation List

### Patent Literature

Patent Literature 1: Japanese-Laid Open Patent Application Publication No. Hei. 7-238885
Patent Literature 2: EP Publication No. 2 818 716 A1
Patent Literature 3: JP Publication No. S60-4741 U
Patent Literature 4: EP Publication No. 2 113 580 A1

### Summary of Invention

### Technical Problem

In recent years, to provide higher efficiency of the refrigerant compressor, the lubricating oil 2 with a lower viscosity is used, or a slide length of the slide sections (a distance for which the slide sections slide) is designed to be shorter. For this reason, the conventional phosphate coating film is likely to be abraded or worn out at earlier time and it may be difficult to maintain the conformability between the slide surfaces. As a result, the abrasion resistance of the phosphate coating film may be degraded.

In the refrigerant compressor, while the crankshaft 7 is rotating once, a load applied to the main shaft section 8 of the crankshaft 7 is significantly changed. With this change in the load, the refrigerant gas dissolved into the lubricating oil 2 is evaporated into bubbles, in a region between the crankshaft 7 and the bearing section 14. The bubbles cause an oil film to run out, and the contact between the metals occurs more frequently.

As a result, the phosphate coating film provided on the main shaft section 8 of the crankshaft 7 is likely to be abraded at earlier time and a friction coefficient is likely to be increased. With the increase in the friction coefficient, the slide section generates more heat, and thereby abnormal abrasion such as adhesion may occur. A similar phenomenon may occur in the region between the piston 15 and the bore 12. Therefore, the piston 15 and the bore 12 have the same problem as that occurring in the crankshaft 7.

As described above, in the device including the slide sections, like the above-described refrigerant compressor, the slide sections tend to be used in a harsh environment, for the purpose of higher efficiency. For this reason, as described above, the lubricating oil with a lower viscosity is used, or a slide length of the slide section (a distance for which the slide section slides) is designed to be shorter. Under the circumstances, the abrasion resistance coating film is likely to be abraded or worn out at earlier time and it may be difficult to maintain the conformability between the slide surfaces of the slide members. In other words, under an environment in which higher efficiency of the device is required, the abrasion resistance of the abrasion resistance coating film provided on the slide member tends to be reduced.

The present invention has been developed to solve the above described problem associated with the prior art, and an object of the present invention is to provide an oxide coating film which can have a high abrasion resistance even when used in a slide section under a harsh use environment, a slide member provided with this oxide coating film, and a device including this slide member.

### Solution to Problem

To solve the above-described problem, the present invention provides an oxide coating film, a slide member and a device as defined in the appended claims.

In this structure, adhesivity (adhesion characteristic) of the oxide coating film to the base material can be improved, and the abrasion resistance of the oxide coating film can be improved. Therefore, even in a case where the oxide coating film is used in the slide section under a harsh use environment (e.g., environment in which the viscosity of lubricating oil is low and the slide length of the slide section (a distance for which the slide section slides) is designed to be shorter), the oxide coating film can have a high abrasion resistance over a long period of time. As a result, reliability of the slide section can be improved.

A slide member of the present invention comprises the oxide coating film having the above-described configuration, which is provided on a slide surface of a base material.

Even in a case where the slide member is used as the slide section under a harsh use environment (e.g., environment in which the viscosity of lubricating oil is low and the slide length of the slide section (a distance for which the slide section slides) is designed to be shorter), the slide member can have a high abrasion resistance over a long period of time.

A device according to the present invention comprises the slide member having the above-described configuration, namely, the slide member provided with at least the oxide coating film having the above-described configuration.

In this structure, since the abrasion resistance of the slide member is high, reliability of the slide section can be improved. Therefore, the durability and reliability of the device can be improved.

The above and further objects, features and advantages of the present invention will more fully be apparent from the following detailed description of preferred embodiment with reference to accompanying drawings.

### Advantageous Effects of Invention

The present invention has advantages in that with the above described configuration, it becomes possible to provide an oxide coating film which can have a high abrasion resistance even when used in a slide section under a harsh use environment, a slide member provided with this oxide coating film, and a device including this slide member.

### Brief Description of Drawings

Fig. 1 is a schematic cross-sectional view of a refrigerant compressor according to Embodiment 1 of the present disclosure.
Fig. 2A is a SEM (scanning electron microscope) image showing an example of a result of SEM observation performed for an oxide coating film provided on a slide member of the refrigerant compressor according to Embodiment 1. Figs. 2B to 2D are element maps showing examples of results of EDS analysis performed for the oxide coating film of Fig. 2A.
Fig. 3 is a graph showing an example of a result of X-ray diffraction analysis performed for the oxide coating film according to Embodiment 1.
Fig. 4 is a TEM (transmission electron microscope) image showing an example of a result of TEM observation performed for the oxide coating film provided on the slide member of the refrigerant compressor according to Embodiment 1.
Fig. 5 is a view showing the abrasion amounts of discs in conjunction with the oxide coating film according to Embodiment 1, after a ring on disc abrasion test is conducted.
Fig. 6 is a view showing the abrasion amounts of rings in conjunction with the oxide coating film according to Embodiment 1, after the ring on disc abrasion test is conducted.
Fig. 7 is a schematic cross-sectional view of a refrigerant compressor according to Embodiment 2 of the present disclosure.
Fig. 8A is a TEM (transmission electron microscope) image showing an example of a result of TEM observation performed for an oxide coating film provided on a slide member of the refrigerant compressor according to Embodiment 2. Figs. 8B to 8D are element maps showing an example of a result of EDS analysis performed for the oxide coating film of Fig. 8A.
Figs. 9A to 9C are EELS maps showing an example of a result of EELS analysis performed for the oxide coating film according to Embodiment 2. Figs. 9D to 9F are views of analysis corresponding to the EELS maps of Figs. 9A to 9C.
Fig. 10A is an EELS map showing an example of a result of the EELS analysis performed for the outermost portion of the oxide coating film according to Embodiment 2. Fig. 10B is a view showing analysis corresponding to the EELS map of Fig. 10A.
Figs. 11A to 11E are views of analysis showing an example of a result of EELS analysis performed for the intermediate portion of the oxide coating film according to Embodiment 2.
Fig. 12 is a view of analysis showing an example of a result of the EELS analysis performed for the inner portion of the oxide coating film according to Embodiment 2.
Fig. 13 is a view showing the abrasion amounts of the discs in conjunction with the oxide coating film according to Embodiment 2, after the ring on disc abrasion test is conducted.
Fig. 14 is a view showing the abrasion amounts of the rings in conjunction with the oxide coating film according to Embodiment 2, after the ring on disc abrasion test is conducted.
Fig. 15 is a TEM (transmission electron microscope) image showing an example of a result of TEM observation performed for the oxide coating film according to Embodiment 2, after a reliability test is conducted.
Fig. 16 is a schematic cross-sectional view of a refrigerant compressor according to Embodiment 3 of the present disclosure.
Fig. 17A is a TEM (transmission electron microscope) image showing an example of a result of of TEM observation performed for an oxide coating film according to Embodiment 3 of the present disclosure. Fig. 17B is an element map showing an example of a result of EDS analysis performed for the oxide coating film of Fig. 17A. Fig. 17C is a view of analysis showing an example of a result of the EELS analysis performed for the oxide coating film of Fig. 17A or 17B.
Fig. 18 is a schematic cross-sectional view of a refrigerant compressor according to Embodiment 4 of the present disclosure.
Figs. 19A to 19C are TEM (transmission electron microscope) images showing an example of a result of TEM observation performed for an oxide coating film provided on a slide section of the refrigerant compressor according to Embodiment 4.
Figs. 20A and 20B are SEM (scanning electron microscope) images showing an example of a result of SEM observation performed for the oxide coating film according to Embodiment 4.
Fig. 21 is a SIM (scanning ion microscope) image showing an example of a result of SIM observation performed for the oxide coating film according to Embodiment 4.
Fig. 22 is a view showing the abrasion amounts of the discs in conjunction with the oxide coating film according to Embodiment 4, after the ring on disc abrasion test is conducted.
Fig. 23 is a view showing the abrasion amounts of the rings in conjunction with the oxide coating film according to Embodiment 4, after the ring on disc abrasion test is conducted.
Fig. 24 is a TEM (transmission electron microscope) image showing an example of a result of TEM observation performed for a slide member including the oxide coating film according to Embodiment 4, after a reliability test is conducted.
Fig. 25 is a schematic cross-sectional view of a refrigerant compressor according to Embodiment 5 of the present disclosure.
Figs. 26A and 26B are SIM (scanning ion microscope) images showing an example of a result of the SIM observation performed for the oxide coating film according to Embodiment 5.
Fig. 27 is a schematic view of a refrigeration device according to Embodiment 6 of the present disclosure.

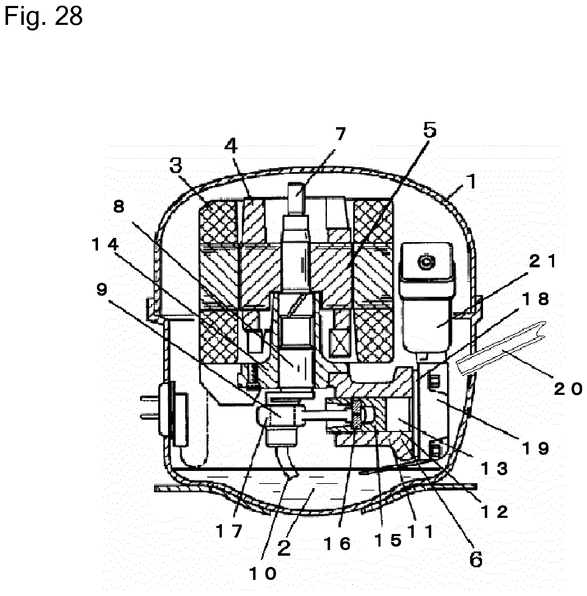

Fig. 28 is a schematic cross-sectional view of a conventional refrigerant compressor.

### Description of Embodiments

The present invention relates to an oxide coating film (herein also referred to as first oxide coating film), a slide member comprising the oxide coating film and a device incorporating the slide member as defined in the claims. Additional aspects are provided by the present disclosure.

A first oxide coating film according to the present invention is provided on a surface of an iron-based material which is a base material of a slide member, is based on iron and comprises a portion containing diiron trioxide (Fe₂O₃), in a region which is closer to an outermost surface of the oxide coating film, and a silicon containing portion containing silicon (Si) which is more in quantity than that of the base material, the silicon containing portion being located in a region which is closer to the base material.

In this structure, adhesivity (adhesion characteristic) of the oxide coating film to the base material can be improved, and the abrasion resistance of the oxide coating film can be improved. Therefore, even in a case where the oxide coating film is used in the slide section under a harsh use environment (e.g., environment in which the viscosity of lubricating oil is low and the slide length of the slide section (a distance for which the slide section slides) is designed to be shorter), the oxide coating film can have a high abrasion resistance over a long period of time. As a result, reliability of the slide section can be improved.

The first oxide coating film having the above-described configuration, may comprise a spot-shaped silicon containing portion, which is located closer to the outermost surface of the oxide coating film than the silicon containing portion, the spot-shaped silicon containing portion being a portion containing silicon (Si) which is more in quantity than silicon (Si) contained in a region surrounding the spot-shaped silicon containing portion.

In this structure, adhesivity (adhesive characteristic) of the oxide coating film to the base material can be improved, and the abrasion resistance of the oxide coating film can be improved. As a result, reliability of the slide section can be improved.

The first oxide coating film having the above-described configuration, may comprise at least a portion containing diiron trioxide (Fe₂O₃) which is more in quantity than other substances, and a portion containing triiron tetraoxide (Fe₃O₄) which is more in quantity than other substances, the portion containing diiron trioxide (Fe₂O₃) and the portion containing triiron tetraoxide (Fe₃O₄) being arranged in this order from the outermost surface of the oxide coating film.

In this structure, even in a case where the oxide coating film is used in the slide section under a harsh use environment, the portion of the outermost surface can reduce attacking characteristic with respect to the other member (sliding between the slide member provided with the oxide coating film and the other member occurs), and facilitate conformability of the slide surface. This allows the oxide coating film to have a higher abrasion resistance over a long period of time.

The first oxide coating film having the above-described configuration, may include at least a portion containing diiron trioxide (Fe₂O₃) which is more in quantity than other substances, a portion containing triiron tetraoxide (Fe₃O₄) which is more in quantity than other substances, and a portion containing iron oxide (FeO) which is more in quantity than other substances, the portion containing diiron trioxide (Fe₂O₃), the portion containing triiron tetraoxide (Fe₃O₄), and the portion containing iron oxide (FeO) being arranged in this order from the outermost surface of the oxide coating film.

In this structure, the portion of the outermost surface can reduce the attacking characteristic with respect to the other member (sliding between the slide member provided with the oxide coating film and the other member occurs), and facilitate the conformability of the slide surface. In addition, the portion which is closer to the base material can improve a bearing force with respect to a load during sliding. Since peeling of the oxide coating film can be suppressed and the adhesivity of the oxide coating film can be improved, reliability of the slide section can be improved.

A second oxide coating film according to the present disclosure is provided on a surface of an iron-based material which is a base material of a slide member, and comprises a composition A portion containing diiron trioxide (Fe₂O₃) which is more in quantity than other substances, a composition B portion containing triiron tetraoxide (Fe₃O₄) which is more in quantity than other substances and containing a silicon (Si) compound, and a composition C portion containing triiron tetraoxide (Fe₃O₄) which is more in quantity than other substances and containing silicon (Si) which is more in quantity than that of the composition B portion.

In this structure, even in a case where the oxide coating film is used in the slide section under a harsh use environment, peeling of the oxide coating film can be effectively suppressed and a high abrasion resistance of the oxide coating film can be achieved. As a result, reliability of the slide section can be improved.

The second oxide coating film having the above-described configuration may comprise at least an outermost portion which is the composition A portion, an intermediate portion which is the composition B portion, and an inner portion which is the composition C portion, the outer portion, the intermediate portion, and the inner portion being arranged in this order from the outermost surface.

In this structure, the portion of the outermost surface is relatively hard and flexible in crystal structure. Therefore, the attacking characteristic of the oxide coating film with respect to the other member (sliding between the slide member provided with the oxide coating film and the other member occurs) can be reduced, and initial conformability of the oxide coating film can be improved. As a result, the reliability of the slide section can be improved.

In the second oxide coating film having the above-described configuration, the composition A portion may contain the silicon (Si) compound.

In this structure, since the portion of the outermost surface contains a hard portion, the attacking characteristic of the oxide coating film with respect to the other member (sliding between the slide member provided with the oxide coating film and the other member occurs) can be reduced, and initial conformability of the oxide coating film can be improved. In addition, the oxide coating film which is stronger can be provided. As a result, the reliability of the slide section can be improved.

In the second oxide coating film having the above-described configuration, the silicon (Si) compound may be at least one of silicon dioxide (SiO₂) and fayalite (Fe₂SiO₄).

In this structure, since the oxide coating film includes a harder portion, the abrasion resistance can be further improved, and the adhesivity to the base material can be further improved. Therefore, the oxide coating film with a higher bearing force can be realized. As a result, the reliability of the slide section can be improved.

A third oxide coating film according to the disclosure, is provided on a surface of an iron-based material which is a base material of a slide member, and comprises a first portion containing at least fine crystals, a second portion containing columnar grains, and/or a third portion containing layered grains.

In this structure, the abrasion resistance of the oxide coating film can be improved, the attacking characteristic of the oxide coating film with respect to the other member (sliding between the slide member provided with the oxide coating film and the other member occurs) can be suppressed, and the adhesivity of the oxide coating film to the base material can be improved. Even in a case where the oxide coating film is used in the slide section under a harsh use environment, peeling of the oxide coating film can be effectively suppressed and a high abrasion resistance of the oxide coating film can be achieved. As a result, reliability of the slide section can be improved.

The third oxide coating film having the above-described configuration may comprise at least the first portion located in the outermost surface of the oxide coating film, the second portion located under the first portion, and the third portion located under the second portion.

In this structure, since the abrasion resistance of the oxide coating film can be improved, and the attacking characteristic of the oxide coating film with respect to the other member (sliding between the slide member provided with the oxide coating film and the other member occurs) can be suppressed, long-time reliability of the oxide coating film can be secured. As a result, the reliability of the slide section can be improved.

In the third oxide coating film having the above-described configuration, the first portion may have a crystal grain size (grain diameter) in a range of 0.001 to 1 µm, and the crystal grain size of the first portion may be smaller than that of the second portion.

In this structure, the first portion has a structure with a high oil retaining capability. Even in a state in which the slide section is under a condition in which oil is insufficient (oil is not sufficiently fed to the slide section), formation of an oil film on the slide surface can be facilitated. Therefore, the abrasion resistance of the oxide coating film can be further improved, and as a result, the reliability of the slide section can be improved.

In the third oxide coating film having the above-described configuration, the first portion may include at least a first a portion and a first b portion which are different from each other in crystal density.

In this structure, the first portion can have a high oil retaining capability. Even in a state in which the slide section is under a condition in which oil is insufficient, formation of the oil film on the slide surface can be facilitated. Therefore, the abrasion resistance of the oxide coating film can be further improved, and as a result, the reliability of the slide section can be improved.

In the third oxide coating film having the above-described configuration, the first a portion may be located closer to the outermost surface of the oxide coating film, the first b portion may be located under the first a portion, and the crystal density the first a portion may be lower than that of the first b portion.

In this structure, the first portion can have a higher oil retaining capability because of the first a portion, and the first b portion can well support the first a portion. Since the abrasion resistance of the oxide coating film can be further improved, the reliability of the slide section can be improved.

In the third oxide coating film having the above-described configuration, the first a portion may contain needle-shaped grains which are vertically elongated and have an aspect ratio in a range of 1 to 1000.

In this structure, it becomes possible to improve the conformability of the slide surface of the slide member with respect to the slide surface of the other member (sliding between the slide member provided with the oxide coating film and the other member occurs). As a result, the reliability of the slide section can be improved.

In the third oxide coating film having the above-described configuration, the second portion may contain crystal grains which are vertically elongated and have an aspect ratio in a range of 1 to 20.

In this structure, the second portion includes grains in which the vertically elongated crystals which are substantially perpendicular to a sliding direction are densely arranged. Since the mechanical characteristic of the second portion can be improved, the durability of the oxide coating film can be further improved. As a result, the reliability of the slide section can be improved.

In the third oxide coating film having the above-described configuration, the third portion may contain crystal grains which are horizontally elongated and have an aspect ratio in a range of 0.01 to 1.

In this structure, the third portion includes the grains in which the horizontally elongated crystals which are substantially parallel to the sliding direction are densely arranged. Since the third portion can have a sliding characteristic, peeling resistance and adhesivity of the oxide coating film can be improved. Since the durability of the oxide coating film can be further improved, the reliability of the slide section can be improved.

The third oxide coating film having the above-described configuration may contain iron, oxygen and silicon.

In this structure, since the mechanical strength, the peeling resistance, and the adhesivity of the oxide coating film can be improved, the durability of the oxide coating film can be improved. Therefore, the reliability of the slide section can be improved.

The first oxide coating film, the second oxide coating film, or the third oxide coating film, having the above-described configurations, respectively, may have a thickness in a range of 1 to 5µm.

In this structure, the abrasion resistance of the oxide coating film can be improved, the reliability can be improved over a long period of time, and dimension accuracy is high. As a result, high productivity can be obtained.

A slide member according to the present disclosure includes the first oxide coating film having the above-described configuration, the second oxide coating film having the above-described configuration, or the third coating film having the above-described configuration, which is provided on the slide surface of the base material.

In this structure, it becomes possible to realize the slide member which can have a high abrasion resistance over a long period of time even in a case where the slide member is used in the slide section under a harsh use environment (e.g., environment in which the viscosity of lubricating oil is low and the slide length of the slide section (a distance for which the slide section slides) is designed to be shorter).

In the slide member having the above-described configuration, the iron-based material which is the base material may be cast iron.

In this structure, since cast iron is inexpensive and is high in productivity, cost of the slide member can be reduced. In addition, since the adhesivity of the oxide coating film to the base material can be improved, it becomes possible to realize the slide member including the oxide coating film with a high bearing force. As a result, the reliability of the slide member and the slide section can be improved.

In the slide member having the above-described configuration, the iron-based material which is the base material may contain 0.5 to 10% silicon.

In this structure, since the adhesivity of the oxide coating film to the base material can be further improved, it becomes possible to realize the slide member including the oxide coating film having a higher bearing force. As a result, the reliability of the slide member and the slide section can be improved.

A device according to the present disclosure comprises the slide member having the above-described configuration, namely, the slide member including the first oxide coating film having the above-described configuration, the second oxide coating film having the above-described configuration, or the third oxide coating film having the above-described configuration.

In this configuration, since the abrasion resistance of the slide member can be increased, the reliability of the slide section can be improved. As a result, durability and reliability of the device can be improved.

Now, typical embodiments of the present disclosure will be described with reference to the drawings. Throughout the drawings, the same or corresponding components (members) are designated by the same reference symbols, and will not be described in repetition.

### (Embodiment 1)

In Embodiment 1, an oxide coating film according to the present disclosure, a slide member including this oxide coating film, and a device including this slide member will be described, and a case where this oxide coating film is provided on a slide section of a refrigerant compressor will be exemplarily described. For easier explanation of the description, the device including the slide member provided with the oxide coating film according to the present disclosure will be referred to as "device incorporating the oxide coating film." Therefore, the refrigerant compressor described in Embodiment 1 (and Embodiments 2 to 6, and the like) is the device incorporating the oxide coating film.

### [Configuration of Refrigerant Compressor]

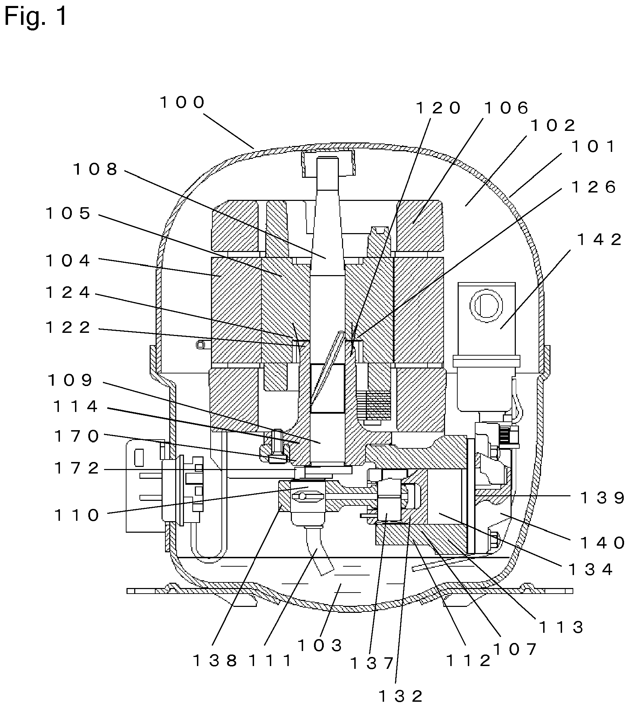

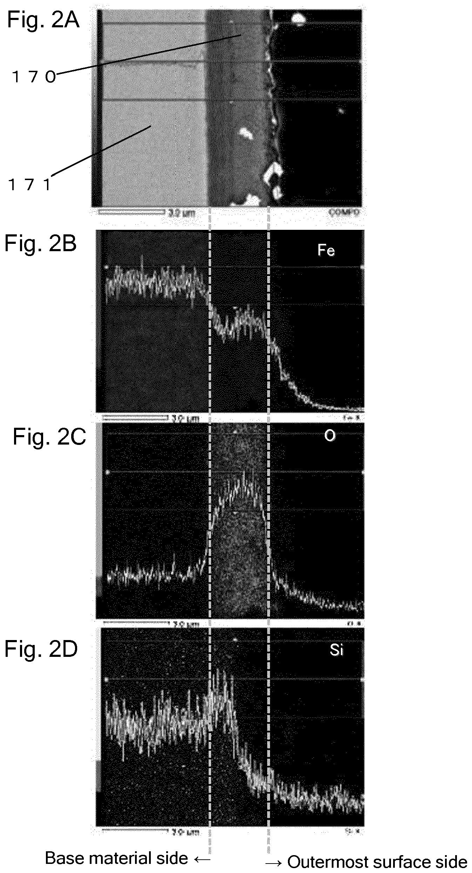

Firstly, a typical example of the refrigerant compressor according to Embodiment 1 will be specifically described with reference to Figs. 1 and 2A. Fig. 1 is a cross-sectional view of a refrigerant compressor 100 according to Embodiment 1. Fig. 2A is a SEM (scanning electron microscope) image showing an example of a result of SEM observation performed for a slide section of the refrigerant compressor 100.

As shown in Fig. 1, in the refrigerant compressor 100, a refrigerant gas 102 comprising R134a is filled inside a sealed container 101, and ester oil as lubricating oil 103 is reserved in the bottom portion of the sealed container 101. Inside the sealed container 101, an electric component 106 including a stator 104 and a rotor 105, and a reciprocating compression component 107 configured to be driven by the electric component 106 are accommodated.

The compression component 107 includes a crankshaft 108, a cylinder block 112, a piston 132, and the like. The compression component 107 will be described below.

The crankshaft 108 includes at least a main shaft section 109 to which the rotor 105 is pressingly secured, and an eccentric shaft 110 which is provided eccentrically with the main shaft section 109. An oil feeding pump 111 is provided at the lower end of the crankshaft 108 and is in communication with the lubricating oil 103.

The crankshaft 108 comprises base material 171 including gray cast iron (FC cast iron) containing about 2% silicon (Si), and an oxide coating film 170 provided on a surface thereof. Fig. 2A shows a typical example of the oxide coating film 170 according to Embodiment 1. Fig. 2A shows an example of a result of SEM (scanning electron microscope) observation performed for the cross-section of the oxide coating film 170 and shows the image of whole of the oxide coating film 170 in a thickness direction.

The oxide coating film 170 according to Embodiment 1 has a thickness of about 3µm. The oxide coating film 170 of Fig. 2A is formed on a disc (base material 171) used in a ring on disc abrasion test in Example 1-1 which will be described later.

The cylinder block 112 comprises cast iron. The cylinder block 112 is formed with a bore 113 with a substantially cylindrical shape, and includes a bearing section 114 supporting the main shaft section 109.

The rotor 105 is provided with a flange surface 120. The upper end surface of the bearing section 114 is a thrust surface 122. A thrust washer 124 is disposed between the flange surface 120 and the thrust surface 122 of the bearing section 114. The flange surface 120, the thrust surface 122, and the thrust washer 124 constitute a thrust bearing 126.

The piston 132 is loosely fitted into the bore 113 with a clearance. The piston 132 comprises an iron-based material. The piston 132 forms a compression chamber 134 together with the bore 113. The piston 132 is coupled to the eccentric shaft 110 via a connecting rod 138 as a coupling means by use of a piston pin 137. The end surface of the bore 113 is closed by a valve plate 139.

A head 140 constitutes a high-pressure chamber. The head 140 is secured to the valve plate 139 on a side opposite to the bore 113. A suction tube (not shown) is secured to the sealed container 101 and connected to a low-pressure side (not shown) of a refrigeration cycle. The suction tube leads the refrigerant gas 102 to the inside of the sealed container 101. A suction muffler 142 is retained between the valve plate 139 and the head 140.

The operation of the refrigerant compressor 100 configured as described above will be described below.

Electric power supplied from a power supply utility (not shown) is supplied to the electric component 106, and rotates the rotor 105 of the electric component 106. The rotor 105 rotates the crankshaft 108. An eccentric motion of the eccentric shaft 110 is transmitted to the piston 132 via the connecting rod 138 as the coupling means and the piston pin 137, and drives the piston 132. The piston 132 reciprocates inside the bore 113. The refrigerant gas 102 led to the inside of the sealed container 101 through the suction tube (not shown) is suctioned from the suction muffler 142, and is compressed inside the compression chamber 134.

According to the rotation of the crankshaft 108, the lubricating oil 103 is fed to slide sections by the oil feeding pump 111. The lubricating oil 103 lubricates the slide sections and seals the clearance between the piston 132 and the bore 113. The slide sections are defined as sections (portions) which slide in a state in which a plurality of slide members are in contact with each other in their slide surfaces.

In recent years, to provide higher efficiency of the refrigerant compressor 100, for example, (1) lubricating oil with a lower viscosity is used as the lubricating oil 103 as described above, or (2) the slide length of the slide members (a distance for which the slide members slide) constituting the slide sections is designed to be shorter. For this reason, slide conditions are getting more harsh. Specifically, there is a tendency that the oil film formed between the slide sections is thinner, or difficult to form.

In addition to the above, in the refrigerant compressor 100, the eccentric shaft 110 of the crankshaft 108 is provided eccentrically with the bearing section 114 of the cylinder block 112, and the main shaft section 109 of the crankshaft 108. In this layout, a fluctuating (variable) load which causes a load fluctuation (change) is applied to regions between the main shaft section 109 of the crankshaft 108, the eccentric shaft 110 and the connecting rod 138, due to a gas pressure of the compressed refrigerant gas 102. With the load fluctuation (change), the refrigerant gas 102 dissolved into the lubricating oil 103 is evaporated into bubbles in repetition, in, for example, the region between the main shaft section 109 and the bearing section 114. In this way, the bubbles are generated in the lubricating oil 103.

For the above-described reasons, for example, in the slide sections of the main shaft section 109 of the crankshaft 108 and the bearing section 114, the oil film has run out, and the metals of the slide surfaces contact each other more frequently.

However, the slide section of the refrigerant compressor 100, for example, the slide section of the crankshaft 108 as an example of Embodiment 1 comprises the oxide coating film 170 having the above-described configuration. For this reason, even if the oil film has run out more frequently, the abrasion of the slide surface caused by this can be suppressed over a long period of time.

### [Configuration of Oxide Coating Film]

Next, the oxide coating film 170 which can suppress the abrasion of the slide section will be described in more detail with reference to Figs. 2B to 2D as well as Fig. 2A. The oxide coating film 170 according to Embodiment 1 is the above-described first oxide coating film.

Figs. 2B to 2D are element maps showing an example of a result of EDS (energy dispersive X-ray spectrometry) analysis performed for the cross-section of the oxide coating film 170 of Fig. 2A. Fig. 2B shows the result of element mapping of iron (Fe) of the oxide coating film 170. Fig. 2C shows the result of element mapping of oxygen (O) of the oxide coating film 170. Fig. 2D shows the result of element mapping of silicon (Si) of the oxide coating film 170.

In Embodiment 1, the crankshaft 108 comprises the base material 171 made of spherical graphite cast iron (FCD cast iron). The oxide coating film 170 is formed on the surface of the base material 171. Specifically, for example, the slide surface of the base material 171 is subjected to polishing finish, and then the oxide coating film 170 is formed by oxidation by use of an oxidation gas.

As described above, as shown in Fig. 2A, in Embodiment 1, the oxide coating film 170 is formed on the base material 171 (on the right side of the base material 171 of Fig. 2A) made of spherical graphite cast iron (FCD cast iron).

Next, the concentration of the elements contained in the oxide coating film 170 (namely, element composition of portions of the oxide coating film 170) will be described with reference to Figs. 2B to 2D. Fig. 2B shows the result of element mapping of iron (Fe) of the oxide coating film 170. Fig. 2C shows the result of element mapping of oxygen (O) of the oxide coating film 170. Fig. 2D shows the result of element mapping of silicon (Si) of the oxide coating film 170.

Figs. 2B to 2D show that more elements are present as dots (minute points) are more with respect to a black background. Lines shown in Figs 2B to 2D indicate intensity ratios of the elements. In the examples of Figs. 2B to 2D, the intensity ratios of the elements, namely, the ratios of the elements are higher in an upward direction.

From the results of the element analysis, it can be found out that the concentration ratios of the elements which are iron (Fe), oxygen(O), and silicon (Si) contained in the oxide coating film 170 have a trend as described below.

The spherical graphite cast iron (FCD cast iron) contains silicon (Si) in addition to (Fe). Therefore, in Embodiment 1, the base material 171 comprises substantially two kinds of elements which are iron (Fe) and silicon (Si). The intensity ratios of the elements of the oxide coating film 170 with respect to the base material 171 as the reference will be described.

As shown in Fig. 2B, the intensity ratio of iron (Fe) of the oxide coating film 170 is lower than that of the base material 171, and slightly increases in the inside of the oxide coating film 170. As shown in Fig. 2C, the intensity ratio of oxygen (O) is notably high in the inner side of the oxide coating film 170.

As shown in Fig. 2D, the intensity ratio of silicon (Si) is higher in a portion of the oxide coating film 170 which is closer to the base material 171 than in the base material 171. The intensity ratio of silicon (Si) is significantly reduced in the inner side of the oxide coating film 170 and is almost undetectable in a portion closer to the outermost surface.

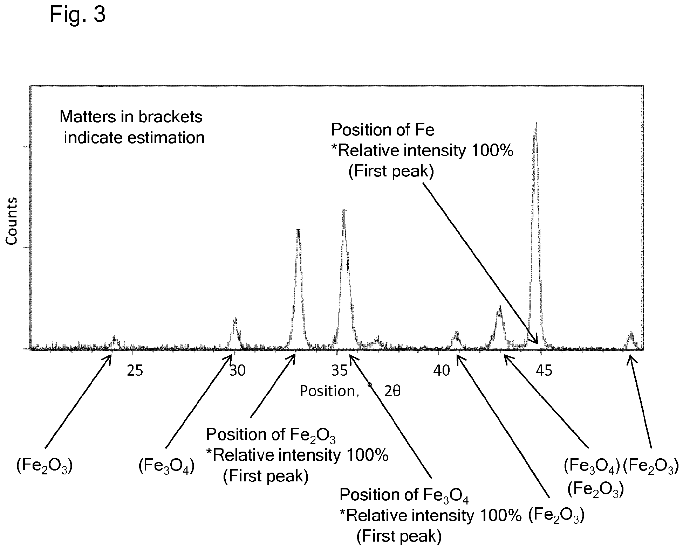

Fig. 3 shows an example of a result of X-ray diffraction analysis performed for the cross-section of the oxide coating film 170 of Figs. 2A to 2D.

As shown in Fig. 3, in the oxide coating film 170, a peak attributed to the crystals of diiron trioxide (Fe₂O₃) or triiron tetraoxide (Fe₃O₄) is clearly detected. However, the position of a peak attributed to crystals of an oxide product containing Si and Fe, for example, fayalite (Fe₂SiO₄) overlaps with that of diiron trioxide (Fe₂O₃) or triiron tetraoxide (Fe₃O₄), and is difficult to clearly determine. Further, a peak attributed to FeO is very weak and is difficult to clearly determine.

In Embodiment 1, as described above, the oxide coating film 170 is formed on the surface of the base material 171 by oxidation reaction S oxidation treatment by use of the oxidation gas. In an initial (earlier) stage of the oxidation reaction, for example, the oxide of Fe and Si such as fayalite (Fe₂SiO₄) is formed in a region that is in the vicinity of an interface closer to the base material 171. It is considered that this oxide performs an iron diffusion barrier function, and iron-deficiency state is formed on the surface of the base material 171 as the oxidation reaction progresses. It is estimated that inward diffusion of oxygen is facilitated with the progress of the oxidation reaction.

As a result of this, oxidation of iron oxide (FeO) formed in the initial stage of the oxidation reaction is accelerated. In this way, a crystal structure which contributes to the abrasion resistance, such as diiron trioxide (Fe₂O₃) and/or triiron tetraoxide (Fe₃O₄), is formed in the oxide coating film 170.

It is estimated that by the accelerated oxidation of iron oxide (FeO), the peak attributed to the crystals of FeO was very weak (namely, FeO was not substantially detected) in the X-ray diffraction analysis performed for the oxide coating film 170 of Fig. 3. This estimation is supported by the result of the element mapping of silicon (Si) of Fig. 2D. Or, in another point of view, iron oxide (FeO) of the oxide coating film 170 may have an amorphous having no crystal structure.

The oxide coating film 170 according to Embodiment 1, may include at least a portion (this portion will be referred to as "III portion" based on the name of diiron trioxide (Fe₂O₃), namely, "iron oxide (III)") containing diiron trioxide (Fe₂O₃) which is more in quantity than other substances, and a portion (this portion will be referred to as "II, III portion" based on the name of triiron tetraoxide (Fe₃O₄), namely, "iron oxide (III), iron (II)") containing triiron tetraoxide (Fe₃O₄) which is more in quantity than other substances, the III portion and the II, III portion being disposed in this order from the outermost surface (slide surface) (coating film configuration 1).

Or, the oxide coating film 170 according to Embodiment 1, may include at least the III portion containing diiron trioxide (Fe₂O₃) which is more in quantity than other substances, the II, III portion containing triiron tetraoxide (Fe₃O₄) which is more in quantity than other substances, and a portion (this portion will be referred to as "II portion" based on the name of iron oxide (FeO), namely, iron oxide (II)") containing iron oxide (FeO) which is more in quantity than other substances, the III portion the II, III portion, and the II portion being disposed in this order from the outermost surface (slide surface) (coating film configuration 2).

In the coating film configuration 1 and the coating film configuration 2 of the oxide coating film 170, the III portion of the outermost surface contains diiron trioxide (Fe₂O₃) as a major component, and the II, III portion containing triiron tetraoxide (Fe₃O₄) as a major component is located under the III portion. The crystal structure of triiron tetraoxide (Fe₃O₄) is cubical crystals stronger than the crystal structure of diiron trioxide (Fe₂O₃). Therefore, the III portion is supported by the II, III portion as the underlayer.

In the coating film configuration 2 of the oxide coating film 170, the II portion containing iron oxide (FeO) as a major component is located under the II, III portion. The iron oxide (FeO) is present as amorphous having no crystal structure, in the interface of the surface of the base material 171. Therefore, the II portion can effectively suppress the presence of a weak structure such as a crystal grain boundary or lattice defect. For this reason, while the slide member is sliding, the bearing force of the oxide coating film 170 with respect to a load can be improved. This may contribute to suppressing of the peeling of the oxide coating film 170 and improvement of the adhesivity of the oxide coating film 170 with respect to the base material 171.

As can be clearly seen from the result of the element mapping of silicon (Si) of Fig. 2D, the oxide coating film 170 includes a silicon containing portion containing silicon (Si) which is more in quantity than that of the base material 171. In the coating film configuration 1 and the coating film configuration 2 of the oxide coating film 170, at least the II, III portion contains the silicon (Si) compound in addition to triiron tetraoxide (Fe₃O₄) which is more in quantity than other substances. In a case where the II portion is present under the II, III portion, the II, III portion contains the silicon (Si) compound, as well.

As can be clearly seen from the intensity ratio of silicon (Si) of Fig. 2D, in the oxide coating film 170, a portion containing silicon (Si) which is more in quantity, namely, the silicon containing portion is present in a region closer to the base material 171. This silicon containing portion substantially conforms to at least a portion of the II, III portion, or the II, III portion and the II portion.

The II, III portion is divided into a portion containing silicon (Si) less in quantity in a region closer to the outermost surface and a portion containing silicon (Si) less in quantity in a region closer to the base material 171. The upper portion containing silicon (Si) less in quantity will be referred to as "II, III portion a", while the lower portion containing silicon (Si) more in quantity will be referred to as "II, III portion b". The interface between the II, III portion a and the II, III portion b matches a location where the intensity ratio of silicon (Si) is significantly reduced in the example of Fig. 2D.

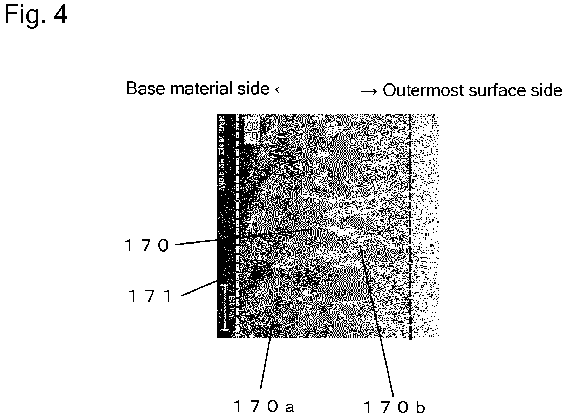

Fig. 4 shows a TEM image showing an example of a result of TEM observation performed for another sample of the oxide coating film 170, different from the sample (the oxide coating film 170 formed on the base material 171) shown in Figs. 2A to 2D. This sample is the same as that observed in Embodiment 2 which will be described later, and has feature of Embodiment 2 as well as the feature of Embodiment 1.

As shown in Fig. 4, a portion (II, III portion, or II, III portion and II portion) of the oxide coating film 170 which is closer to the base material 171 is the silicon containing portion 170a containing silicon (Si) which is more in quantity than that of the base material 171. A portion (at least one of II, III portion and III portion) of the oxide coating film 170 which is closer to the outermost surface than the silicon containing portion 170a includes a spot-shaped silicon containing portion 170b which is a portion containing silicon (Si) which is more in quantity than that of a surrounding region (region surrounding the spot-shaped silicon containing portion 170b). This spot-shaped silicon containing portion 170b is observed as a white spot in the TEM observation or the like of Fig. 4, and therefore can also be expressed as "white portion". Increase in the concentration or intensity of silicon (Si) of this white portion is observed.

The content of silicon (Si) of the upper II, III portion a of the II, III portion is lower than that of the lower II, III portion b (silicon containing portion 170a) of the II, III portion. The II, III portion a contains the white portion, namely, the spot-shaped silicon containing portion 170b. In Embodiment 1, the III portion which is closer to the outermost surface contains almost no silicon (Si). However, by adjusting conditions, the III portion can contain the white portion, namely, the spot-shaped silicon containing portion 170b.

The spot-shaped silicon containing portion 170b contains silicon (Si) compounds which are different in structure, such as silicon dioxide (SiO₂) and/or fayalite (Fe₂SiO₄). In some cases, the white portion includes solid-solved silicon (Si) (silicon (Si) is present as elemental substances), instead of the silicon (Si) compound. Therefore, in some cases, the III portion and/or the II, III portion a includes solid-solved silicon (Si) portion as well as the portion containing silicon (Si), as the spot-shaped silicon containing portion 170b.

It is sufficient that the oxide coating film 170 includes at least the silicon containing portion 170a in a layered form (portion of the II, III portion, the II portion, or the like) which is closer to the base material 171. Preferably, it is sufficient that the oxide coating film 170 includes the spot-shaped silicon containing portion 170b which is a portion containing silicon (Si) which is more in quantity than that of the surrounding region, in a region that is closer to the outermost surface than the silicon containing portion 170a. Specific configurations of the oxide coating film 170 are, as described above, the coating film configuration 1 including the III portion and the II, III portion, or the coating film configuration 2 including the III portion, the II, III portion, and the II portion. The configuration of the oxide coating film 170 is not limited to these.

As a preferable example, as described above, the oxide coating film 170 has a configuration in which the III portion, the II, III portion a and the II, III portion b (and the II portion) which are stacked in this order. The oxide coating film 170 is not limited to the configuration including 3 or 4 layers. The oxide coating film 170 may include a layer other than these layers, or may not include some of these layers. Some of these layers may be interchangeable.

The configuration including another layer, or the configuration which is different in stacking order of the layers can be easily realized by adjusting conditions. Further, formation of the silicon containing portion 170a in a region closer to the base material 171, adjustment of the concentration of silicon (Si) of the silicon containing portion 170a, and formation of the spot-shaped silicon containing portion 170b can be realized by adjusting conditions.

As typical example of the conditions, there is a manufacturing method (formation method) of the oxide coating film 170. As the manufacturing method of the oxide coating film 170, a known oxidation method of the iron-based material may be suitably used. The manufacturing method of the oxide coating film 170 is not limited. Manufacturing conditions or the like can be suitably set, depending on the conditions which are the kind of the iron-based material which is the base material 171, its surface state (the above-described polishing finish, etc.), desired physical property of the oxide coating film 170, and the like. In the present disclosure, the oxide coating film 170 can be formed on the surface of the base material 171 by oxidating gray cast iron as the base material 171 within a range of several hundreds degrees C, for example, within a range of 400 to 800 degrees C, by use of a known oxidation gas such as a carbon dioxide gas and known oxidation equipment.

In particular, in the present disclosure, to form the silicon containing portion 170a in a region of the oxide coating film 170 which is closer to the base material 171, or to form the spot-shaped silicon containing portion 170b in a region of the oxide coating film 170 which is closer to the outremost surface, the oxide coating film 170 can be manufactured (formed) by the following methods. For example, a method (1) silicon (Si) is added to the base material 171 and then the base material 171 is oxidated, or a method (2) a compound having an iron diffusion barrier function such as phosphate is formed (or caused to be present) on the surface of the base material 171 at an initial stage of an oxidation reaction, may be used.

### [Evaluation of Oxide Coating Film]

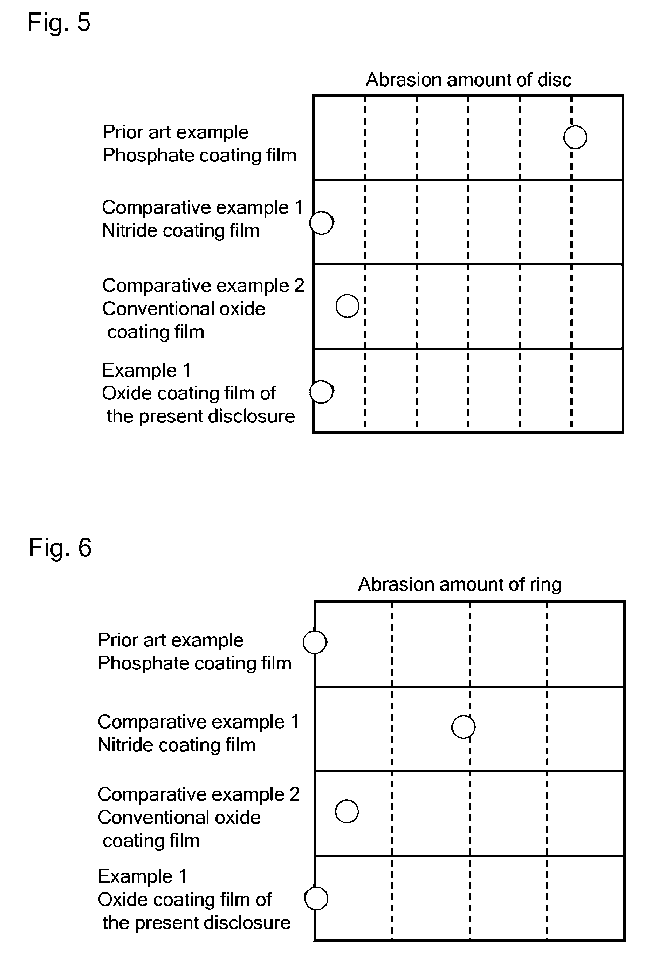

Next, regarding a typical example of the oxide coating film 170 according to Embodiment 1, a result of evaluation of the characteristic of the oxide coating film 170 will be described with reference to Figs. 5 and 6. Hereinafter, the abrasion suppressing effect of the oxide coating film 170, namely, the abrasion resistance of the oxide coating film 170 will be evaluated, based on results of Example, Prior Art Example, and Comparative Example. In description below, Example, Prior Art Example, and Comparative Example described below, will be expressed as Example 1-1, Prior Art Example 1-1, Comparative Example 1-1, and the like, to distinguish them with Examples of other embodiments which will be described later.

### (Example 1-1)

As the slide member, a disc made of spherical graphite cast iron was used. The base material 171 was spherical graphite cast iron. The surface of the disc was the slide surface. As described above, the disc was oxidated within a range of 400 to 800 degrees C, by use of the oxidation gas such as the carbon dioxide gas, to form the oxide coating film 170 according to Embodiment 1 on the slide surface. As described above, the oxide coating film 170 contained the silicon containing portion 170a in a region which is closer to the base material 171, and the spot-shaped silicon containing portion 170b in a region of the oxide coating film 170 which is closer to the outermost surface. In this way, evaluation sample of Example 1-1 was prepared. The abrasion resistance of the evaluation sample and attacking characteristic of the evaluation sample with respect to the other member (sliding between the evaluation sample and the other member occurred) were evaluated as will be described later.

### (Prior Art Example 1-1)

As a surface treatment film, the conventional phosphate coating film was formed instead of the oxide coating film 170 according to Embodiment 1. Except this, the evaluation sample of Prior Art Example 1-1 was prepared as in Example 1-1. The abrasion resistance and attacking characteristic of the evaluation sample with respect to the other member (sliding between the evaluation sample and the other member occurred) were evaluated as will be described later.

### (Comparative Example 1-1)

As a surface treatment film, a gas nitride coating film which is generally used as a hard film was formed instead of the oxide coating film 170 according to Embodiment 1. Except this, the evaluation sample of Comparative Example 1-1 was prepared as in Example 1-1. The abrasion resistance of the evaluation sample and attacking characteristic of the evaluation sample with respect to the other member (sliding between the evaluation sample and the other member occurred) were evaluated as will be described later.

### (Comparative Example 1-2)

As a surface treatment film, a conventional general oxide coating film, namely, triiron tetraoxide (Fe₃O₄) single portion coating film was formed by a method called black oxide coating (fellmight treatment), instead of the oxide coating film 170 according to Embodiment 1. Except this, the evaluation sample of Comparative Example 1-2 was prepared as in Example 1-1. The abrasion resistance of the evaluation sample and attacking characteristic of the evaluation sample with respect to the other member (sliding between the evaluation sample and the other member occurred) were evaluated as will be described later.

### (Evaluation of Abrasion Resistance and Attacking characteristic with Respect to the Other Member)

The ring on disc abrasion test was conducted on the above-described evaluation samples in a mixture ambience including R134a refrigerant and ester oil with VG3 (viscosity grade at 40 degrees C was 3mm²/s). In addition to discs as the evaluation samples, rings each including a base material made of gray cast iron and having a surface (slide surface) having been subjected to the surface polish, were prepared as the other members (sliding between the evaluation sample and the other member occurred). The abrasion test was conducted under a condition of a load 1000N, by use of intermediate (medium) pressure CFC friction/abrasion test machine AFT-18-200M (product name) manufactured by A&D Company, Limited. In this way, the abrasion resistance of the surface treatment film formed on the evaluation sample (disc) and the attacking characteristic of the evaluation sample with respect to the slide surface of the other member (ring) were evaluated.

### (Comparison Among Example 1-1, Prior Art Example 1-1, Comparative Example 1-1, and Comparative Example 1-2)

Fig. 5 shows a result of the ring on disc abrasion test and shows the abrasion amounts of the discs as the evaluation samples. Fig. 6 shows a result of the ring on disc abrasion test and shows the abrasion amounts of the rings as the other members.

Initially, comparison will be made for the abrasion amounts of the surfaces (slide surfaces) of the discs as the evaluation samples. As shown in Fig. 5, the abrasion amounts of the surfaces of the discs were less in the surface treatment films of Example 1-1, Comparative Example 1-1, and Comparative Example 1-2 than in the phosphate coating film of Prior Art Example 1. From this, it was found out that the surface treatment films of Example 1-1, Comparative Example 1-1, and Comparative Example 1-2 had good abrasion resistances. However, it was found out that regarding the surface treatment film (general oxide coating film) of Comparative Example 1-2, including triiron tetraoxide (Fe₃O₄) single portion, several portions of the surface of the disc were peeled from the interface with the base material.

Then, comparison will be made for the abrasion amounts of the surfaces (slide surfaces) of the rings as the other members (sliding between the evaluation sample and the other member occurred) with reference to Fig. 6. The abrasion amount of the surface of the ring corresponding to the surface treatment film of Example 1-1, namely, the oxide coating film 170 according to Embodiment 1 was almost equal to that of the phosphate coating film of Prior Art Example 1-1. In contrast, it was observed that the abrasion amounts of the surfaces of the rings corresponding to the gas nitride coating film of Comparative example 1-1, and the general oxide coating film of Comparative example 1-2 were more than those of Example 1-1 and Prior Art Example 1-1. From these results, it was found out that the attacking characteristic of the oxide coating film 170 according to Embodiment 1 with respect to the other member was less as in the conventional phosphate coating film.

As should be understood from the above, the abrasions of the disc and the ring, corresponding to only Example 1-1 using the oxide coating film 170 according to the present disclosure were not substantially observed. Thus, the oxide coating film 170 according to the present disclosure exhibited favorable abrasion resistance and attacking characteristic.

The abrasion resistance of the oxide coating film 170 will be discussed. Since the oxide coating film 170 is the iron oxidation product, the oxide coating film 170 is very chemically stable compared to the conventional phosphate coating film. In addition, the coating film of the iron oxidation product has a hardness higher than that of the phosphate coating film. By forming the oxide coating film 170 on the slide surface, generation, adhesion, or the like of abrasion powder can be effectively prevented. As a result, the increase in the abrasion amount of the oxide coating film 170 can be effectively avoided.

Next, the attacking characteristic of the oxide coating film 170 with respect to the other member will be discussed. The oxide coating film 170 includes the III portion containing diiron trioxide (Fe₂O₃) which is more in quantity than other substances, in the region which is closer to the outermost surface. Therefore, the attacking characteristic of the oxide coating film 170 with respect to the other member can be suppressed, and the conformability of the slide surface can be improved, for the reasons stated below.

The crystal structure of diiron trioxide (Fe₂O₃) is rhombohedral crystal. The crystal structure of triiron tetraoxide (Fe₃O₄) is cubical crystal. The crystal structure of the nitride coating film is hexagonal close-packed crystal, face-centered cubical crystal, and body-centered tetragonal crystal. For this reason, diiron trioxide (Fe₂O₃) is flexible (or weak) in the crystal structure compared to triiron tetraoxide (Fe₃O₄) or the nitride coating film. Therefore, the III portion has a low hardness in the grain (particle) level.

The oxide coating film 170 including diiron trioxide (Fe₂O₃) in the outermost surface has a hardness in grain (particle) level lower than that of the gas nitride coating film of Comparative Example 1-1 or general oxide coating film (triiron tetraoxide (Fe₃O₄) single portion coating film) of Comparative Example 1-2. Therefore, the oxide coating film 170 of Example 1-1 can effectively suppress the attacking characteristic with respect to the other member, and improve the conformability of the slide surface, compared to the surface treatment film of Comparative Example 1-1 or the surface treatment film of Comparative Example 1-2.

Although in the ring on disc abrasion test of Embodiment 1, the test was conducted in a state in which the disc was provided with the oxide coating film, the same effects can be obtained by providing the oxide coating film on the ring. The evaluation method of the abrasion resistance of the oxide coating film is not limited to the ring on disc abrasion test, and another test method may be used.

### (Example 1-2)

Next, a device reliability test was conducted on the refrigerant compressor 100 including the crankshaft 108 provided with the oxide coating film 170 according to Embodiment 1. The refrigerant compressor 100 has the configuration of Fig. 1 as described above, which will not be described in repetition. In the device reliability test, as in the above-described Example 1-1, or the like, R134a refrigerant and ester oil with VG3 (viscosity grade at 40 degrees C was 3mm²/s) were used. To accelerate the abrasion of the main shaft section 109 of the crankshaft 108, the refrigerant compressor 100 was operated in a high-temperature high-load intermittent operation mode in which operation (running) and stopping of the refrigerant compressor 100 were repeated within a short time under a high-temperature state.

After the device reliability test was finished, the refrigerant compressor 100 was disassembled, the crankshaft 108 was taken out, and the slide surface of the crankshaft 108 was checked. Based on a result of the observation of the slide surface, evaluation of the device reliability test was conducted.

### (Prior Art Example 1-2)

The device reliability test was conducted on the refrigerant compressor 100 including the crankshaft 108 as in Example 1-2, except that the crankshaft 108 was provided with the conventional phosphate coating film. After the device reliability test was finished, the refrigerant compressor 100 was disassembled, the crankshaft 108 was taken out, and the slide surface of the crankshaft 108 was checked.

### (Comparison between Example 1-2 and Prior Art Example 1-2)

In Prior Art Example 1-2, the abrasion occurred in the slide surface of the crankshaft 108, and damage to the phosphate coating film was observed. In contrast, in Example 1-2, damage to the slide surface of the crankshaft 108 was very slight. Thus, even though the refrigerant compressor 100 was operated under the harsh condition, the oxide coating film 170 remained in the slide surface of the crankshaft 108. From this, it was found out that the abrasion resistance of the slide member (the crankshaft 108 in Example 1-2) including the oxide coating film 170 was very high in an environment in which the refrigerant was compressed.

Based on the result of Example 1-1 and Example 1-2, consideration will be given to the fact that the oxide coating film 170 is higher in abrasion resistance and peeling strength than the general oxide coating film (triiron tetraoxide (Fe₃O₄) single portion coating film) of Comparative Example 1-2.

As described above, it is estimated that in the oxide coating film 170 according to Embodiment 1, iron-deficiency state is formed in the oxidation reaction and inward diffusion of oxygen is facilitated in the region which is in the vicinity of the interface with the base material 171, at an initial stage of manufacturing (formation of the coating film). Therefore, it is considered that oxidation of iron oxide (FeO) formed at the initial stage of the oxidation reaction is accelerated, and as a result, diiron trioxide (Fe₂O₃) as the major component of the III portion, or triiron tetraoxide (Fe₃O₄) as the major component of the II, III portion is generated.

These iron oxidation products have crystal structures which contribute to the abrasion resistance. In addition, diiron trioxide (Fe₂O₃) is more flexible in crystal structure than triiron tetraoxide (Fe₃O₄). In other words, triiron tetraoxide (Fe₃O₄) is stronger in crystal structure than diiron trioxide (Fe₂O₃). Since the flexible diiron trioxide (Fe₂O₃) layer is supported by the strong triiron tetraoxide (Fe₃O₄) layer, the oxide coating film 170 can have a high abrasion resistance.

As described above, it is estimated that the amorphous iron oxide (FeO) having no crystal structure is formed in the region of the oxide coating film 170 which is in the vicinity of the interface with the base material 171. The amorphous iron oxide (FeO) layer can effectively lessen the presence of the weak structure such as the crystal grain boundary or the lattice defects. For this reason, the peeling strength of the oxide coating film 170, as well as the abrasion resistance of the oxide coating film 170, can be improved.

Further, the portion (at least a part of the II, III portion, and the II portion) of the oxide coating film 170 which is located closer to the base material 171 is the silicon containing portion 170a. Because of the presence of this silicon containing portion 170a, the adhesive force (bearing force) of the oxide coating film 170 is improved.

For example, in Kobe Steel, Ltd Technical Report Vol. 1.55 (No. 1 Apr. 2005), it is recited that (1) the oxide coating film (scaling) is generated on the surface of a steel plate in a hot rolling step of an iron/steel material, and (2) descaling characteristic reduces as the amount of silicon contained in the iron/steel material increases. These recitations suggest that an oxide product containing silicon and iron can improve the adhesivity of the oxide coating film onto the surface of the iron-based material.

The oxide coating film 170 of Example 1-1 has a configuration in which the III portion, the II, III portion a and the II, III portion b (and the II portion depending on the condition) which are stacked in this order from the outermost surface. The II, III portion b (and the II portion in a case where the oxide coating film 170 includes the II portion) is the silicon containing portion 170a containing silicon (Si) which is more in quantity than that of the base material 171. Thus, since the content of the silicon (Si) is higher in the region of the oxide coating film 170 which is closer to the base material 171 and higher than that of the base material 171 (see Fig. 2D), the adhesivity (bearing force) of the oxide coating film 170 is higher than that of the conventional oxide coating film formed by oxidating the iron-based material containing silicon.

In the oxide coating film 170 of Example 1-1, the content of silicon (Si) of each of the II, III portion a and the III portion is lower than that of the II, III portion b. The II, III portion a and the III portion include the spot-shaped silicon containing portion 170b which is a portion in which the content of silicon (Si) is high. Because of the presence of the spot-shaped silicon containing portion 170b, the silicon (Si) compound which is relatively hard is also present in the region of the oxide coating film 170 which is closer to the outermost surface. Therefore, the abrasion resistance of the oxide coating film 170 can be further improved.

### [Modified Example, etc.]

In Embodiment 1, the sealed container 101 reserves therein the lubricating oil 103 with a viscosity of VG2 to VG100, accommodates therein the electric component 106 and the compression component 107 which is driven by the electric component 106 and compresses the refrigerant, and at least one slide member included in the compression component 107 includes the base material 171 made of the iron-based material and the oxide coating film 170 formed on the surface of the base material 171. The oxide coating film 170 includes the portion (III portion) containing diiron trioxide (Fe₂O₃) in the region which is closer to the outermost surface, and the silicon containing portion 170a containing silicon (Si) which is more in quantity than that of the base material 171, in the region which is closer to the base material 171.

In this structure of the oxide coating film 170, the silicon containing portion 170a can improve the adhesivity to the base material 171, and the portion containing diiron trioxide (Fe₂O₃) can effectively suppress the attacking characteristic with respect to the other member and improve the conformability of the slide surface. In this structure, the abrasion resistance of the slide member can be further improved. Therefore, the viscosity of the lubricating oil 103 can be reduced, and the slide length of the slide members (a distance for which the slide members slide) constituting the slide sections can be designed to be shorter. Since a sliding loss of the slide section can be reduced in this configuration, reliability, efficiency, and performance of the refrigerant compressor 100 can be improved.

Although the thickness of the oxide coating film 170 is about 3µm in Embodiment 1, the thickness of the oxide coating film 170 is not limited to this. Typically, the thickness of the oxide coating film 170 may be in a range of 1 to 5µm. In a case where the thickness of the oxide coating film 170 is less than 1 µm, it is difficult for the oxide coating film 170 to maintain the characteristic such as the abrasion resistance over a long period of time, depending on the condition. On the other hand, in a case where the thickness of the oxide coating film 170 is more than 5µm, surface roughness of the slide surface becomes excess depending on the conditions. Therefore, in some cases, it is difficult to control accuracy of the slide sections constituted by the plurality of slide members.

Although spherical graphite cast iron (FCD cast iron) is used as the base material 171 in Embodiment 1, the material of the base material 171 is not limited to this. The specific structure of the base material 171 provided with the oxide coating film 170 is not particularly limited so long as it is the iron-based material. Typically, cast iron is suitably used as the base material 171, and the iron-based material is not limited to the cast iron. The base material 171 may be a steel material, a sintered material, or other iron-based materials. Also, the specific kind of the cast iron is not particularly limited, and may be spherical graphite cast iron (FCD cast iron) as described above, gray cast iron (cast iron, FC cast iron), or other cast irons.

Commonly, gray cast iron contains about 2% silicon. The content of silicon of the base material 171 is not particularly limited. In a case where the iron-based material contains silicon, the adhesivity of the oxide coating film 170 can be improved in some cases. In general, the cast iron contains about 1 to 3% silicon. Therefore, for example, spherical graphite cast iron (FCD cast iron) can be used as the base material 171. Commonly, the steel material or the sintered material does not substantially contain silicon, or the content of silicon of the steel material or the sintered material is lower than that of the cast iron. About 0.5 to 10% silicon may be added to the steel material or the sintered material. This makes it possible to obtain advantages similar to those in a case where the cast iron is used as the base material 171.

The state of the surface of the base material 171 on which the oxide coating film 170 is formed, namely, the slide surface, is not particularly limited. Typically, the surface of the base material 171 is the polished surface. However, the surface of the base material 171 may be an unpolished surface or a surface having been subjected to a known surface treatment before the oxidation, depending on the kind of the base material 171, the kind of the slide member, or the like.

Although in Embodiment 1, R134a is used as the refrigerant, the kind of the refrigerant is not limited to this. Although in Embodiment 1, the ester oil is used as the lubricating oil 103, the kind of the lubricating oil 103 is not limited to this. Known refrigerant and lubricating oil may be suitably used as combinations of the refrigerant and the lubricating oil 103.

Suitable combinations of the refrigerant and the lubricating oil 103 are, for example, three examples described below. By using these combinations, high efficiency and reliability of the refrigerant compressor 100 can be achieved as in Embodiment 1.

In an example of combination 1, R134a, another HFC-based refrigerant, or HFC-based mixed refrigerant is used as the refrigerant, and ester oil, alkylbenzene oil, polyvinyl ether, polyalkylene glycol, or mixed oil including any of ester oil, alkylbenzene oil, polyvinyl ether, and polyalkylene glycol may be used as the lubricating oil 103.

In an example of combination 2, natural refrigerant such as R600a, R290, or R744, or mixed refrigerant including any of the natural refrigerants is used as the refrigerant, and one of mineral oil, ester oil, alkylbenzene oil, polyvinyl ether, and polyalkylene glycol, or mixed oil including any of mineral oil, ester oil, alkylbenzene oil, polyvinyl ether, and polyalkylene glycol may be used as the lubricating oil 103.

In an example of combination 3, HFO- based refrigerant such as R1234yf or mixed refrigerant of HFO-based refrigerants is used as the refrigerant, and one of ester oil, alkylbenzene oil, polyvinyl ether, and polyalkylene glycol, or mixed oil including any of ester oil, alkylbenzene oil, polyvinyl ether, and polyalkylene glycol may be used as the lubricating oil 103.

Among the above-described combinations, the combination 2 or 3 can suppress global warming by use of the refrigerant which produces less greenhouse effect. In the combination 3, a group of the lubricating oil 103 may further include mineral oil.

Although in Embodiment 1, the refrigerant compressor 100 is the reciprocating refrigerant compressor as described above, the refrigerant compressor of the present disclosure is not limited to the reciprocating refrigerant compressor, and is applicable to other compressors, such as a rotary refrigerant compressor, a scroll refrigerant compressor, or a vibrational refrigerant compressor. The refrigerant compressor to which the present disclosure is applicable can obtain advantages similar to those of Embodiment 1 so long as it has a known configuration including the slide sections, discharge valves, others.

Although in Embodiment 1, the refrigerant compressor 100 is driven by the power supply utility, the refrigerant compressor according to the present disclosure is not limited to this, and may be inverter-driven at any one of a plurality of operating frequencies. By forming the oxide coating film 170 having the above-described configuration on the slide surface of the slide section included in the refrigerant compressor which is inverter-driven at any one of a plurality of operating frequencies, the adhesivity to the base material 171 can be improved, and the conformability of the slide surface, and the like can be improved. Therefore, the abrasion resistance of the slide member can be further improved. This makes it possible to improve reliability of the refrigerant compressor even during a low-speed operation (running) in which the oil is not sufficiently fed to the slide sections, or during a high-speed operation (running) in which the rotational speed of the electric component increases.

Although in Embodiment 1, the refrigerant compressor 100 is described as the device incorporating the oxide coating film, including the oxide coating film 170 according to the present disclosure, the device incorporating the oxide coating film is not limited to the refrigerant compressor 100. The oxide coating film 170 according to the present disclosure may be suitably used in devices or members each including the slide section of the slide member, for example, a pump or a motor. Therefore, the content disclosed in Embodiment 1 is not intended to limit the application of the oxide coating film 170 according to the present disclosure, of course.

### (Embodiment 2)

The oxide coating film 170 according to Embodiment 1 includes the III portion containing diiron trioxide (Fe₂O₃), in the region which is closer to the outermost surface, and the silicon containing portion 170a containing silicon (Si) which is more in quantity than that of the base material 171, in the region which is closer to the base material 171. In addition, the oxide coating film 170 according to Embodiment 1 may include the spot-shaped silicon containing portion 170b located closer to the outermost surface than the silicon containing portion 170a and being a portion containing silicon (Si) which is more in quantity than that of the surrounding region.

In contrast, an oxide coating film according to Embodiment 2 includes three portions which are different from each other in the kind of the iron oxidation product, and the content of the silicon (Si) compound, or the like. Hereinafter, the oxide coating film according to Embodiment 2 will be described. As in Embodiment 1, the refrigerant compressor as the device incorporating the oxide coating film will be specifically described.

### [Configuration of Refrigerant Compressor]

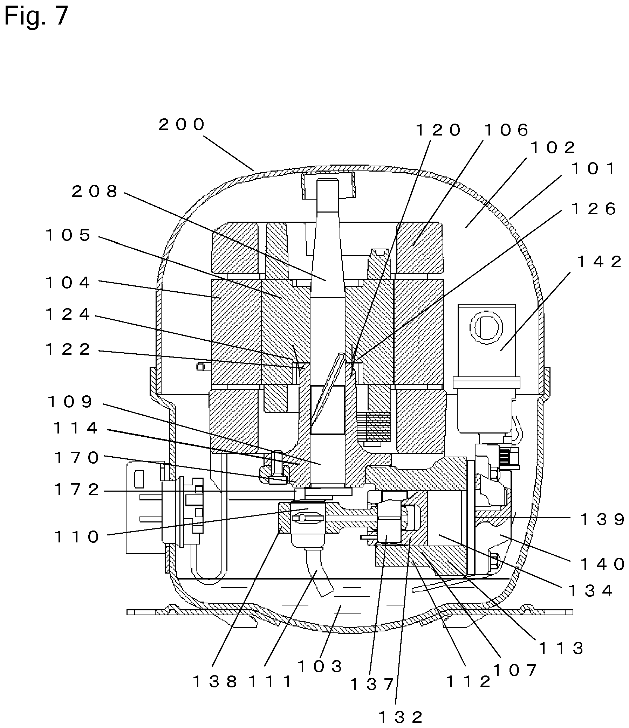

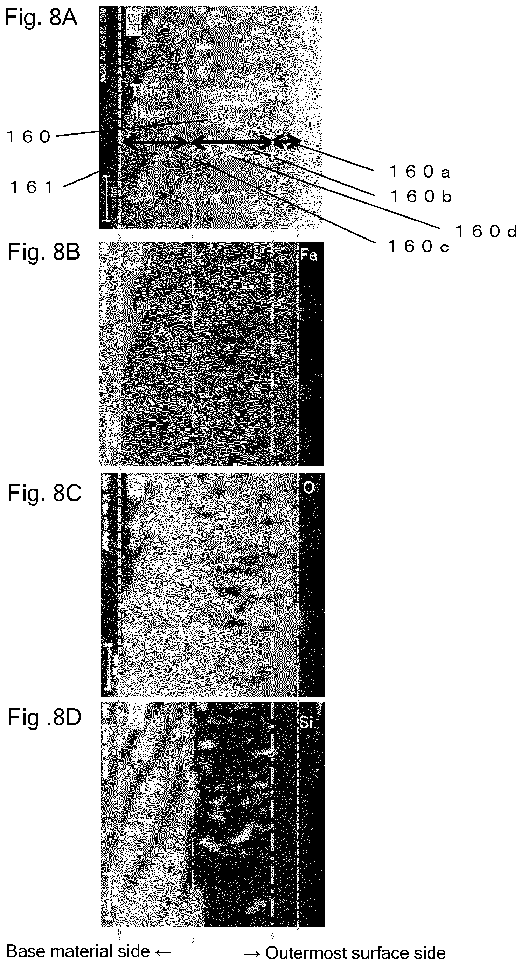

Firstly, a typical example of the refrigerant compressor according to Embodiment 2 will be specifically described with reference to Figs. 7 and 8A. Fig. 7 is a cross-sectional view of a refrigerant compressor 200 according to Embodiment 2. Fig. 8A is a microscope photograph showing an example of a result of TEM (transmission electron microscope) observation performed for an oxide coating film 160 provided on the slide member of the refrigerant compressor 200.

As shown in Fig. 7, the refrigerant compressor 200 according to Embodiment 2 has a configuration similar to that of the refrigerant compressor 100 according to Embodiment 1. Therefore, the specific configuration and operation of the refrigerant compressor 200 according to Embodiment 2 will not be described in repetition. However, a crankshaft 208 which is an example of the slide member is provided with the oxide coating film according to Embodiment 2.

The crankshaft 208 includes a base material 161 made of gray cast iron (FC cast iron) containing about 2% silicon (Si), and the oxide coating film 160 provided on a surface of the base material 161. Fig. 8A shows a typical example of the oxide coating film 160 according to Embodiment 2. Fig. 8A shows an example of a result of TEM (transmission electron microscope) observation performed for the cross-section of the oxide coating film 160 and shows the image of the whole of the oxide coating film 160 in a thickness direction.

As shown in Fig. 8A, the oxide coating film 160 according to Embodiment 2 includes an outermost portion 160a as a first layer, an intermediate portion 160b as a second layer, and an inner portion 160c as a third layer, the outermost portion 160a, the intermediate portion 160b, and the inner portion 160c being arranged in this order from the outermost surface of the slide surface. The outermost portion 160a is a composition A portion containing diiron trioxide (Fe₂O₃) which is more in quantity than other substances. The intermediate portion 160b is a composition B portion containing triiron tetraoxide (Fe₃O₄) which is more in quantity than other substances and containing the silicon (Si) compound. The inner portion 160c is a composition C portion containing triiron tetraoxide (Fe₃O₄) which is more in quantity than other substances and containing silicon (Si) which is more in quantity than that of the composition B portion.

The oxide coating film 160 according to Embodiment 2 has a thickness of about 2µm. The oxide coating film 160 of Fig. 8A is formed on a disc (base material 161) used in a ring on disc abrasion test in Example 2-1 which will be described later.

The slide section of the refrigerant compressor 200, for example, the slide section of the crankshaft 208 which is an example of Embodiment 2 is provided with the oxide coating film 160 having the above-described configuration. Therefore, even in a case where the slide member is used in a harsh environment in which the oil film has run out, and the metals of the slide surfaces contact each other more frequently, the abrasion of the slide surface provided with the oxide coating film 160 can be suppressed over a long period of time.

### [Configuration of Oxide Coating Film]

Next, the oxide coating film 160 which can suppress the abrasion of the slide section will be described in more detail with reference to Figs. 8B to 12. The oxide coating film 160 according to Embodiment 2 is the above-described second oxide coating film.

### (Result of EDS Analysis)

Firstly, the concentration distribution of the elements of the oxide coating film 160 will be described with reference to Figs. 8A to 8D. Figs. 8B to 8D are element maps showing an example of a result of EDS (energy dispersive X-ray spectrometry) analysis performed for the cross-section of the oxide coating film 160 of Fig. 8A. Fig. 8B shows the result of element mapping of iron (Fe) of the oxide coating film 160. Fig. 8C shows the result of element mapping of oxygen (O) of the oxide coating film 160. Fig. 8D shows the result of element mapping of silicon (Si) of the oxide coating film 160.

In Embodiment 2, the crankshaft 208 comprises the base material 161 made of gray cast iron (FC cast iron). The oxide coating film 160 is formed on the surface of the base material 161. Specifically, for example, the slide surface of the base material 161 is subjected to polishing finish, and then the oxide coating film 160 is formed by oxidation by use of an oxidation gas.

As described above, as shown in Fig. 8A, in Embodiment 2, the oxide coating film 160 is formed on the base material 161 (on the right side of the base material 161 of Fig. 8A) made of gray cast iron (FC cast iron). It is clearly observed that the oxide coating film 160 according to Embodiment 2 has a three-portion structure (three-layer structure) including the outermost portion 160a (first layer), the intermediate portion 160b (second layer), and the inner portion 160c (third layer), the outermost portion 160a, the intermediate portion 160b, and the inner portion 160c being arranged in this order from the outermost surface, as described above. In addition, it is observed that a white portion 160d is partially present in the intermediate portion 160b as the second layer.

Next, the concentrations of the elements contained in the oxide coating film 160 (namely, element composition of the portions of the oxide coating film 160) will be described with reference to Figs. 8B to 8D. Fig. 8B shows the result of element mapping of iron (Fe) of the oxide coating film 160. Fig. 8C shows the result of element mapping of oxygen (O) of the oxide coating film 160. Fig. 8D shows the result of element mapping of silicon (Si) of the oxide coating film 160. Figs. 8B to 8D show concentration ratios of the elements by contrasting density of black and white. As the color of the image is brighter, the ratio of the corresponding element is higher.

In Fig. 8A and Figs. 8B to 8D, a region surrounded by a pair of broken lines is the oxide coating film 160, the left side is the base material 161, and the right side is the outermost surface. As described above, the thickness of the oxide coating film 160 is about 2µm. Boundaries of the outermost portion 160a, the intermediate portion 160b, and the inner portion 160c are indicated by dot-and-dash lines.

From the result of the element analysis, it was found out that concentration ratios of iron (Fe), oxygen (O), and silicon (Si) of the oxide coating film 160 have the following trends.

Initially, the trend of the concentration distribution of iron (Fe) will be described with reference to the element mapping result of iron (Fe) of Fig. 8B. As shown in Fig. 8B, over the whole of the oxide coating film 160 (about 2µm from the surface of the base material 161), a region in which iron (Fe) concentration is lower than that of the base material 161 is formed. Therefore, of course, the concentration of iron (Fe) of the oxide coating film 160 containing the iron oxidation product is lower than that of the base material 161 which is the iron-based material.

In the inside of the oxide coating film 160, there is no significant concentration difference (difference in contrasting density of black and white), in the iron (Fe) concentration distribution in a direction from the outermost surface toward the base material 161. From this, it can be seen that iron (Fe) is basically uniformly distributed in the inside of the oxide coating film 160. As shown in Fig. 8B, in a portion corresponding to the above-described white portion 160d, in the inside of the oxide coating film 160, the iron (Fe) concentration is reduced.

Then, the trend of the concentration distribution of oxygen (O) will be described with reference to the element mapping result of oxygen (O) of Fig. 8C. As shown in Fig. 8C, over the whole of the oxide coating film 160 (about 2µm from the surface of the base material 161), a region in which oxygen (O) concentration is much higher than that of the base material 161 is formed. It is observed that this oxygen (O) concentration distribution and the iron (Fe) concentration distribution of 8B are formed in almost the same region. Therefore, a portion containing the iron oxidation product as a major component, which is different from the base material 161 as the iron-based material, is formed in the oxide coating film 160.

Regarding the oxygen (O) concentration distribution of the whole of the oxide coating film 160, a significant concentration difference in the whole region from the outermost surface toward the base material 171 is not observed, as in the iron (Fe) concentration distribution. From this, it can be seen that oxygen (O) is basically uniformly distributed in the inside of the oxide coating film 160, as in iron (Fe). As shown in Fig. 8C, in a portion corresponding to the above-described white portion 160d, in the inside of the oxide coating film 160, the oxygen (O) concentration is reduced, as in iron (Fe).

Then, the trend of the concentration distribution of silicon (Si) will be described with reference to the element mapping result of silicon (Si) of Fig. 8D. As shown in Fig. 8D, the silicon (Si) concentration of the base material 161 is high, and the silicon (Si) concentration of the inner portion 160c of the oxide coating film 160 which is closer to the base material 161 is high. In contrast, the silicon (Si) concentration in an interface between the inner portion 160c and the intermediate portion 160b is significantly reduced.

A portion corresponding to the above-described white portion 160d, of the intermediate portion 160b, the silicon (Si) concentration is increased. In the exmaple of Fig. 8D, in the outermost portion 160a, silicon (Si) is not substantially observed.

From the element mapping results of Figs. 8B to 8D, in the oxide coating film 160, the elements which are iron (Fe) and oxygen (O) are present over the whole region from the outermost portion 160a to the inner portion 160c. However, in the outermost portion 160a, silicon (Si) is not substantially present or less. Also, it is observed that in a part of the intermediate portion 160b and most of the inner portion 160c, silicon (Si) is present.

### (Result of EELS Analysis)

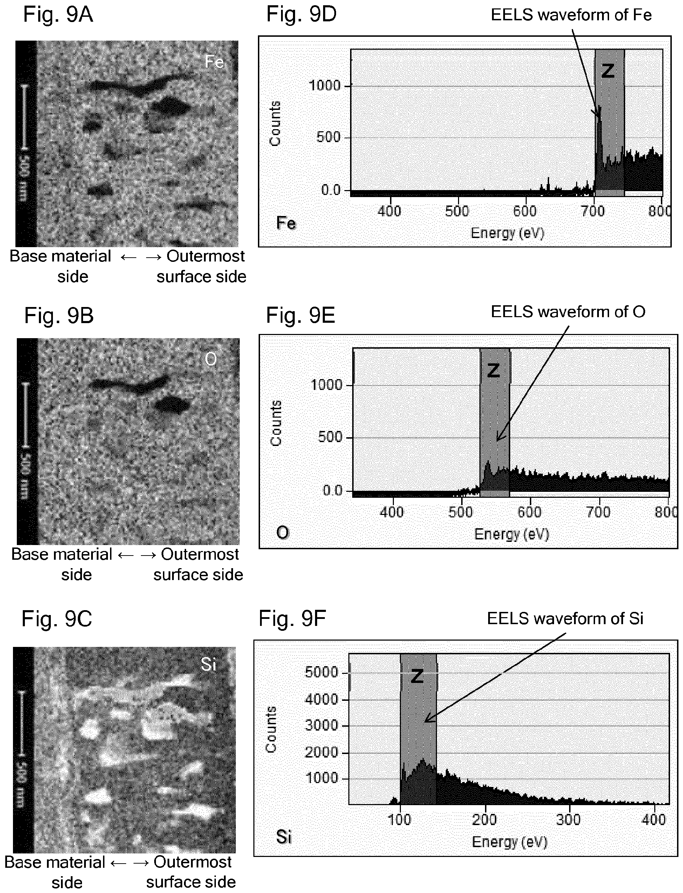

Next, the states of the elements of iron (Fe), oxygen (O), and silicon (Si) will be described more specifically with reference to Figs. 9A to 9F. Figs. 9A to 9C show results of element mapping obtained by EELS (electron energy loss spectroscopy) analysis performed for a part of the cross-section of the oxide coating film 160 of Fig. 8A. Figs. 9D to 9F are views of analysis corresponding to the EELS waveforms of Figs. 9A to 9C.

The EELS analysis is a method in which the composition or combined state of a sample is analyzed and evaluated, by measuring energy lost by a mutual action between an electron and an atom when the electron is transmitted through the sample. By the EELS analysis, a particular energy waveform associated with the element or electron structure of the sample can be obtained.

Fig. 9D is an analysis view showing the EELS waveform (mesh region of Fig. 9D) of iron (Fe), of a region of the cross-section of the oxide coating film 160. Fig. 9A shows the element mapping result of iron (Fe) of the region corresponding to Fig. 9D. Fig. 9E is an analysis view showing the EELS waveform (mesh region of Fig. 9E) of oxygen (O), of a region of the cross-section of the oxide coating film 160. Fig. 9B shows the element mapping result of oxygen (O) of the region corresponding to Fig. 9E. Fig. 9F is an analysis view showing the EELS waveform (mesh region of Fig. 9F) of silicon (Si), of a region of the cross-section of the oxide coating film 160. Fig. 9C shows the element mapping result of silicon (Si) of the region corresponding to Fig. 9F.

Figs. 9A to 9C show the intensities of the EELS waveforms by contrasting density of black and white. As the color of the image is brighter, the ratio of the corresponding EELS waveform is higher.

From the results of the EELS analysis, the intensities of the EELS waveforms (hereinafter will be simply referred to as "waveform intensities") of iron (Fe), oxygen (O), and silicon (Si) of the oxide coating film 160 have the following trends.

Initially, from the result of the EELS analysis of iron (Fe) of Figs. 9A and 9D, the waveform intensity of iron (Fe) will be described. As shown in Fig. 9A, in the inside of the oxide coating film 160, there is no significant intensity difference in the distribution of the waveform intensity of iron (Fe), from the outermost surface (left side in Fig. 9A) toward the base material 161 (right side in Fig. 9A). From this, it can be seen that iron (Fe) is uniformly distributed over the oxide coating film 160. In a part corresponding to the above-described white portion 160d, the waveform intensity of iron (Fe) is reduced.

Then, from the result of the EELS analysis of oxygen (O) of Figs. 9B and 9E, the waveform intensity of oxygen (O) will be described. As shown in Fig. 9B, in the inside of the oxide coating film 160, there is no significant intensity difference in the distribution of the waveform intensity of oxygen (O), from the outermost surface (left side in Fig. 9B) toward the base material 161 (right side in Fig. 9B), as in the case of iron (Fe). From this, it can be seen that oxygen (O) is uniformly distributed over the oxide coating film 160, and the oxide coating film 160 entirely comprises iron oxidation product. In a part corresponding to the above-described white portion 160d, the waveform intensity of oxygen (O) is reduced.

Then, from the result of the EELS analysis of silicon (Si) of Figs. 9C and 9F, the waveform intensity of silicon (Si) will be described. As shown in Fig. 9C, the waveform intensity of silicon (Si) is high in a region (right side in Fig. 9C) which is closer to the base material 161 (right side in Fig. 9C), and is reduced toward the outermost surface (right side in Fig. 9C). The waveform intensity of silicon (Si) is reduced, in the interface between the inner portion 160c and the intermediate portion 160b of the oxide coating film 160 (see Fig. 8D). In a part of the intermediate portion 160b, corresponding to the above-described white portion 160d, the waveform intensity of silicon (S) is increased.

From the results of EELS analysis of Figs, 9A to 9F, in the oxide coating film 160, the elements which are iron (Fe) and oxygen (O) are present over the whole region from the outermost portion 160a to the inner portion 160c, as in the results of EDS analysis (element mapping results) of Figs. 8B to 8D. However, in the outermost portion 160a, silicon (Si) is not substantially present or less. Also, it is observed that in a part of the intermediate portion 160b and most of the inner portion 160c, silicon (Si) is present.

### (Result of EELS Analysis of Portions of Oxide Coating Film)

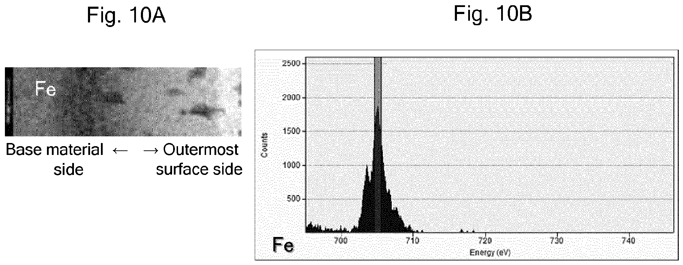

Next, the specific configuration of the oxide coating film 160 will be described by further performing the EELS analysis for the outermost portion 160a, the intermediate portion 160b, and the inner portion 160c of the oxide coating film 160. Specifically, the intensity distributions of iron (Fe), oxygen (O), and silicon (Si), and the states of these elements, of the portions of the oxide coating film 160, will be described more specifically with reference to Figs. 10A to 12.

Fig. 10B is an analysis view showing an enlarged waveform of a portion corresponding to iron (Fe), of the EELS waveform of the outermost portion 160a of the oxide coating film 160. Fig. 10A shows the result of element mapping of iron (Fe), which conforms to a peak of the enlarged waveform of Fig. 10B, in the cross-section of the oxide coating film 160. The EELS waveform of Fig. 10B is a typical waveform of diiron trioxide (Fe₂O₃).

Fig. 9A shows the result of element mapping of the whole of iron (Fe). In Fig. 9A, the intensity distribution of ion (Fe) is not seen. In contrast, as shown in Fig. 10A, the image of the portion which is closer to the outermost surface (left side in Fig. 10A), namely, the outermost portion 160a, is brightest, and therefore the waveform intensity of diiron trioxide (Fe₂O₃) is very high. From this, it is seen that the outermost portion 160a contains diiron trioxide (Fe₂O₃) which is more in quantity than other substances.

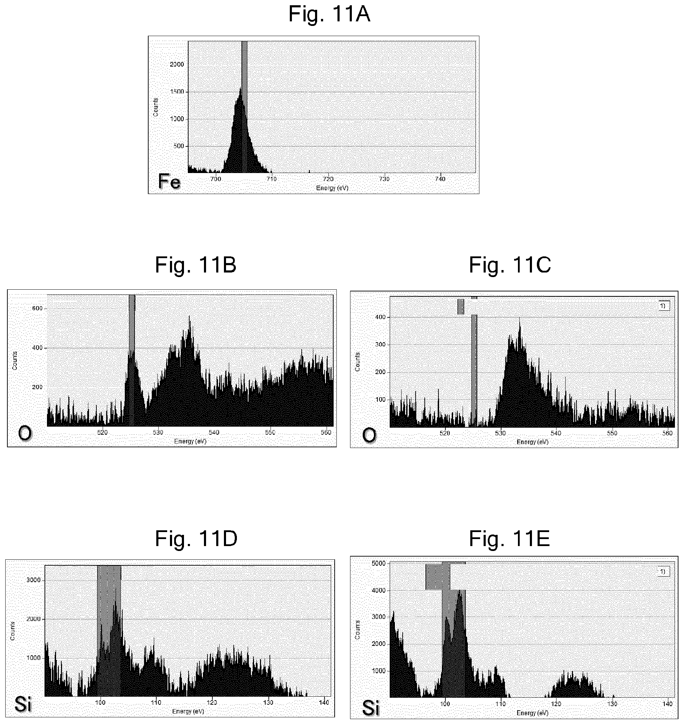

Fig. 11A is an analysis view showing an enlarged waveform of a portion corresponding to iron (Fe), of the EELS waveform of the intermediate portion 160b of the oxide coating film 160. The EELS waveform of Fig. 11A is a typical waveform of triiron tetraoxide (Fe₃O₄). Regarding a portion of the intermediate portion 160b, which is other than the portion corresponding to Fig.11A, the EELS waveform similar to that of Fig. 11A is observed. Therefore, the intermediate portion 160b contains triiron tetraoxide (Fe₃O₄) which is more in quantity than other substances.

Figs. 11B and 11C are analysis views showing enlarged waveforms of the same portion corresponding to oxygen (O), of the EELS waveform of the white portion 160d included in the intermediate portion 160b. Fig. 11B shows a peak at a location that is closer to 525eV. Fig. 11C shows no peak. The peak at a location that is closer to 525eV is unique to the iron oxidation product. Therefore, it can be seen that oxygen (O) is not bonded to iron (Fe), in a measurement portion of the enlarged waveform of Fig. 11C, namely, the white portion 160d.

Figs. 11D and 11E are analysis views showing enlarged waveforms of the same portion corresponding to silicon (Si), of the EELS waveform of the white portion 160d included in the intermediate portion 160b. Figs. 11B and 11C, and Figs. 11D and 11E show the EELS waveforms of the same portion. Figs. 11D and 11E show almost the same EELS waveform. Therefore, in the white portion 160d, silicon (Si) is bonded to oxygen (O).

From a comparison between the EELS waveforms of Figs. 11B and 11C, and the EELS waveforms of Figs. 11D and 11E, it is seen that oxygen (O) which is not bonded to iron (Fe) and bonded to silicon (Si), and oxygen (O) bonded to iron (Fe) and silicon (Si) are present in the white portion 160d included in the intermediate portion 160b. Therefore, plural kinds of silicon (Si) compounds having different structures, such as silicon dioxide (SiO₂) and fayalite (Fe₂SiO₄) are present in the white portion 160d.

Further, the enlarged waveform of the portion corresponding to iron (Fe), of the EELS waveform of a black portion of the inner portion 160c of the oxide coating film 160 has substantially the same shape as that of the enlarged waveform of Fig. 11A, although this is not shown. Therefore, it is seen that the inner portion 160c contains triiron tetraoxide (Fe₃O₄) which is more in quantity than other substances, as in the intermediate portion 160b.

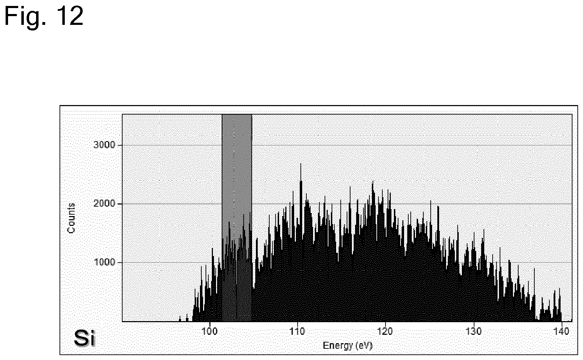

Fig. 12 is an analysis view showing an enlarged waveform of a portion corresponding to silicon (Si), of the EELS waveform of the inner portion 160c of the oxide coating film 160. The shape of EELS waveform of Fig. 12 is different from those of the EELS waveform of Fig. 11D and the EELS waveform of Fig. 11E. From the EELS waveform of Fig. 12, in this portion, silicon (Si) is not bonded to oxygen (O). This implies that solid-solved silicon (Si) is present (silicon (Si) is present as elemental substances) in this portion. The waveform similar to the EELS waveform of Fig. 11B and the EELS waveform of Fig. 11D is observed in another portion of the inner portion 160c. Therefore, the silicon (Si) compound and solid-solved silicon (Si) portion are present in the inner portion 160c, as in the intermediate portion 160b.

As described above, the oxide coating film 160 according to the present disclosure includes three portions which are different from each other in composition, which are the composition A portion, the composition B portion, and the composition C portion. Among these, the composition A portion is, for example, the outermost portion 160a containing diiron trioxide (Fe₂O₃) which is more in quality than other substances. The composition B portion is, for example, the intermediate portion 160b containing triiron tetraoxide (Fe₃O₄) which is more in quality than other substances and containing the silicon (Si) compound. The composition C portion contains triiron tetraoxide (Fe₃O₄) which is more in quality than other substances and contains silicon (Si) which is more in quantity than that of the composition B portion.

As described above, in a typical configuration, the oxide coating film 160 includes at least the outermost portion 160a as the composition A portion, the intermediate portion 160b as the composition B portion, and the inner portion 160c as the composition C portion, the outermost portion 160a, the intermediate portion 160b, and the inner portion 160c being arranged in this order from the outermost surface. However, the configuration of the oxide coating film 160 is not limited to this.

The oxide coating film 160 may include portions which are different in composition from the composition A portion, the composition B portion, and the composition C portion, so long as it includes the composition A portion, the composition B portion, and the composition C portion. The configuration of the oxide coating film 160 is not limited to the configuration in which the composition **A** portion, the composition **B** portion, and the composition **C** portion are stacked in this order from the outermost surface. For example, the configuration of the oxide coating film 160 may be such that the composition **B** portion, the composition **A** portion and the composition **C** portion are stacked in this order from the outermost surface. Thus, the configuration including another portion or the configuration in which the portions are stacked in a different order can be easily realized by adjusting conditions.

As typical example of the conditions, there is a manufacturing method (formation method) of the oxide coating film 160. As the manufacturing method of the oxide coating film 160, a known oxidation method of an iron-based material may be suitably used. The manufacturing method of the oxide coating film 160 is not limited. Manufacturing conditions or the like can be suitably set, depending on the conditions which are the kind of the iron-based material which is the base material 161, its surface state (the above-described polishing finish, etc.), desired physical property of the oxide coating film 160, or the like. In the present disclosure, the oxide coating film 160 can be formed on the surface of the base material 161 by oxidating gray cast iron as the base material 161 within a range of several hundreds degrees C, for example, within a range of 400 to 800 degrees C, by use of a known oxidation gas such as a carbon dioxide gas and known oxidation equipment.

### [Evaluation of Oxide Coating Film]

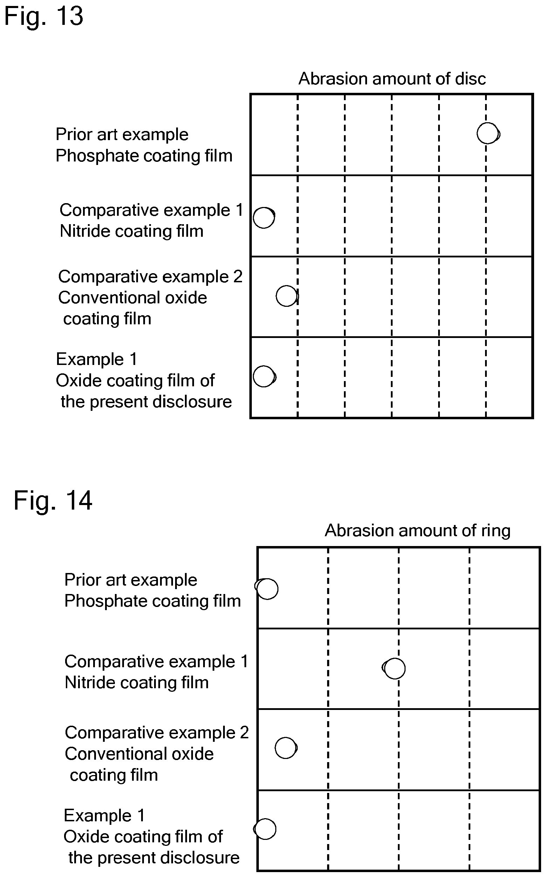

Next, regarding a typical example of the oxide coating film 160 according to Embodiment 2, a result of evaluation of the characteristic of the oxide coating film 160 will be described with reference to Figs. 13 to 15. Hereinafter, the abrasion suppressing effect of the oxide coating film 160, namely, the abrasion resistance of the oxide coating film 160 will be evaluated, based on results of Example, Prior Art Example, and Comparative Example. In description below, Example, Prior Art Example, and Comparative Example, will be expressed as Example 2-1, Prior Art Example 2-1, Comparative Example 2-1, and the like, to distinguish them with Examples of Embodiment 1 or Examples of Embodiment 4 which will be described later.

### (Example 2-1)

As the slide member, a disc made of gray cast iron was used. The base material 161 was gray cast iron. The surface of the disc was the slide surface. As described above, the disc was oxidated within a range of 400 to 800 degrees C, by use of the oxidation gas such as the carbon dioxide gas, to form the oxide coating film 160 according to Embodiment 2 on the slide surface. As shown in Figs. 8A to 10, the oxide coating film 160 included a first portion 151, a second portion 152, and a third portion 153. In this way, evaluation sample of Example 2-1 was prepared. The abrasion resistance of the evaluation sample and attacking characteristic of the evaluation sample with respect to the other member (sliding between the evaluation sample and the other member occurred) were evaluated as will be described later.

### (Prior Art Example 2-1)

As a surface treatment film, the conventional phosphate coating film was formed instead of the oxide coating film 160 according to Embodiment 2. Except this, the evaluation sample of Prior Art Example 2-1 was prepared as in Example 2-1. The abrasion resistance of the evaluation sample and attacking characteristic of the evaluation sample with respect to the other member (sliding between the evaluation sample and the other member occurred) were evaluated as will be described later.

### (Comparative Example 2-1)

As a surface treatment film, a gas nitride coating film which is generally used as a hard film was formed instead of the oxide coating film 160 according to Embodiment 2. Except this, the evaluation sample of Comparative Example 2-1 was prepared as in Example 2-1. The abrasion resistance of the evaluation sample and attacking characteristic of the evaluation sample with respect to the other member (sliding between the evaluation sample and the other member occurred) were evaluated as will be described later.

### (Comparative Example 2-2)

As a surface treatment film, a conventional general oxide coating film, triiron tetraoxide (Fe₃O₄) single portion coating film was formed by a method called black oxide coating (fellmight treatment), instead of the oxide coating film 160 according to Embodiment 2. Except this, the evaluation sample of Comparative Example 2-2 was prepared as in Example 2-1. The abrasion resistance and attacking characteristic of the evaluation sample with respect to the other member (sliding between the evaluation sample and the other member occurred) were evaluated as will be described later.

### (Evaluation of Abrasion Resistance and Attacking Characteristic with Respect to the Other Member)

The ring on disc abrasion test was conducted on the above-described evaluation samples in a mixture ambience including T134a refrigerant and ester oil with VG3 (viscosity grade at 40 degrees C was 3mm²/s). In addition to discs as the evaluation samples, rings each including a base material made of gray cast iron and having a surface (slide surface) having been subjected to the surface polish, were prepared as the other members (sliding between the evaluation sample and the other member occurred). The abrasion test was conducted under a condition of a load 1000N, by use of intermediate pressure CFC friction/abrasion test machine AFT-18-200M (product name) manufactured by A&D Company, Limited. In this way, the abrasion resistance of the surface treatment film formed on the evaluation sample (disc) and the attacking characteristic of the surface treatment film with respect to the slide surface of the other member (ring) (sliding between the evaluation sample and the other member occurred) were evaluated.

### (Comparison Among Example 2-1, Prior Art Example 2-1, Comparative Example 2-1, and Comparative Example 2-2)

Fig. 13 shows a result of the ring on disc abrasion test and shows the abrasion amounts of the slide surfaces of the discs as the evaluation samples. Fig. 14 shows a result of the ring on disc abrasion test and shows the abrasion amounts of the rings as the other members.

Initially, comparison will be made for the abrasion amounts of the surfaces (slide surfaces) of the discs as the evaluation samples. As shown in Fig. 13, the abrasion amounts of the surfaces of the discs were less in the surface treatment films of Example 2-1, Comparative Example 2-1, and Comparative Example 2-2 than in the phosphate coating film of Prior Art Example 2-1. From this, it was found out that the surface treatment films of Example 2-1, Comparative Example 2-1, and Comparative Example 2-2 had good abrasion resistances. However, it was found out that regarding the surface treatment film (general oxide coating film) of Comparative Example 2-2, containing triiron tetraoxide (Fe₃O₄) single portion, several portions of the surface of the disc were peeled from the interface with the base material.

Then, comparison will be made for the abrasion amounts of the surfaces (slide surfaces) of the rings as the other members (sliding between the evaluation sample and the other member occurred), with reference to Fig. 14. The abrasion amount of the surface of the ring corresponding to the surface treatment film of Example 2-1, namely, the oxide coating film 160 according to Embodiment 2 was almost equal to that of the phosphate coating film of Prior Art Example 2-1. In contrast, it was observed that the abrasion amounts of the surfaces of the rings corresponding to the gas nitride coating film of Comparative example 2-1, and the general oxide coating film of Comparative example 2-2 were more than those of Example 2-1 and Prior Art Example 2-1. From these results, it was found out that the attacking characteristic of the oxide coating film 160 according to Embodiment 2 with respect to the other member was less as in the general phosphate coating film.

As should be understood from the above, the abrasions of the disc and the ring, corresponding to only Example 2-1 including the oxide coating film 170 according to the present disclosure were not substantially observed. Thus, it was found out that the oxide coating film 170 according to the present disclosure had favorable abrasion resistance and attacking characteristic.

The abrasion resistance of the oxide coating film 160 will be discussed. Since the oxide coating film 160 is the iron oxidation product, the oxide coating film 160 is very chemically stable compared to the conventional phosphate coating film. In addition, the coating film of the iron oxidation product has a hardness higher than that of the phosphate coating film. By forming the oxide coating film 160 on the slide surface, generation, adhesion, or the like of abrasion powder can be effectively prevented. As a result, the increase in the abrasion amount of the oxide coating film 160 can be effectively avoided.

Next, the attacking characteristic of the oxide coating film 160 with respect to the other member will be discussed. The outermost portion 160a of the oxide coating film 160 includes the composition A portion. The composition A portion contains diiron trioxide (Fe₂O₃) which is more in quantity than other substances. Therefore, the composition A portion can suppress the attacking characteristic of the oxide coating film 160 with respect to the other member, and improve the conformability of the slide surface, for the reasons stated below.

The crystal structure of diiron trioxide (Fe₂O₃) which is the major component of the composition **A** portion is rhombohedral crystal. The crystal structure of triiron tetraoxide (Fe₃O₄) is cubical crystal. The crystal structure of the nitride coating film is hexagonal close-packed crystals, face-centered cubical crystals, and body-centered tetragonal crystals. For this reason, diiron trioxide (Fe₂O₃) is flexible (or weak) in the crystal structure compared to triiron tetraoxide (Fe₃O₄) or the nitride coating film. Therefore, the outermost portion 160a as the composition A portion has a low hardness in the particle (grain) level.

The composition A portion containing much diiron trioxide (Fe₂O₃) has a hardness in grain (particle) level lower than that of the gas nitride coating film of Comparative Example 2-1 or the general coating film (triiron tetraoxide (Fe₃O₄) single portion coating film) of Comparative Example 2-2. Therefore, the oxide coating film 160 of Example 2-1 can effectively suppress the attacking characteristic with respect to the other member and improve the conformability of the slide surface, compared to the surface treatment film of Comparative Example 2-1 or the surface treatment film of Comparative Example 2-2.

Although in the ring on disc abrasion test of Embodiment 2, the test was conducted in a state in which the disc was provided with the oxide coating film, the same effects can be obtained by providing the oxide coating film on the ring. The evaluation method of the abrasion resistance of the oxide coating film is not limited to the ring on disc abrasion test, and another test method may be used.

### (Example 2-2)

Next, a device reliability test was conducted on the refrigerant compressor 200 including the crankshaft 208 provided with the oxide coating film 160 according to Embodiment 2 to confirm the advantages of the oxide coating film 160. The refrigerant compressor 200 has the configuration of Fig. 7 as described above, which will not be described in repetition. In the device reliability test, as in the above-described Example 2-1, or the like, R134a refrigerant and ester oil with VG3 (viscosity grade at 40 degrees C was 3mm²/s) were used. To accelerate the abrasion of the main shaft section 109 of the crankshaft 208, the refrigerant compressor 200 was operated in a high-temperature high-load intermittent operation mode in which operation (running) and stopping of the refrigerant compressor 200 were repeated under a high-temperature state.

After the device reliability test was finished, the refrigerant compressor 200 was disassembled, the crankshaft 208 was taken out, and the slide surface of the crankshaft 208 was checked. Based on a result of the observation of the slide surface, evaluation of the device reliability test was conducted.

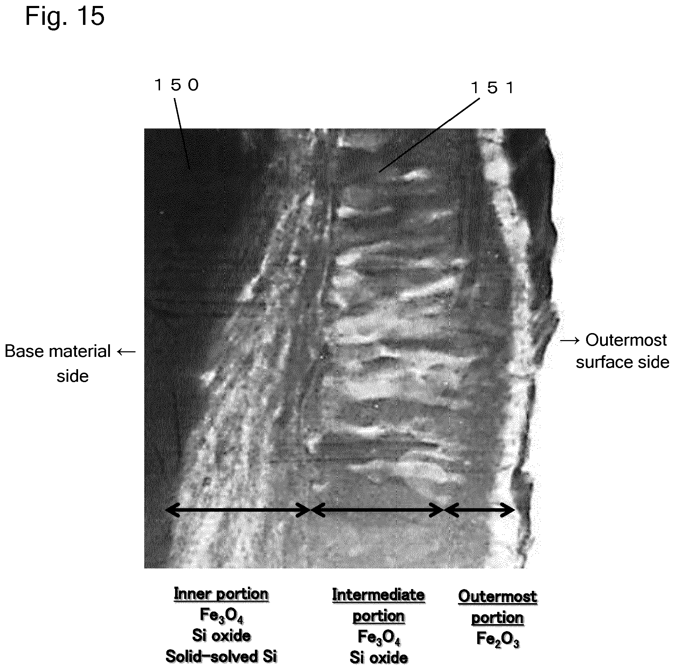

Fig. 15 shows a result of a TEM (transmission electron microscope)image obtained by TEM observation performed for the cross-section of a region that is in the vicinity of the slide surface of the crankshaft 208, after the device reliability test was conducted. As shown in Fig. 15, in the cross-section of a region that is in the vicinity of the slide surface, the oxide coating film 160 was formed on the base material 161 (on the right side of the base material 161) made of gray cast iron (FC cast iron). After the device reliability test was conducted, it was confirmed that the oxide coating film 160 had a three-portion structure including the outermost portion 160a, the intermediate portion 160b, and the inner portion 160c, and the states of these portions were not changed.

Based on the result of Example 2-1 and Example 2-2, consideration will be given to the fact that the oxide coating film 160 including the outermost portion 160a (composition **A** portion), the intermediate portion 160b (composition **B** portion), and the inner portion 160c (composition **C** portion) can obtain advantages.

As can be clearly seen from the above-described result of the ring on disc abrasion test (result of Example 2-1), the outermost portion 160a (composition **A** portion) contains diiron trioxide (Fe₂O₃) as a major component. The crystal structure of diiron trioxide (Fe₂O₃) is flexible in the crystal structure, compared to triiron tetraoxide (Fe₃O₄) or the nitride coating film. Therefore, the oxide coating film 160 including the outermost portion 160a can effectively suppress the attacking characteristic with respect to the other member (sliding between the slide member provided with the oxide coating film 160 and the other member occurred)and improve the conformability of the slide surface, as described above.

As can be clearly seen from the result of the device reliability test (result of Example 2-2), the abrasion of the oxide coating film 160 was not observed after the device reliability test. From this, the abrasion resistance of the oxide coating film 160 is high in practical use. It is considered that the outermost portion 160a (composition A portion) of the oxide coating film 160 can improve the abrasion resistance.

One of physical properties (characteristics) which are directly related to the abrasion, of the surface treatment film of the slide member, is hardness. The hardness of diiron trioxide (Fe₂O₃) which is a major component of the outermost portion 160a is about 537Hv. In contrast, the hardness of triiron tetraoxide (Fe₃O₄) which is a major component of the conventional general oxide coating film is about 420Hv. Thus, the hardness of diiron trioxide (Fe₂O₃) is higher than that of triiron tetraoxide (Fe₃O₄). From this, it is estimated that the oxide coating film 160 of Example 2-1 has in an outremost surface thereof a portion (outermost portion 160a) having a higher abrasion resistance than the general oxide coating film (triiron tetraoxide (Fe₃O₄) single portion coating film) of Comparative Example 2-2.

The intermediate portion 160b and the inner portion 160c contain the silicon (si) compound. Generally, the silicon (Si) compound has a hardness higher than that of the general iron oxidation product. Therefore, it is estimated that even in a case where the outermost portion 160a is abraded, the intermediate portion 160b and the inner portion 160c have a higher abrasion resistance than the conventional general oxide coating film (triiron tetraoxide (Fe₃O₄) single portion coating film of Comparative Example 2-2).

The oxide coating film 160 has higher adhesivity to the base material 171 (iron-based material) than the conventional general oxide coating film. It is presumed that a cause of improved adhesivity (bearing force) of the oxide coating film 160 is as follows.

For example, in Kobe Steel, Ltd Technical Report Vol. 1.55 (No. 1 Apr. 2005), it is recited that (1) the oxide coating film (scaling) is generated on the surface of a steel plate in a hot rolling step of an iron/steel material, and (2) descaling characteristic reduces as the amount of silicon contained in the iron/steel material increases. These recitations suggest that an oxide product containing silicon and iron can improve the adhesivity of the oxide coating film onto the surface of the iron-based material.

The oxide coating film 160 of Example 2-1 includes the intermediate portion 160b as the underlayer of the outermost portion 160a, and the inner portion 160c as the underlayer of the intermediate portion 160b. The intermediate portion 160b is the composition **B** portion. The inner portion 160c is the composition **C** portion. It is considered that the composition **B** portion and the composition **C** portion containing the silicon (Si) compound can improve the adhesivity to the base material 161, of the oxide coating film 160 including the outermost portion 160a. The inner portion 160c which is the composition **C** portion contains silicon which is more in quantity than that of the composition **B** portion. Since the portion containing the silicon (Si) compound is provided and the content of silicon in the region of the oxide coating film 160 which is closer to the base material 161, is high, the adhesive force of the oxide coating film 160 can be further improved. As a result, the bearing force of the oxide coating film 160 with respect to a load during sliding is improved, and thus peeling of the oxide coating film 160 is effectively prevented.

As described above, the composition **C** portion which is the inner portion 160c may include solid-solved silicon (Si) portion as elemental substances, as well as the silicon (Si) compound. It is expected that the solid-solved silicon (Si) portion can improve the adhesivity of the oxide coating film 160. The solid-solved silicon (Si) portion can be present in a localized region of the intermediate portion 160b (composition **B** portion) as well as the inner portion 160c (composition **C** portion), by setting conditions. This can improve the mutual adhesivity between the portions. Therefore, the advantages similar to the above-described advantages can be obtained, or more advantages can be obtained.

### [Modification, etc.]

In Embodiment 2, the sealed container 101 reserves therein the lubricating oil 103, accommodates therein the electric component 106 and the compression component 107 which is driven by the electric component 106 and compresses the refrigerant, at least one slide member included in the compression component 107 comprises the iron-based material, and the oxide coating film 160 including the composition **A** portion, the composition **B** portion, and the composition C portion is provided on the slide surface of this iron-based material.

The composition **A** portion of the oxide coating film 160 contains Fe₂O₃ which is more in quantity than other substances. The composition **B** portion of the oxide coating film 160 contains triiron tetraoxide (Fe₃O₄) which is more in quantity than other substances. The composition **B** portion also contains the silicon (Si) compound and may contain the solid-solved silicon (Si) portion. The composition **C** portion of the oxide coating film 160 contains triiron tetraoxide (Fe₃O₄) which is more in quantity than other substances, and contains silicon which is more in quantity than that of the composition **B** portion. For example, the composition **C** portion may contain the silicon (Si) compound and the solid-solved silicon (Si) portion. Or, the composition **C** portion may contain the silicon (Si) compound and may not contain the solid-solved silicon (Si) portion.

By forming the oxide coating film 160 on the slide surface of the slide member, the abrasion resistance of the slide member is improved, and the adhesivity of the oxide coating film 160 (the bearing force of the oxide coating film 160) to the base material 161 is improved. Since a sliding loss in the slide section can be reduced, reliability, efficiency and performance of the refrigerant compressor 200 can be improved.

The silicon (Si) compound of the present disclosure is not limited to the silicon oxidation product such as silicon dioxide (SiO₂), or silicate salt such as fayalite (Fe₂SiO₄) and means a compound containing silicon in a chemical structure. Further, the silicon (Si) compound of the present disclosure includes a state in which silicon enters a region between crystal lattices formed by other elements. Therefore, the silicon (Si) compound of the present disclosure is not intended to define its molecular state. The silicon (Si) compound of the present disclosure is defined as a compound including silicon, or inorganic composition including silicon in its structure. Therefore, the silicon (Si) compound of the present disclosure can also be expressed as "silicon composition".

The specific configurations of the oxide coating film 160 according to Embodiment 2, for example, the kind (cast iron, steel material, sintered material) of the iron-based material as the base material 161, a typical range of a thickness, and the state (polished surface, surface treatment (finishing) surface, etc.) of the surface (slide surface) of the base material 161, are similar to those of the oxide coating film 170 according to Embodiment 1. Therefore, description of them is omitted.

Likewise, the kind of the refrigerant and lubricating oil which are suitably used, a driving method of the refrigerant compressor 200, the specific kind of the refrigerant compressor 200, and the like, in a case where the oxide coating film 160 according to Embodiment 2 is applied to the refrigerant compressor 200, are similar to those of the oxide coating film 170 according to Embodiment 1. Therefore, description of them is omitted.

A device incorporating an oxide coating film into which the oxide coating film 160 according to Embodiment 2 can be incorporated is not limited as in the oxide coating film 170 according to Embodiment 1. Therefore, description of them is omitted.

### (Embodiment 3)

In Embodiment 2 described above, as a preferable example, the oxide coating film 160 includes the composition **A** portion, the composition **B** portion, and the composition **C** portion, and the composition **A** portion substantially contains diiron trioxide (Fe₂O₃). The present disclosure is not limited to this. In Embodiment 3, the composition **A** portion contains the silicon (Si) compound or the like. This will be described specifically.

### [Configuration of Refrigerant Compressor]

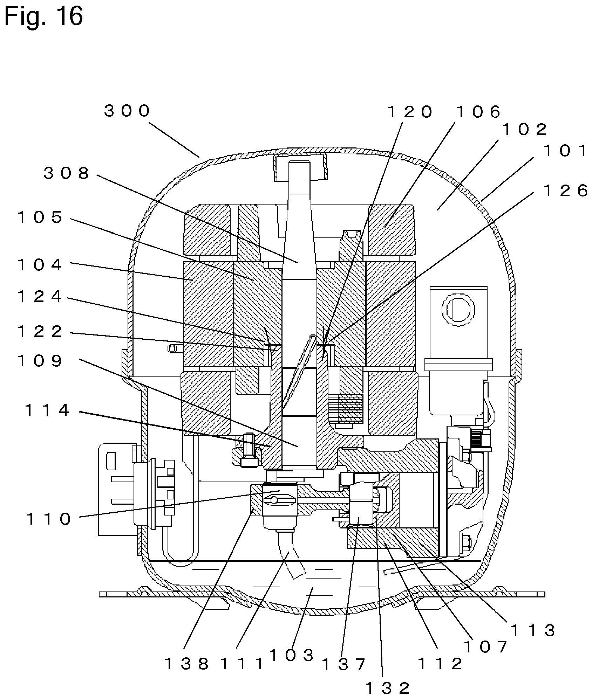

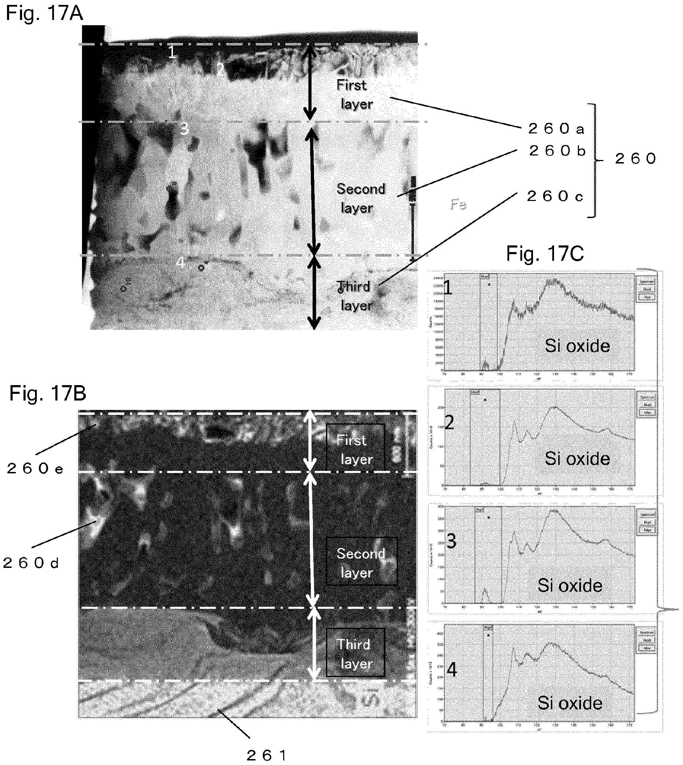

Initially, a typical example of a refrigerant compressor according to Embodiment 3 will be specifically described with reference to Figs. 16 and 17A. Fig. 16 is a cross-sectional view of a refrigerant compressor 300 according to Embodiment 3. Fig. 17A is a TEM (transmission electron microscope) image showing an example of a result of TEM observation performed for the cross-section of an oxide coating film 260.

As shown in Fig. 16, the refrigerant compressor 300 according to Embodiment 3 has a configuration similar to that of the refrigerant compressor 100 according to Embodiment 1 or the refrigerant compressor 200 according to Embodiment 2. Therefore, the specific configuration and operation of the refrigerant compressor 300 according to Embodiment 3 will not be described. A crankshaft 308 which is a typical example of the slide member is provided with the oxide coating film according to Embodiment 3.

As shown in Fig. 17A, the crankshaft 308 comprises a base material 261 made of gray cast iron (FC cast iron) containing about 2% silicon (Si), and an oxide coating film 260 provided on a surface thereof. The oxide coating film 260 according to Embodiment 3 includes an outermost portion 260a as a first layer, an intermediate portion 260b as a second layer, and an inner portion 260c as a third layer, the outermost portion 260a, the intermediate portion 260b, and the inner portion 160c being arranged in this order from the outermost surface of the slide surface, as in the oxide coating film 160 according to Embodiment 2. The oxide coating film 260 according to Embodiment 3 has a thickness of about 2µm, as in the oxide coating film 160 according to Embodiment 2.

The slide section of the refrigerant compressor 300, for example, the slide section of the crankshaft 308 which is an example of Embodiment 3 is provided with the oxide coating film 260 having the above-described configuration. Therefore, even in a case where the slide member is used in a harsh environment in which the oil film has run out, and the metals of the slide surfaces contact each other more frequently, the abrasion of the slide surface provided with the oxide coating film 260 can be suppressed over a long period of time.

### [Configuration of Oxide Coating Film]

Next, the oxide coating film 260 according to Embodiment 3 which is provided on the slide section will be described in more detail with reference to Figs. 17A to 17C. The oxide coating film 260 according to Embodiment 3 is the above-described second oxide coating film.

As described above, Fig. 17A is the TEM (transmission electron microscope) image showing a result of the TEM observation performed for the cross-section of the oxide coating film 260. Fig. 17B shows a result of element mapping of EDS analysis performed for the oxide coating film 260 of Fig. 17A. Fig. 17C is a view showing a result of the EELS analysis performed for the cross-section of the oxide coating film 260 of Fig. 17A.

In Embodiment 3, the crankshaft 307 comprises a base material 261 which is gray cast iron (FC cast iron). The oxide coating film 260 is provided on the surface of the base material 261. As in Embodiment 2, specifically, for example, the slide surface of the base material 261 is subjected to polishing finish, and then the oxide coating film 260 is formed by oxidation by use of an oxidation gas.

As described above, as shown in Fig. 17A, in Embodiment 3, the oxide coating film 260 is formed on the base material 261 (not shown). It is clearly observed that the oxide coating film 260 according to Embodiment 3 has a three-portion structure (three-layer structure) including the outermost portion 260a (first layer), the intermediate portion 260b (second layer), and the inner portion 260c (third layer), the outermost portion 260a, the intermediate portion 260b, and the inner portion 260c being arranged in this order from the outermost surface, as described above.

The outermost portion 260a is the composition **A** portion containing diiron trioxide (Fe₂O₃) which is more in quantity than other substances, as in the outermost portion 160a according to Embodiment 2. The intermediate portion 260b is the composition **B** portion containing triiron tetraoxide (Fe₃O₄) which is more in quantity than other substances and containing the silicon (Si) compound, as in the intermediate portion 160b according to Embodiment 2. The inner portion 260c is the composition **C** portion containing triiron tetraoxide (Fe₃O₄) which is more in quantity than other substances, and containing silicon which is more in quantity than that of the composition **B** portion, as in the inner portion 160c according to Embodiment 2.

Next, the concentration of silicon (Si) contained in the oxide coating film 260 will be described with reference to Figs. 17B and 17C. As described above, Fig. 17B shows a result of element mapping of silicon (Si) corresponding to the oxide coating film 260 of Fig. 17A. Fig. 17B shows the concentration ratio of silicon (Si) by contrasting density of black and white. As the color of the image is brighter, the ratio of silicon (Si) is higher. In the example of Figs. 17A and 17B, the thickness of the oxide coating film 260 is about 2.5µm. Boundaries of the outermost portion 260a, the intermediate portion 260b, and the inner portion 260c of the oxide coating film 260 are indicated by dot-and-dash lines.

From the results of the element analysis, as shown in Fig. 17B, the silicon (Si) concentration of the base material 261 is high, and the silicon (Si) concentration of the inner portion 260c of the oxide coating film 260 which is closer to the base material 261 is high. In contrast, in the interface between the inner portion 260c and the intermediate portion 260b, the silicon (Si) concentration is significantly reduced.

As in the white portion 160d of the intermediate portion 160b according to Embodiment 2, a white portion 260d is present in the intermediate portion 260b. In a region corresponding to the white portion 260d, as shown in Fig. 17B, the silicon (Si) concentration is increased. Silicon (Si) in the outermost portion 160a according to Embodiment 2 was not substantially observed. As shown in Fig. 17B, it is observed that in Embodiment 3, the white portion 260e is present in the outermost portion 260a. The silicon (Si) concentration in a region corresponding to the white portion 260e is increased.

Fig. 17C shows EELS waveforms of regions corresponding to regions indicated by numbers 1-4 in Fig. 17A. From the results of analysis for silicon (Si) of the oxide coating film 260, these EELS waveforms indicate that in the oxide coating film 260, silicon (Si) bonded to oxygen (O) is present in these regions. It can be seen that in the oxide coating film 260, the silicon (Si) compound such as silicon dioxide (SiO₂) is present in the outermost portion 260a (e.g., region indicated by 1 and 2 in Figs. 17A and 17C) in addition to the inner portion 260c (e.g., region indicated by 4 in Figs. 17A and 17C), and the intermediate portion 260b (e.g., region indicated by 3 in Figs. 17A and 17C).

The results of analysis for iron (Fe) and oxygen (O) of the oxide coating film 260 are similar to those of the oxide coating film 160 according to Embodiment 2, although this is not described in Embodiment 3.

Therefore, in the oxide coating film 260 according to Embodiment 3, the white portion 260e is present in the outermost portion 260a, and the silicon (Si) compound is present in the white portion 260e.

Next, consideration will be given to the fact that the oxide coating film 260 according to Embodiment 3 can obtain advantages because it includes the outermost portion 260a (composition **A** portion), the intermediate portion 260b (composition **B** portion), and the inner portion 260c (composition **C** portion), and the outermost portion 260a (composition **A** portion) contains at least the silicon (Si) compound.

As described in Embodiment 2, the outermost portion 260a (composition **A** portion) contains diiron trioxide (Fe₂O₃) as a major component. The crystal structure of diiron trioxide (Fe₂O₃) is flexible in the crystal structure, compared to triiron tetraoxide (Fe₃O₄) or the nitride coating film. Therefore, the oxide coating film 260 including the outermost portion 260a can effectively suppress the attacking characteristic with respect to the other member (sliding between the slide member provided with the oxide coating film 260 and the other member occurs) and improve the conformability of the slide surface, as described above. In addition, as described in Embodiment 2, the outermost portion 260a (composition **A** portion) of the oxide coating film 260 can improve the abrasion resistance of the oxide coating film 260.

The intermediate portion 260b and the inner portion 260c contain the silicon (Si) compound. As described in Embodiment 2, generally, the silicon (Si) compound has a hardness higher than that of the iron oxidation product. Therefore, it is estimated that even in a case where the outermost portion 260a is abraded, the intermediate portion 260b and the inner portion 260c have a high abrasion resistance. As described in Embodiment 2, the oxide coating film 260 has higher adhesivity (bearing force) to the base material 261 (iron-based material) than the conventional general oxide coating film.

In the oxide coating film 260 according to Embodiment 3, the outermost portion 260a contains the silicon (Si) compound with a hardness higher than that of the iron oxidation product. It is considered that this silicon (Si) compound contributes to suppressing the abrasion of the outermost portion 260a. It is estimated that since the oxide coating film 260 includes the outermost portion 260a containing the silicon (Si) compound, it can have a higher abrasion resistance.

In Embodiment 3, as described above, the inner portion 260c (composition C portion) may include solid-solved silicon (Si) portion as elemental substances, as well as the silicon (Si) compound. It is expected that the solid-solved silicon (Si) portion can improve the adhesivity of the oxide coating film 260. The solid-solved silicon (Si) portion can be present in a localized region of the intermediate portion 260b (composition **B** portion) or the outermost portion 260a (composition **A** portion) as well as the inner portion 260c (composition **C** portion), by setting conditions. This can improve the mutual adhesivity between the portions. Therefore, the advantages similar to the above-described advantages can be obtained, or more advantages can be obtained.

In Embodiment 3, the sealed container 101 reserves therein the lubricating oil 103, accommodates therein the electric component 106 and the compression component 107 which is driven by the electric component 106 and compresses the refrigerant, at least one slide member included in the compression component 107 comprises the iron-based material, and the oxide coating film 160 including the composition **A** portion, the composition **B** portion, and the composition **C** portion is provided on the slide surface of this iron-based material.

The composition **A** portion of the oxide coating film 260 contains diiron trioxide (Fe₂O₃) which is more in quantity than other substances, and may contain the silicon (Si) compound or the solid-solved silicon (Si) portion. The composition **B** portion of the oxide coating film 260 contains triiron tetraoxide (Fe₃O₄) which is more in quantity than other substances. The composition **B** portion contains the silicon (Si) compound and may contain the solid-solved silicon (Si). The composition **C** portion of the oxide coating film 260 contains triiron tetraoxide (Fe₃O₄) which is more in quantity than other substances, and contains silicon which is more in quantity than that of the composition **B** portion. For example, the composition **C** portion may contain the silicon (Si) compound and the solid-solved silicon (Si) portion. Or, the composition C portion may contain the silicon (Si) compound and may not contain the solid-solved silicon (Si) portion.

By forming the oxide coating film 260 on the slide surface of the slide member, the abrasion resistance of the slide member is improved, and the adhesivity of the oxide coating film 260 (the bearing force of the oxide coating film 260) to the base material 261 is improved. In Embodiment 3, the silicon (Si) compound is present in the outermost portion 260a which is the composition **A** portion. Since the composition **A** portion is located in the outermost portion of the slide surface, the slide surface can have a high abrasion resistance just after the slide operation of the slide section has started. This makes it possible to effectively suppress start-up failure such as twist, which is likely to occur at re-start-up, when the refrigerant compressor 300 is operated intermittently.

### [Modification, etc.]

The oxide coating film 160 according to Embodiment 2, and the oxide coating film 260 according to Embodiment 3 may be an oxide coating film (combined oxide coating film) combined with the oxide coating film 170 according to Embodiment 1. In other words, the first oxide coating film configuration and the second oxide coating film configuration may be combined.

For example, the oxide coating film 160 according to Embodiment 2 may include the silicon containing portion 170a containing silicon (Si) which is more in quantity than that of the base material 161, in a region which is closer to the base material 161. Likewise, the oxide coating film 260 according to Embodiment 3 may include the silicon containing portion 170a containing silicon (Si) which is more in quantity than that of the base material 261, in a region which is closer to the base material 261. Although the oxide coating film 160 according to Embodiment 2 includes the white portion 160d and the oxide coating film 260 according to Embodiment 3 includes the white portion 260d and the white portion 260e, these white portions 160d, 260d, 260e may be regarded as corresponding to the spot-shaped silicon containing portion 170b of the oxide coating film 170 according to Embodiment 1.

By combining the configurations of Embodiment 1 and Embodiment 2, or the configurations of Embodiment 1 and Embodiment 3, the oxide coating film can realize a higher abrasion resistance.

The specific configurations of the oxide coating film 260 according to Embodiment 3, for example, the kind (cast iron, steel material, sintered material) of the iron-based material as the base material 261, a typical range of a thickness, and the state (polished surface, surface treatment (finishing) surface, etc.) of the surface (slide surface) of the base material 261, are similar to those of the oxide coating film 170 according to Embodiment 1. Therefore, description of them is omitted.

Likewise, the kind of the refrigerant and lubricating oil which are suitably used, a driving method of the refrigerant compressor 300, the specific kind of the refrigerant compressor 300, and the like, in a case where the oxide coating film 260 according to Embodiment 3 is applied to the refrigerant compressor 300, are similar to those of the oxide coating film 170 according to Embodiment 1. Therefore, description of them is omitted.

A device incorporating an oxide coating film into which the oxide coating film 260 according to Embodiment 3 can be incorporated is not limited as in the oxide coating film 170 according to Embodiment 1. Therefore, description of them is omitted.

### (Embodiment 4)

The oxide coating film 170 according to Embodiment 1 includes the portion (III portion) containing diiron trioxide Fe₂O₃, in the region which is closer to the outermost surface and the silicon containing portion 170a containing silicon (Si) which is more in quantity than that of the base material 171, in the region which is closer to the base material 171. Further, the oxide coating film 170 according to Embodiment 1 may include the spot-shaped silicon containing portion 170b which is located closer to the outermost surface than the silicon containing portion 170a and is a portion containing silicon (Si) which is more in quantity than that of the surrounding region.

Each of the oxide coating film 160 according to Embodiment 2 and the oxide coating film 260 according to Embodiment 3 includes the composition **A** portion containing diiron trioxide (Fe₂O₃) which is more in quantity than other substances, the composition **B** portion containing triiron tetraoxide (Fe₃O₄) which is more in quantity than other substances, and containing the silicon (Si) compound, and the composition **C** portion containing triiron tetraoxide (Fe₃O₄) which is more in quantity than other substances, and containing silicon which is more in quantity than that of the composition **B** portion.

In contrast, an oxide coating film according to Embodiment 4 includes at least two portions in which crystals or grains constituting the oxide coating film are different. Hereinafter, the oxide coating film according to Embodiment 4 will be described. As the device incorporating the oxide coating film, the refrigerant compressor will be specifically described as in Embodiment 1 to Embodiment 3.

### [Configuration of Refrigerant Compressor]

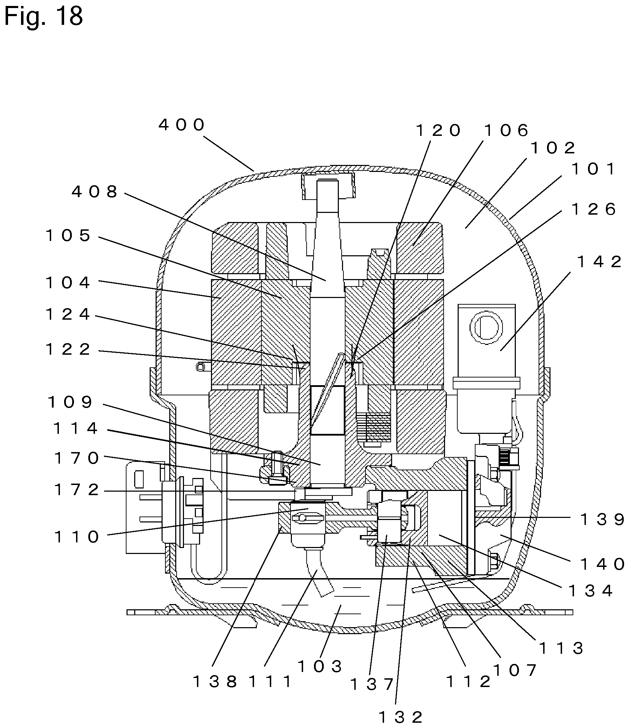

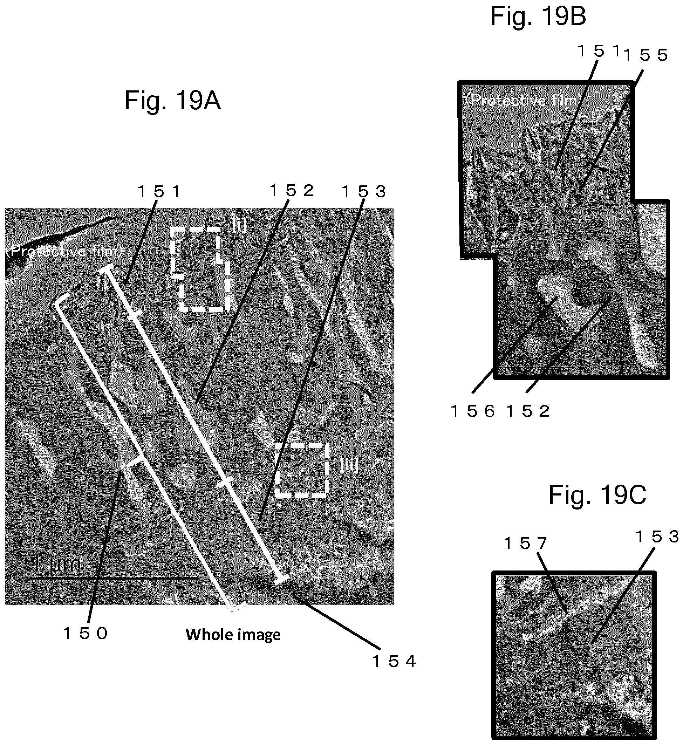

Initially, a typical example of a refrigerant compressor according to Embodiment 4 will be specifically described with reference to Figs. 18 and 19A. Fig. 18 is a cross-sectional view of a refrigerant compressor 400 according to Embodiment 4. Fig. 19A is a microscope photograph showing an example of a result of TEM (transmission electron microscope) observation performed for the cross-section of an oxide coating film 150 of the slide section of the refrigerant compressor 400.

As shown in Fig. 18, the refrigerant compressor 400 according to Embodiment 4 has a configuration similar to that of the refrigerant compressor 100 according to Embodiment 1, the refrigerant compressor 200 according to Embodiment 2, or the refrigerant compressor 300 according to Embodiment 3. Therefore, the specific configuration and operation of the refrigerant compressor 400 according to Embodiment 4 will not be described. A crankshaft 408 which is a typical example of the slide member is provided with an oxide coating film according to Embodiment 4.

The crankshaft 408 comprises the base material 154 made of gray cast iron (FC cast iron) containing about 2% silicon (Si), and the oxide coating film 150 provided on a surface of the base material 154. Fig. 19A shows a typical example of the oxide coating film 150 according to Embodiment 4. As described above, Fig. 19A shows an example of a result of TEM (transmission electron microscope) observation and shows the image of whole of the oxide coating film 150 in a thickness direction.

As shown in Fig. 19A, the oxide coating film 150 according to Embodiment 4 includes the first portion 151 containing the fine crystals 155, the second portion 152 located under the first portion 151 and containing the columnar grains 156 which are vertically elongated, and the third portion 153 located under the second portion 152 and containing the layered grains 157 which are horizontally elongated, the first portion 151, the second portion 152, and the third portion 153 being arranged in this order from the outermost surface of the oxide coating film 150. Under the third portion 153, the base material 154 is located. As will be described later, the oxide coating film 150 may include only one of the second portion 152 and the third portion 153. Therefore, the oxide coating film 150 according to Embodiment 4 may include the first portion 151 and the second portion 152, or may include the first portion 151 and the third portion 153.

The oxide coating film 150 according to Embodiment 4 has a thickness of about 3µm. The oxide coating film 150 of Fig. 19A is formed on a disc (base material 154) used in a ring on disc abrasion test in Example 4-1 which will be described later.

The slide section of the refrigerant compressor 400, for example, the slide section of the crankshaft 408 which is an example of Embodiment 4 is provided with the oxide coating film 150 having the above-described configuration. Therefore, even in a case where the slide section slides under a harsh environment in which the oil film has run out, and the metals of the slide surfaces contact each other more frequently, the abrasion of the slide surface provided with the oxide coating film 150 can be suppressed over a long period of time.

### [Configuration of Oxide Coating Film]

Next, the oxide coating film 150 which can suppress the abrasion of the slide section will be described in more detail with reference to Figs. 19B to 21, in addition to Fig. 19A. The oxide coating film 150 according to Embodiment 4 is the above-described third oxide coating film.

As described above, Fig. 19A shows the TEM image showing the image of the whole of the oxide coating film 150 in the thickness direction. Fig. 19B shows the TEM image displaying in an enlarged manner "i" portion surrounded by a broken line of Fig. 19A. Fig. 19C shows the TEM image displaying in an enlarged manner "ii" portion surrounded by a broken line of Fig. 19A.

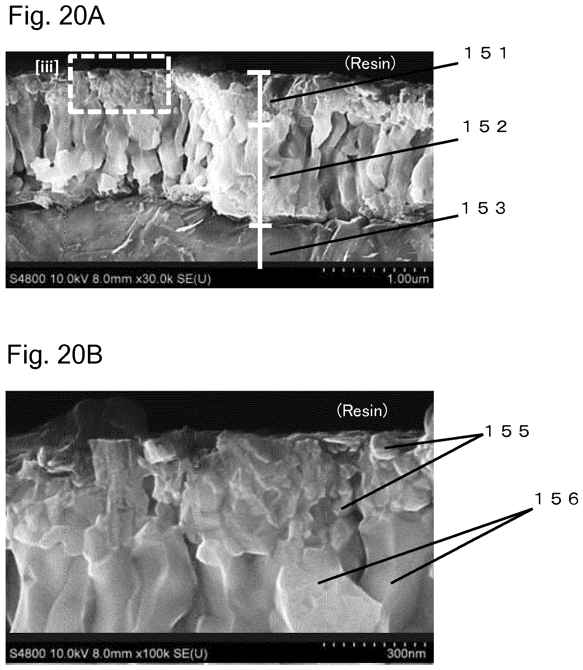

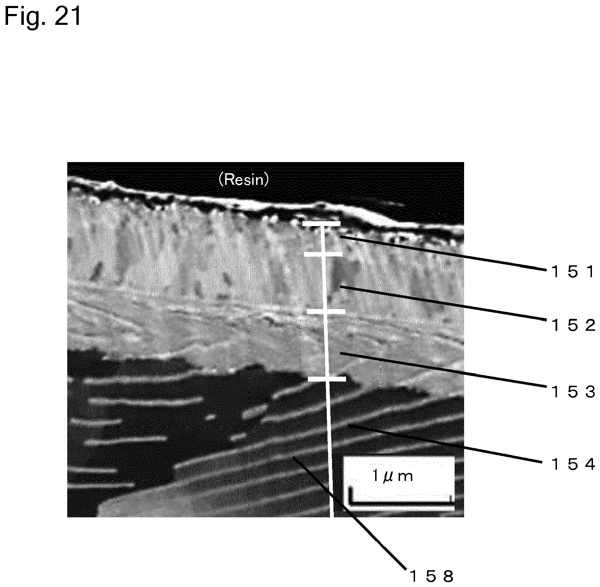

Fig. 20A is the SEM (scanning electron microscope) image showing an example of a result of SEM observation performed for the first portion 151 and the second portion 152, in the oxide coating film 150 according to Embodiment 4. Fig. 20B shows the SEM image displaying in an enlarged manner "iii" portion of Fig. 20A. Fig. 21 is a SIM (scanning ion microscope) image showing an example of a result of SIM observation performed for the oxide coating film 150 according to Embodiment 4.

In Embodiment 4, the crankshaft 408 comprises the base material 171 made of gray cast iron (FC cast iron). The oxide coating film 150 is formed on the surface of the base material 154. Specifically, for example, the slide surface of the base material 154 is subjected to polishing finish, and then the oxide coating film 150 is formed by oxidation by use of an oxidation gas.

In the example of Fig. 19A, the upper side corresponds to the outermost surface, and the lower side corresponds to the base material 154 (in the example of Fig. 19A, the thickness direction of the oxide coating film 150 is actually inclined to the left, but is expressed as a substantially upward and downward for the sake of convenience). Therefore, in the example of Fig. 19A, substantially upward and downward direction will be expressed as "vertical direction", and a direction perpendicular to the vertical direction will be expressed as "horizontal direction."

As described above, as shown in Fig. 19A, the oxide coating film 150 according to Embodiment 4 includes at least the first portion 151 containing the fine crystals 155, the second portion 152 located under the first portion 151 and containing the columnar grains 156 which are vertically elongated, and the third portion 153 located under the second portion 152 and containing the layered grains 157 which are horizontally elongated, the first portion 151, the second portion 152, and the third portion 153 being arranged in this order from the outermost surface of the oxide coating film 150. Under the third portion 153, the base material 154 is located.

Note that in the TEM observation of the sample (a portion of the crankshaft 408) provided with the oxide coating film 150, a protective film (carbon vapor-deposited film) is formed on the oxide coating film 150 to protect the sample. In the example of Fig. 19A, a portion above the first portion 151 is the protective film.

As shown in Figs. 19A to 19C and Figs. 20A and 20B, in the oxide coating film 150 according to Embodiment 4, the first portion 151 formed in the outermost surface contains the grains of the fine crystals 155 with a grain (particle) diameter of 100nm or less which are densely arranged. In the SEM observation of the sample (a portion of the crankshaft 408) provided with the oxide coating film 150, the protective resin film is formed on the oxide coating film 150 to protect the sample. Therefore, the surface of the oxide coating film 150 is embedded in the resin. In the example of Figs. 20A and 20B, this resin is provided above the first portion 151.

As shown in Figs. 20A and 20B, the second portion 152 is located under the first portion 151. The second portion 152 comprises grains with a vertical diameter of about 500nm to 1µm and a horizontal diameter of about 100nm to 150nm. An aspect ratio obtained by dividing the vertical diameter of the grain by the horizontal diameter of the grain is in a range of about 3 to 10. Therefore, the grains are vertically elongated. From this, it can be seen that the second portion 152 comprises a number of (numerous) vertically elongated columnar grains 156 arranged in the same direction and having a high aspect ratio.

As shown in Figs. 19A to 19C, Figs. 20A and 20B, and Fig. 21, in the oxide coating film 150 according to Embodiment 4, the third portion 153 is located under the second portion 152. The third portion 153 comprises the grains with a vertical diameter of several tens nm or less and a horizontal diameter of about several hundreds nm. An aspect ratio obtained by dividing the vertical diameter of the grain by the horizontal diameter of the grain is in a range of 0.01 to 0.1. Therefore, the grains are horizontally elongated. From this, it can be seen that the third portion 153 comprises horizontally elongated layered grains 157 with a low aspect ratio. In the example of Fig. 21, the above-described protective resin film is provided above the first portion 151.

As shown in Fig. 21, the third portion 153 contains cementite 158 as the grains of the base material 154. In contrast, the first portion 151 and the second portion 152 do not contain the cementite 158. From this, it is estimated that the third portion 153 is formed by diffusion of oxygen to the base material 154, by oxidation of the base material 154. It is also estimated that the first portion 151 and the second portion 152 are formed by the oxide grown on the surface of the base material 154.

As a manufacturing method (formation method) of the oxide coating film 150, a known oxidation method of the iron-based material may be suitably used and is not particularly limited. Manufacturing conditions or the like can be suitably set, depending on the conditions which are the kind of the iron-based material which is the base material 154, its surface state (the above-described polishing finish, etc.), desired physical property of the oxide coating film 150, and the like. In the present disclosure, the oxide coating film 150 can be formed on the surface of the base material 154 by oxidating gray cast iron as the base material 154 within a range of several hundreds degrees C, for example, within a range of 400 to 800 degrees C, by use of a known oxidation gas such as a carbon dioxide gas and known oxidation equipment.

It is sufficient that the oxide coating film 150 according to Embodiment 4 includes the first portion 151 and at least one of the second portion 152 and the third portion 153. In other words, by adjusting the conditions, the oxide coating film 150 may include two layers which are the first portion 151 and the second portion 152 or two layers which are the first portion 151 and the third portion 153. Further, by adjusting the conditions, the oxide coating film 150 may include three layers which are the first portion 151, the second portion 152, and the third portion 153 as described above.

As a typical configuration of the oxide coating film 150, as shown in Figs. 19A to 21, a three-layer structure composing the first portion 151, the second portion 152 and the third portion 153 are arranged in this order from the outermost surface. However, the oxide coating film 150 may include other portions, and the stacking order of these portions may be suitably set, by adjusting the conditions. This is obvious from Comparative Example 4-1 or Comparative Example 4-2 which will be described later the fact that the oxide coating film consisting of (including only) the second portion 152, or the oxide coating film including the second portion 152, and the third portion 153 can be formed by setting the conditions.

As will be described in Embodiment 5 later, the first portion 151 may be as follows. The oxide coating film 150 according to Embodiment 4 includes the first portion 151 as an essential portion, and may include the second portion 152, or the third portion 153. The oxide coating film 150 according to Embodiment 4 may include all of the first portion 151, the second portion 152, and the third portion 153. Further, the oxide coating film 150 according to Embodiment 4 may include other portions (portions other than the first portion 151, the second portion 152, and the third portion 153).

The first portion 151 contains the grains of the fine crystals 155. This does not mean that the first portion 151 does not contain grains or the like which are other than the fine crystals 155. In the present disclosure, the first portion 151 substantially contains the fine crystals 155, and may contain other grains or the like which are impurities. Therefore, the first portion 151 may contain at least the fine crystals 155. That is, the first portion 151 may contain other grains (see Embodiment 5 which will be described later) so long as the first portion 151 contains the fine crystals 155 as major grains.

The second portion 152 may contain other grains or substantially include the columnar grains 156 so long as the second portion 152 contains the columnar grains 156. The third portion 153 may contain other grains or may substantially contain the layered grains 157 so long as the third portion 153 contains the third layered grains 157. The first portion 151, the second portion 152, and the third portion 153 may contain grains other than the essential grains so long as the first portion 151, the second portion 152, and the third portion 153 can provide the advantages obtained in Examples which will be described later.

The upper limit of the crystal grain size (grain diameter) of the fine crystals 155 is not limited to 100nm or less in the oxide coating film 150 according to Embodiment 4 so long as the first portion 151 contains the fine crystals 155 with a nano level which are densely arranged. For example, the crystal grain size (grain diameter) of the fine crystals 155 may be in a range of 0.001 µm (1nm) ∼ 1µm (1000nm). This makes it possible to obtain the advantages similar to those obtained in Examples 4-1 to 4-3 which will be described later.

The aspect ratio of the columnar grains 156 is not limited to a value in a range of 3 to 10, in the oxide coating film 150 according to Embodiment 4, so long as the second portion 152 contains a number of (numerous) vertically elongated columnar grains 156 arranged in the same direction and having a high aspect ratio. For example, the aspect ratio of the columnar grains 156 may be in a range of 1 to 20. This makes it possible to obtain the advantages similar to those obtained in Examples 4-1 to 4-3 which will be described later.

The aspect ratio of the layered grains 157 is not limited to a value in a range of 0.01 to 0.1, in the oxide coating film 150 according to Embodiment 4, so long as the third portion 153 contains the layered grains 157 which are horizontally elongated and have a low aspect ratio. For example, the aspect ratio of the layered grains 157 may be in a range of 0.01 to 1. This makes it possible to obtain the advantages similar to those obtained in Examples 4-1 to 4-3 which will be described later.

Note that each of the grain (particle) diameter of the fine crystals 155 of the first portion 151, the aspect ratio of the columnar grains 156 of the second portion 152, and the aspect ratio of the layered grains 157 of the third portion 153 can be set to a value in a suitable range, by suitably setting manufacturing conditions of the oxide coating film 150 depending on the base material conditions such as the kind or surface state of the base material 154.

### [Evaluation of Oxide Coating Film]

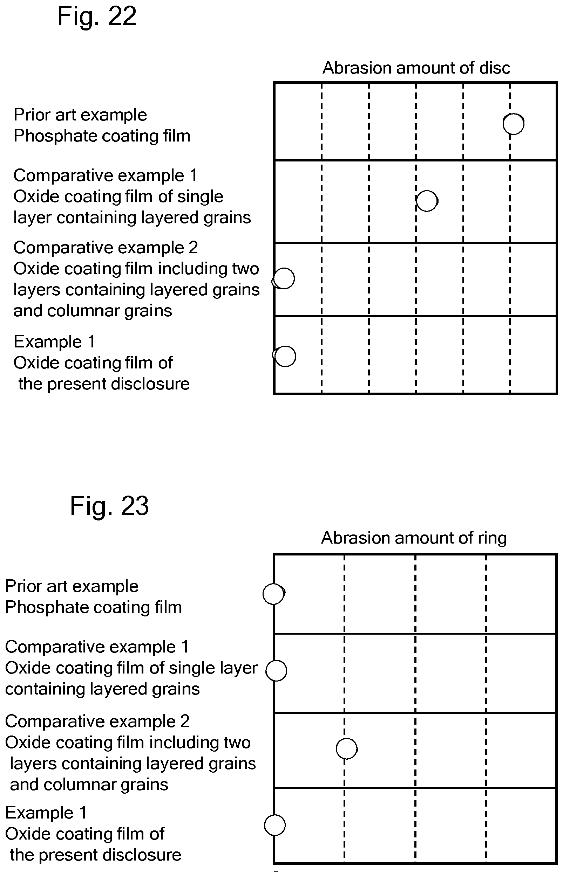

Next, results of evaluation of characteristic of a typical example of the oxide coating film 150 according to Embodiment 4 will be described with reference to Figs. 22 to 24. How the grains of the first portion 151, the second portion 152, and the third portion 153 contribute to the characteristic of the oxide coating film 150 will be described below, with reference to the results of Example, Prior Art Example, and Comparative Example. In Example, Prior Art Example, and Comparative Example described below will be expressed as Example 4-1, Prior Art Example 4-1, and Comparative Example 4-1 or the like, to distinguish them with Examples of Embodiment 1 or Examples of Embodiment 2 described above.

### (Example 4-1)

As the slide member, a disc made of gray cast iron was used. The base material 154 was gray cast iron. The surface of the disc was the slide surface. As described above, the disc was oxidated within a range of 400 to 800 degrees C, by use of the oxidation gas such as the carbon dioxide gas, to form the oxide coating film 150 according to Embodiment 4 on the slide surface. As shown in Figs. 19A to 21, the oxide coating film 150 included the first portion 151, the second portion 152, and the third portion 153. In this way, evaluation sample of Example 4-1 was prepared. The abrasion resistance of the evaluation sample and attacking characteristic of the evaluation sample with respect to the other member (sliding between the evaluation sample and the other member occurred) were evaluated as will be described later.

### (Prior Art Example 4-1)

As a surface treatment film, the conventional phosphate coating film was formed instead of the oxide coating film 150 according to Embodiment 4. Except this, the evaluation sample of Prior Art Example 4-1 was prepared as in Example 4-1. The abrasion resistance of the evaluation sample and attacking characteristic of the evaluation sample with respect to the other member (sliding between the evaluation sample and the other member occurred) were evaluated aw will be described later.

### (Comparative Example 4-1)

As a surface treatment film, a comparative oxide coating film including a single layer of a portion (third portion 153) containing the layered grains 157 was formed, instead of the oxide coating film 150 according to Embodiment 4. Except this, the evaluation sample of Comparative Example 4-1 was prepared as in Example 4-1. The abrasion resistance of the evaluation sample and attacking characteristic of the evaluation sample with respect to the other member (sliding between the evaluation sample and the other member occurred) were evaluated as will be described later.

### (Comparative Example 4-2)

As a surface treatment film, a comparative oxide coating film including two layers in which a portion (second portion 152) containing the columnar grains 156 was formed above a portion (third portion 153) containing the layered grains 157 was formed, instead of the oxide coating film 150 according to Embodiment 4. Except this, the evaluation sample of Comparative Example 4-2 was prepared as in Example 4-1. The abrasion resistance of the evaluation sample and attacking characteristic of the evaluation sample with respect to the other member (sliding between the evaluation sample and the other member occurred) were evaluated as will be described later.

### (Evaluation of Abrasion Resistance and Attacking Characteristic with Respect to the Other Member)

The ring on disc abrasion test was conducted on the above-described evaluation samples in a mixture ambience including R134a refrigerant and ester oil with VG3 (viscosity grade at 40 degrees C was 3mm²/s). In addition to discs as the evaluation samples, rings each including a base material made of gray cast iron and having a surface (slide surface) having been subjected to only the surface polishing, were prepared as the other members (sliding between the evaluation sample and the other member occurred). The abrasion test was conducted under a condition of a load 1000N, by use of intermediate (medium) pressure CFC friction/abrasion test machine AFT-18-200M (product name) manufactured by A&D Company, Limited. In this way, the abrasion resistance of the surface treatment film formed on the evaluation sample (disc) and the attacking characteristic of the surface treatment film with respect to the slide surface of the other member (ring) were evaluated.

### (Comparison Among Example 4-1, Prior Art Example 4-1, Comparative Example 4-1, and Comparative Example 4-2)

Fig. 22 shows a result of the ring on disc abrasion test and shows the abrasion amounts of the discs as the evaluation samples. Fig. 23 shows a result of the ring on disc abrasion test and shows the abrasion amounts of the rings as the other members.

As shown in Fig. 22, the abrasion amounts were less in the surface treatment films (oxide coating films) of Example 4-1, Comparative Example 4-1, and Comparative Example 4-2 than in the surface treatment film (phosphate coating film) of Prior Art Example 4-1. From this, it was found out that the surface treatment films of Example 4-1, Comparative Example 4-1, and Comparative Example 4-2 had high abrasion resistances. In particular, almost no abrasion was observed in the surface of the disc provided with the oxide coating film 150 of Example 4-1 and the surface of the disc provided with the comparative oxide coating film of Comparative Example 4-2. From this, it was found out that the abrasion resistances of the oxide coating films were higher than that of the phosphate coating film.

In contrast, as shown in Fig. 23, regarding the abrasion amounts of the rings which were the other members, almost no abrasion was observed in Example 4-1, Comparative Example 4-1, and Prior Art Example 4-1. However, a significant abrasion was observed in Comparative Example 4-2. From this, it was found out that the comparative oxide coating film of Comparative Example 4-2 had high attacking characteristic with respect to the other member.

As should be understood from the above, the abrasions of the disc and the ring, corresponding to only Example 4-1, namely, only the slide member including the oxide coating film 150, were not substantially observed. Thus, it was found out that the slide member including the oxide coating film 150 could realize high abrasion resistance and effectively suppress attacking characteristic with respect to the other member.

From the results of Example 4-1, Prior Art Example 4-1, Comparative Example 4-1, and Comparative Example 4-2, the oxide coating film 150 according to Embodiment 4 can obtain the following advantages.

It is estimated that slippage occurs in the grains while the slide member is sliding, in the configuration of Comparative Example 4-1 in which the surface treatment film comprises only the third portion 153, namely, the surface treatment film comprises only the portion containing the layered grains 157 which are the single layer and parallel to the slide direction. For this reason, some abrasion occurs in the slide surface of the slide member (disc) having the surface treatment film, whereas almost no abrasion occurs in the slide surface of the other member (ring). Therefore, the abrasion resistance of the slide member (disc) of Comparative Example 4-1 is low and not so low as that of Prior Art Example 4-1, but the attacking characteristic the slide member (disc) of Comparative Example 4-1 with respect to the other member is suppressed.

In the configuration of Comparative Example 4-2 in which the surface treatment film includes the two layers which are the second portion 152 and the third portion 153 arranged in this order from the outermost surface, namely, the configuration in which the portion containing the columnar grains 156 is provided on the portion containing the layered grains 157, numerous columnar grains 156 with a bundle form are present on the slide surface. It is estimated that such a configuration can increase the mechanical strength of the slide surface of the disc and hence the abrasion resistance of the slide member (disc). However, it is considered that the slide surface of the slide member (disc) attacks the slide surface of the other member (ring) which is not provided with the oxide coating film and as a result, the slide surface of the other member is abraded, for some time after sliding starts, i.e., during initial abrasion period.

After the ring on disc abrasion test was conducted, the slide surface of the slide member (disc) was observed. Peeling in a region that is in the vicinity of the interface between the columnar grains 156 and the layered grains 157 was not observed. From this, it is estimated that the second portion 152 containing the columnar grains 156 and the third portion 153 containing the layered grains 157 have high adhesion strength at the interface, and the peeling resistance of the surface treatment film of Comparative Example 4-2 is high.

In Example 4-1, the surface treatment film is the oxide coating film 150 including the first portion 151, the second portion 152, and the third portion 153. The slide member (disc) of Example 4-1 has abrasion resistance higher than those of the slide member (disc) of Comparative Example 4-1 and the slide member (disc) of Comparative Example 4-2. In addition, the slide member of Example 4-1 can effectively suppress the attacking characteristic with respect to the other member, because almost no abrasion occurs in the slide surface of the other member (ring).

As described above, in Example 4-1, the oxide coating film 150 according to Embodiment 4 can realize high abrasion resistance and very low attacking characteristic with respect to the other member. It is estimated that the oxide coating film 150 can realize this because of the presence of the first portion 151. The first portion 151 contains the fine crystals 155 with a grain (particle) diameter of 100nm or less. Between the fine crystals 155, there are minute voids, or minute concave-convex portions provided on the surface. Because of the minute voids and/or the minute concave-convex portions, the slide surface can retain the lubricating oil 103, and have the oil retaining capability, even in a situation in which the slide member slides under harsh conditions. As a result, the oil film is easily formed on the slide surface.

The oxide coating film 150 contains the columnar grains 156 and the layered grains 157, in a region which is closer to the base material 154. The columnar grains 156 and the layered grains 157 have hardness lower than that of the fine crystals 155 (these grains are softer than the fine crystals 155). It is estimated that the columnar grains 156 and the layered grains 157 serve as "buffering material" during the sliding. It is considered that the fine crystals 155 are compressed toward the base material 154 due to a pressure applied to the surface during sliding. It is considered that the attacking characteristic of the oxide coating film 150 with respect to the other member is more suppressed than those of the other surface treatment films, and the abrasion of the slide surface of the other member is effectively suppressed.

From the above-described respects, it is essential that the oxide coating film 150 according to Embodiment 4 comprises at least the first portion 151, and the oxide coating film 150 may comprise either the second portion 152 or the third portion 153. More preferably, as can be clearly seen from the results of Comparative Example 4-1 and Comparative Example 4-2, the oxide coating film 150 may comprise all of the first portion 151, the second portion 152, and the third portion 153.

Although the ring on disc abrasion test of Embodiment 4 was conducted in a state in which the disc was provided with the oxide coating film, similar results are obtained in a case where the ring is provided with the oxide coating film. Further, evaluation method of the abrasion resistance of the oxide coating film is not limited to the ring on disc abrasion test, and may be other test methods.

### (Example 4-2)

As the slide member, a round rod made of gray cast iron was used. The base material 154 was the gray cast iron, and the surface of the round rod made of gray cast iron was the slide surface. As in Example 4-1, the oxide coating film 150 according to Embodiment 4 was formed on the surface of the round rod made of gray cast iron. As shown in Figs. 19A to 21, the oxide coating film 150 comprised the first portion 151, the second portion 152, and the third portion 153. In this way, the evaluation sample of Example 4-2 was formed. The first end portion of this evaluation sample was immersed in the lubricating oil 103. It was observed that the lubricating oil 103 significantly moved upward from the first end of the evaluation sample toward the second end of the evaluation sample.

The first portion 151 comprised the grains of the fine crystals 155 with a grain (particle) diameter of 100nm or less which were densely arranged. It was experimentally supported that the lubricating oil 103 was easily retained in the surface (slide surface) of the oxide coating film 150 by a capillary action. From the result of Example 4-2, it was found out that the oxide coating film 150 according to Embodiment 4 could have high oil retaining capability, and hence the slide member including the oxide coating film 150 had high abrasion resistance and suppressed the attacking characteristic with respect to the other member.

### (Example 4-3)

Next, a device reliability test was conducted on the refrigerant compressor 400 including the crankshaft 408 provided with the oxide coating film 150 according to Embodiment 4. The refrigerant compressor 400 has the configuration of Fig. 18 as described above, which will not be described in repetition. In the device reliability test, as in the above-described Example 4-1, or the like, R134a refrigerant and ester oil with VG3 (viscosity grade at 40 degrees C was 3mm²/s) were used. To accelerate the abrasion of the main shaft section 109 of the crankshaft 408, the refrigerant compressor 400 was operated in a high-temperature high-load intermittent operation mode in which operation (running) and stopping of the refrigerant compressor 400 were repeated within a short time under a high-temperature state.

After the device reliability test was finished, the refrigerant compressor 400 was disassembled, the crankshaft 408 was taken out, and the slide surface of the crankshaft 408 was checked. Based on a result of the observation of the slide surface, evaluation of the device reliability test was conducted.

### (Prior Art Example 4-2)

The device reliability test was conducted on the refrigerant compressor 400 including the crankshaft 408 as in Example 4-3, except that the crankshaft 408 was provided with the conventional phosphate coating film. After the device reliability test was finished, the refrigerant compressor 400 was disassembled, the crankshaft 408 was taken out, and the slide surface of the crankshaft 408 was checked.

### (Comparison between Example 4-3 and Prior Art Example 4-2)

In Prior Art Example 4-2, the abrasion occurred in the slide surface of the crankshaft 408, and damage to the phosphate coating film was observed. In contrast, in Example 4-3, damage to the slide surface of the crankshaft 408 was very slight.

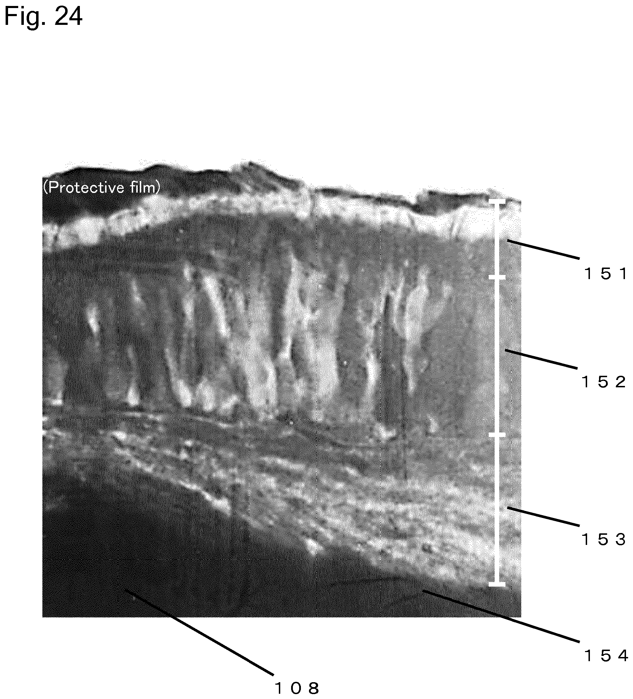

Further, the cross-section of the slide surface of the crankshaft 408 of Example 4-3 was observed by TEM. Fig. 24 shows the result. Fig. 24 shows the TEM image of the cross-section of the slide surface. In the example of Fig. 24, the protective resin film is provided above the first portion 151 to protect the sample, as described with reference to Fig. 19A.

As shown in Fig. 24, even though the refrigerant compressor 400 was operated under the harsh condition, the first portion 151 containing the fine crystals 155 remained in the slide surface of the crankshaft 408. From this, it was considered that the first portion 151 included in the oxide coating film 150 according to Embodiment 4 was a stationary (steady) abrasion region (region in which the slide surface had a conformability state, region in which abrasion progressed very slowly). From this, it was found out that the abrasion resistance of the slide member (the crankshaft 408 in Example 4-3) including the oxide coating film 150 was very high under an environment in which the refrigerant was compressed.

### [Modification, etc.]

In Embodiment 4, at least one of the slide members of the refrigerant compressor 400 is made of the iron-based material, and the oxide coating film 150 including the first portion 151 containing the fine crystals 155, the second portion 152 containing the columnar grains 156, and the third portion 153 containing the layered grains 157 is formed on the slide surface of this iron-based material.

With this configuration, the abrasion resistance of the slide member can be increased, and the attacking characteristic with respect to the other member can be effectively suppressed. This makes it possible to realize high efficiency design of the refrigerant compressor 400 (design in which the viscosity of the lubricating oil 103 is reduced, and the slide length of slide sections (a distance for which the slide sections slide) is designed to be shorter), which was difficult to realize in the case of the conventional surface treatment film. As a result, in the refrigerant compressor 400, a sliding loss of the slide section can be reduced, and high reliability and high efficiency can be achieved.

The specific configurations of the oxide coating film 150 according to Embodiment 4, for example, the kind (cast iron, steel material, sintered material) of the iron-based material as the base material 154, a typical range of a thickness, and the state (polished surface, surface treatment (finishing) surface, etc.) of the surface (slide surface) of the base material 154, are similar to those of the oxide coating film 170 according to Embodiment 1. Therefore, description of them is omitted.

Likewise, the kind of the refrigerant and lubricating oil which are suitably used, a driving method of the refrigerant compressor 400, the specific kind of the refrigerant compressor 400, and the like, in a case where the oxide coating film 150 according to Embodiment 4 is applied to the refrigerant compressor 400, are similar to those of the oxide coating film 170 according to Embodiment 1. Therefore, description of them is omitted.

A device incorporating an oxide coating film into which the oxide coating film 150 according to Embodiment 4 can be incorporated is not limited as in the oxide coating film 170 according to Embodiment 1. Therefore, description of them is omitted.

### (Embodiment 5)

In Embodiment 4, a preferable example of the oxide coating film 150 includes the first portion 151, the second portion 152, and the third portion 153. The present disclosure is not limited to this. In Embodiment 5, a configuration in which the first portion 151 includes a first a portion and a first b portion which are different from each other in crystal density will be specifically described.

### [Configuration of Refrigerant Compressor]

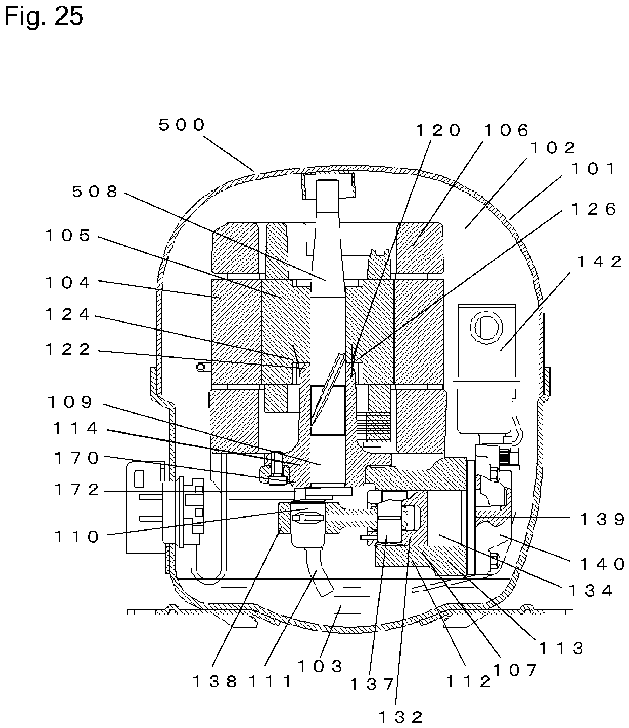

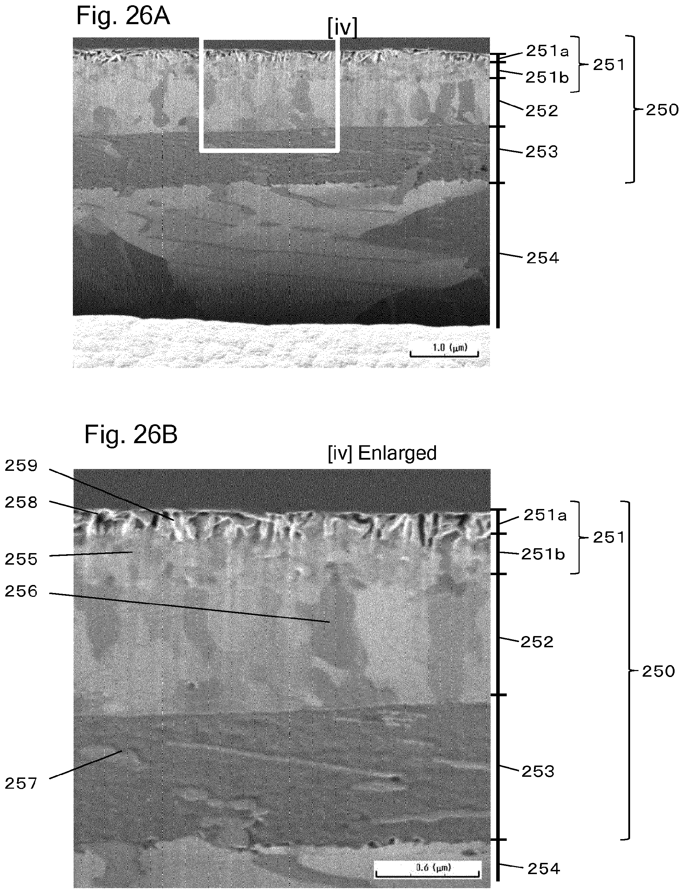

Firstly, a typical example of the refrigerant compressor according to Embodiment 5 will be specifically described with reference to Figs. 25 and 26A. Fig. 25 is a cross-sectional view of a refrigerant compressor 500 according to Embodiment 5. Fig. 26A is a SIM (scanning ion microscope) image showing the image of the whole of an oxide coating film 250 in a thickness direction.

As shown in Fig. 25, the refrigerant compressor 400 according to Embodiment 4 has a configuration similar to that of the refrigerant compressor 100 according to Embodiment 1, the refrigerant compressor 200 according to Embodiment 2, the refrigerant compressor 300 according to Embodiment 3, or the refrigerant compressor 400 according to Embodiment 4. Therefore, the specific configuration and operation of the refrigerant compressor 500 according to Embodiment 5 will not be described in repetition. A crankshaft 508 which is a typical example of the slide member is provided with the oxide coating film according to Embodiment 5.

As shown in Fig. 26A, the crankshaft 508 comprises a base material 254 made of gray cast iron (FC cast iron) containing about 2% silicon (Si), and the oxide coating film 250 provided on a surface of the base material 254. As shown in Fig. 26A, the oxide coating film 250 according to Embodiment 5 includes a first portion 251, a second portion 252 located under the first portion 251, and a third portion 253 located under the second portion 252, the first portion 251, the second portion 252, and the third portion 253 being arranged in this order from an outermost surface of the oxide coating film 250. The base material 254 is located under the third portion 253. The first portion 251 includes a first a portion 251a and a first b portion 251b which can be distinguished from each other. The oxide coating film 250 according to Embodiment 5 has a thickness of about 3µm.

The slide section of the refrigerant compressor 500, for example, the slide section of the crankshaft 508 which is an example of Embodiment 5 is provided with the oxide coating film 250 having the above-described configuration. Therefore, for example, even in a case where the slide member is used in a harsh environment in which the oil film has run out, and the metals of the slide surfaces contact each other more frequently, the abrasion of the slide surface provided with the oxide coating film 250 can be suppressed over a long period of time.

### [Configuration of Oxide Coating Film]

Next, the oxide coating film 250 which can suppress the abrasion of the slide section will be described in more detail with reference to Figs. 26A and 26B. The oxide coating film 260 according to Embodiment 5 is the above-described third oxide coating film.

Fig. 26A is the SIM (scanning ion microscope) image showing the image of the whole of the oxide coating film 250 in the thickness direction. Fig. 26B shows the SIM image displaying in an enlarged manner "iv" portion of Fig. 19A.

In Embodiment 5, the crankshaft 508 comprises the base material 254 made of gray cast iron. The oxide coating film 250 is formed on the surface of the base material 254 by oxidation as in Embodiment 4.

In the example of Fig. 26A, the upper side corresponds to the outermost surface, and the lower side corresponds to the base material 254. Therefore, in the example of Fig. 26A and Fig. 26B showing an enlarged image of Fig. 26A, substantially upward and downward direction will be expressed as "vertical direction", and a direction perpendicular to the vertical direction will be expressed as "horizontal direction."

As shown in Fig. 26A, the oxide coating film 250 according to Embodiment 5 includes at least a first portion 251 containing fine crystals 255, a second portion 252 located under the first portion 251 and containing columnar grains 256 which are vertically elongated, and a third portion 253 located under the second portion 252 and containing layered grains 257 which are horizontally elongated, the first portion 251, the second portion 252, and the third portion 253 being arranged in this order from the outermost surface of the oxide coating film 250. Under the third portion 253, the base material 254 is located. As shown in Fig. 26B, the first portion 251 includes the first a portion 251a and the first b portion 251b which are different from each other in crystal density.

In the SIM observation of the sample (a portion of the crankshaft 508) provided with the oxide coating film 250, the protective resin film is formed on the oxide coating film 250 to protect the sample, as described in Embodiment 4. Therefore, the surface of the oxide coating film 250 is embedded in the resin. In the example of Figs. 26A and 26B, this resin film is provided above the first portion 251.

As shown in Figs. 26A and 26B, in the oxide coting film 250 according to Embodiment 5, the first portion 251 formed in the outermost surface contains the grains of the fine crystals 255 with a grain (particle) diameter of 100nm or less, which are densely arranged, as in the first portion 151 of Embodiment 4.

The first portion 251 substantially contains the fine crystals 255 and can be assumed as "single layer" as in the first portion 151 according to Embodiment 4. However, as shown in Fig. 26B, regarding the density of the fine crystals 255, the first portion 251 includes the first **a** portion 251a which is closer to the outermost surface and the first **b** portion 251b which is closer to the base material 254 (second portion 252). The crystal density of the first **a** portion 251 a is lower than that of the first **b** portion 251b located under the first **a** portion 251a.

Specifically, as shown in Fig. 26B, the first **a** portion 251a contains at least the fine crystals 255, and has some voids 258 (black portion in Fig. 26B). The first **a** portion 251a contains needle-shaped grains 259 which are vertically elongated, and have a short-diameter length of 100nm or less and an aspect ratio in a range of 1 to 10. In contrast, the first **b** portion 251b located under the first **a** portion 251a does not substantially contain the voids 258 and the needle-shaped grains 259. The first **b** portion 251b contains nano- level fine crystals 255 which are densely arranged.

As shown in Figs. 26A and 26B, the second portion 252 is located under the first portion 251 (first **b** portion 251b). The second portion 252 contains grains with a vertical diameter of about 500nm to 1µm and a horizontal diameter of about 100nm to 150nm. An aspect ratio obtained by dividing the vertical diameter of the grain by the horizontal diameter of the grain is in a range of about 3 to 10. Therefore, the grains are vertically elongated. From this, it can be seen that the second portion 252 contains numerous columnar grains 256 which are vertically elongated, have a high aspect ratio, and are arranged in the same direction.

As shown in Figs. 26A and 26B, the third portion 253 is located under the second portion 252. The third portion 253 contains grains with a vertical diameter of several tens nm or less and a horizontal diameter of about several hundreds nm. An aspect ratio obtained by dividing the vertical diameter of the grain by the horizontal diameter of the grain is in a range of 0.01 to 0.1. Therefore, the grains are horizontally elongated. From this, it can be seen that the third portion 253 contains the layered grains 257 which are horizontally elongated and have a low aspect ratio.

The configuration of the oxide coating film 250 according to Embodiment 5 is similar to that of the oxide coating film 150 according to Embodiment 4. Therefore, the oxide coating film 250 can improve the abrasion resistance of the slide member and effectively suppress the attacking characteristic with respect to the other member, as described in Embodiment 4. A refrigerant compressor 500 including the slide member provided with the oxide coating film 250 can realize high efficiency design. Therefore, a sliding loss of the slide section can be reduced, and high reliability and high efficiency can be realized.

In the oxide coating film 250, the first portion 251 comprises at least the first **a** portion 251a and the first **b** portion 251b. The voids and/or concave-convex portions are present in spaces formed between the fine crystals 255 of the first **a** portion 251a, as in the first portion 151 according to Embodiment 4. In particular, the first **a** portion 251a has the voids 258 which are larger than the minute voids of the first portion 151 of Embodiment 4, because of low crystal density of the fine crystals 255. Therefore, even in a situation in which the lubricating oil 103 is not sufficiently fed to the slide section, the lubricating oil 103 can be sufficiently retained in the slide surface. As a result, the slide member can have a high oil retaining capability.

The first **a** portion 251a contains the voids 258 which contribute to the oil retaining capability and the needle-shaped grains 259. The needle-shaped grains 259 have a hardness lower than that of the fine crystals 255, and therefore, the slide surface including the needle-shaped grains 259 is abraded in a self-sacrificial manner. This slide surface can improve the conformability to the slide surface of the other member. In the refrigerant compressor 500, occurrence of static friction in the slide section is suppressed during start-up, and therefore stable low input can be realized early.

The crystal density of the first **b** portion 251b located under the first **a** portion 251a is higher than that of the first **a** portion 251a. As the grains of the fine crystals 255 arranged densely, the first **b** portion 251b is denser in crystal and higher in mechanical strength than the first **a** portion 251a. In this structure, the first **a** portion 251a having a high oil retaining capability is supported by the first **b** portion 251b having a high mechanical strength. Therefore, the first portion 251 can have a higher oil retaining capability and a higher peeling resistance as a whole.

At least one of (preferably both of) the second portion 252 and the third portion 253 is located under the first portion 251, as in the oxide coating film 150 according to Embodiment 4. The columnar grains 256 contained in the second portion 252 and the layered grains 257 contained in the third portion 253 have hardness lower than that of the fine crystals 255 contained in the first portion 251 (The columnar grains 256 and the layered grains 257 are softer than the fine crystals 255).

As described in Embodiment 4, it is considered that during the sliding, the second portion 252 (columnar grains 256) and the third portion 253 (layered grains 257) serve as "buffering material", and the first portion 251 (fine crystals 255) are compressed toward the base material 254. As a result, the attacking characteristic of the oxide coating film 250 with respect to the other member is more suppressed than the other surface treatment films, and the abrasion of the slide surface of the other member can be effectively suppressed.

In the oxide coating film 250 according to Embodiment 5, the upper limit of the grain (particle) diameter of the fine crystals 255 is not limited to 100nm or less so long as the first portion 251 (the first **a** portion 251a and the first **b** portion 251b) contains the grains with the nano-level fine crystals 255 densely arranged. For example, as in the first portion 151 according to Embodiment 4, the grain (particle) diameter of the fine crystals 255 may be in a range of 0.001 µm (1nm) ∼ 1µm (1000nm). This makes it possible to obtain the advantages similar to those of Embodiment 4.

The ratio of the voids 258 to the first **a** portion 251a is desirably 10% or more. This structure allows the oil film to be easily formed on the slide surface (can improve the oil retaining capability of the slide surface) and effectively suppress the attacking characteristic with respect to the other member. In contrast, the ratio of the voids 258 to the first **b** portion 251b is desirably less than 10%. This is because if the ratio of the voids 258 to the first **b** portion 251b is too high, the density (mechanical strength) of the grains is not sufficiently increased, and the first **b** portion 251b may not sufficiently support the first **a** portion 251a, although this depends on a comparison with the first **a** portion 251a.

Regarding the first portion 251, as a boundary (border) value (or threshold) used to distinguish the first **a** portion 251a and the first **b** portion 251b from each other, for example, a volume occupation rate (e.g., 10%) of the voids 258 may be used.

The first **a** portion 251a contains the needle-shaped grains 259 which are vertically elongated, as well as the fine crystals 255. The aspect ratio of the needle-shaped grains 259 is not particularly limited. In Embodiment 5, the length on the short-diameter side of the needle-shaped grains 259 is 100nm or less, and the aspect ratio of the needle-shaped grains 259 is in a range of 1 to 10. Alternatively, the aspect ratio of the needle-shaped grains 259may be in a range of 1 to 1000.

The specific configuration of the oxide coating film 250 is the same as that of the oxide coating film 150 according to Embodiment 4, except that the first portion 251 includes the first **a** portion 251a and the first **b** portion 251b which are different from each other in crystal density. Therefore, the oxide coating film 250 will not be described in detail. Except the above-described difference, the description of the oxide coating film 150 of Embodiment 4 can be incorporated herein to describe the configuration of the oxide coating film 250. Further, the first portion 251 may include a portion which is other than the first **a** portion 251a and the first **b** portion 251b and is different in crystal density from the first **a** portion 251a and the first **b** portion 251b.

As described above, in Embodiment 5, at least one of the slide members of the refrigerant compressor 500 is made of the iron-based material, and the oxide coating film 250 including the first portion 251 containing the fine crystals 255, the second portion 252 containing the columnar grains 256, and the third portion 253 containing the layered grains 257 is formed on the slide surface of this iron-based material, the first portion 251 including at least the first **a** portion 251a and the first **b** portion 251b which are different from each other in crystal density.

With this structure, the abrasion resistance of the slide member can be increased, and the attacking characteristic of the slide member with respect to the other member can be effectively suppressed. This makes it possible to realize high efficiency design of the refrigerant compressor 500 (design in which the viscosity of the lubricating oil 103 is reduced, and the slide length of the slide sections (a distance for which the slide sections slide) is designed to be shorter), which was difficult to realize in the case of the conventional surface treatment film. As a result, in the refrigerant compressor 500, a sliding loss of the slide section can be reduced, and high reliability and high efficiency can be achieved.

### [Modification, etc.]

The oxide coating film 150 according to Embodiment 4 and the oxide coating film 250 according to Embodiment 5 may be combined with the oxide coating film 170 according to Embodiment 1 to form an oxide coating film (composite oxide coating film). For example, the silicon containing portion 170a containing silicon (Si) which is more in quantity than that of the base material 154 may be present in the oxide coating film 150 according to Embodiment 4, in a region which is closer to the base material 154. Likewise, the silicon containing portion 170a containing silicon (Si) which is more in quantity than that of the base material 254 may be present in the oxide coating film 250 according to Embodiment 5, in a region which is closer to the base material 254.

The oxide coating film 150 according to Embodiment 4 or the oxide coating film 150 according to Embodiment 3 may include the spot-shaped silicon containing portion 170b of the oxide coating film 170 according to Embodiment 1, in a region which is closer to the outermost surface than the silicon containing portion 170a.

The oxide coating film 150 according to Embodiment 4 and the oxide coating film 250 according to Embodiment 5 may be combined with the oxide coating film 160 according to Embodiment 3 or the oxide coating film 260 according to Embodiment 4, to form a composite oxide coating film. In other words, the configuration of the first oxide coating film, the configuration of the second oxide coating film, and the configuration of the third oxide coating film can be combined.

For example, the first portion 151 of the oxide coating film 150 according to Embodiment 4 may be the composition **A** portion containing diiron trioxide (Fe₂O₃) which is more in quantity than other substances, of Embodiment 2 or 3, the second portion 152 of the oxide coating film 150 may be the composition **B** portion containing triiron tetraoxide (Fe₃O₄) which is more in quantity than other substances and containing the silicon (Si) compound, of Embodiment 2 or 3, and the third portion 153 of the oxide coating film 150 may be the composition **C** portion containing triiron tetraoxide (Fe₃O₄) which is more in quantity than other substances and containing Si which is more in quantity than that of the composition **B** portion, of Embodiment 2 or 3.

Likewise, the first portion 251 of the oxide coating film 250 according to Embodiment 5 may be the composition **A** portion of Embodiment 2 or 3, the second portion 252 of the oxide coating film 250 may be the composition **B** portion of Embodiment 2 or 3, and the third portion 253 of the oxide coating film 250 may be the composition **C** portion of Embodiment 2 or 3.

By suitably combining at least two of the configurations of Embodiment 1 to Embodiment 5 as described above, the oxide coating film can obtain higher abrasion resistance.

The specific configurations of the oxide coating film 250 according to Embodiment 5, for example, the kind (cast iron, steel material, sintered material) of the iron-based material as the base material 254, a typical range of a thickness, and the state (polished surface, surface treatment (finishing) surface, etc.) of the surface (slide surface) of the base material 254, are similar to those of the oxide coating film 170 according to Embodiment 1. Therefore, description of them is omitted.

Likewise, the kind of the refrigerant and lubricating oil which are suitably used, a driving method of the refrigerant compressor 500, the specific kind of the refrigerant compressor 500, and the like, in a case where the oxide coating film 250 according to Embodiment 5 is incorporated into the refrigerant compressor 500, are similar to those of the oxide coating film 170 according to Embodiment 1. Therefore, description of them is omitted.

A device incorporating an oxide coating film into which the oxide coating film 250 according to Embodiment 5 can be incorporated is not limited as in the oxide coating film 170 according to Embodiment 1. Therefore, description of them is omitted.

### (Embodiment 6)

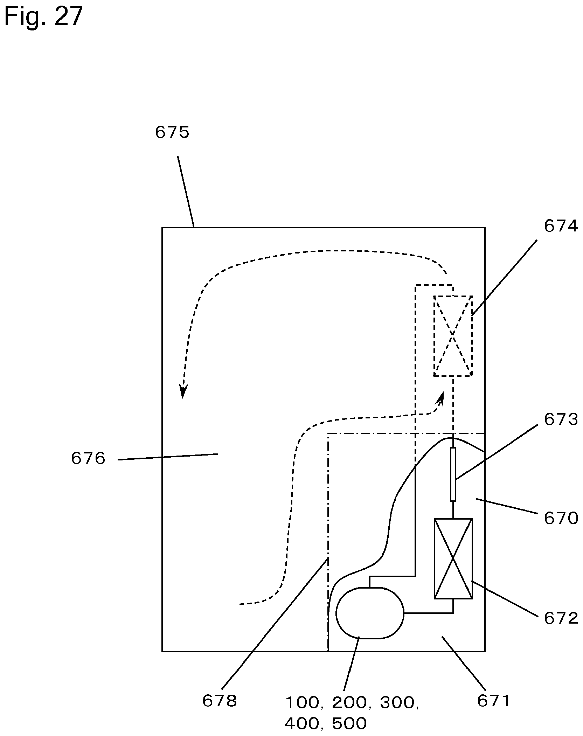

In Embodiment 6, an example of a refrigeration device including any one of the refrigerant compressors 100 to 500 of Embodiment 1 to Embodiment 5 will be specifically described with reference to Fig. 27.

Fig. 27 is a schematic view of a refrigeration device including the refrigerant compressor 100 according to Embodiment 1, the refrigerant compressor 200 according to Embodiment 2, the refrigerant compressor 300 according to Embodiment 3, the refrigerant compressor 400 according to Embodiment 4, or the refrigerant compressor 500 according to Embodiment 5. In Embodiment 6, only the schematic basic configuration of the refrigeration device will be described.

As shown in Fig. 27, the refrigeration device according to Embodiment 6 includes a body 675, a partition wall 678, a refrigerant circuit 670, and the like. The body 675 is formed by, for example, a heat insulating casing and doors. A surface of the casing opens and the doors are provided to open and close the opening of the casing. The inside of the body 675 is divided by the partition wall 678 into an article storage space 676 and a mechanical room 677. Inside the storage space 676, a blower (not shown) is provided. Alternatively, the inside of the body 675 may be divided into spaces other than the storage space 676 and the mechanical room 677.

The refrigerant circuit 670 is configured to cool the inside of the storage space 676. The refrigerant circuit 670 includes, for example, the refrigerant compressor 100 of Embodiment 1, a heat radiator 672, a pressure reducing unit 673, and a heat absorber 674 which are annularly coupled to each other by pipes. The heat absorber 674 is disposed in the storage space 676. Cooling heat of the heat absorber 674 is agitated by the blower (not shown) and circulated through the inside of the storage space 676 as indicated by broken-line arrows shown in Fig. 27. In this way, the inside of the storage space 676 is cooled.

The refrigerant compressor 100 included in the refrigerant circuit 670 includes the slide member made of the iron-based material, and the oxide coating film 170 is formed on the slide surface of this slide member, as described in Embodiment 1.

Instead of the refrigerant compressor 100, the refrigerant circuit 670 may include the refrigerant compressor 200 of Embodiment 2. The refrigerant compressor 200 includes the slide member made of the iron-based material, and the oxide coating film 160 is formed on the slide surface of this slide member, as in the refrigerant compressor 100. In the same manner, the refrigerant circuit 670 may include the refrigerant compressor 300 of Embodiment 3, instead of the refrigerant compressor 100. The refrigerant compressor 300 includes the slide member made of the iron-based material, and the oxide coating film 260 is formed on the slide surface of this slide member, as in the refrigerant compressor 100.

The refrigerant circuit 670 may include the refrigerant compressor 400 of Embodiment 4, instead of the refrigerant compressor 100. The refrigerant compressor 400 includes the slide member made of the iron-based material, and the oxide coating film 150 is formed on the slide surface of this slide member, as in the refrigerant compressor 100. Likewise, the refrigerant circuit 670 may include the refrigerant compressor 500 of Embodiment 5, instead of the refrigerant compressor 100. The refrigerant compressor 500 includes the slide member made of the iron-based material, and the oxide coating film 250 is formed on the slide surface of this slide member, as in the refrigerant compressor 100.

As described above, the refrigeration device according to Embodiment 6 includes the refrigerant compressor 100 according to Embodiment 1, the refrigerant compressor 200 according to Embodiment 2, the refrigerant compressor 300 according to Embodiment 3, the refrigerant compressor 400 according to Embodiment 4, or the refrigerant compressor 100 according to Embodiment 5. The slide sections included in the refrigerant compressors 100 to 500 have high abrasion resistance and high adhesivity to the slide surfaces. The refrigerant compressors 100 to 500 can reduce a sliding loss of the slide sections, and achieve high reliability and high efficiency. As a result, the refrigeration device according to Embodiment 6 can reduce electric power consumption, realize energy saving, and improve reliability.

As described above, Embodiment 1 to Embodiment 5, as the device incorporating the oxide coating film, the refrigerant compressors have been described. In Embodiment 6, as the device incorporating the oxide coating film, the refrigeration device including the refrigerant compressor has been described. However, the device incorporating the oxide coating film, to which the present disclosure is applicable, is not limited to the refrigerant compressor or the refrigeration device including the refrigerant compressor. The oxide coating film according to the present disclosure is applicable to any devices so long as they include slide members which perform slide (sliding) such as reciprocating sliding or rotation sliding.

Specifically, for example, the devices may be operation devices such as a pump, a motor, an engine, an expansion device, a refrigeration (freezing) device such as a refrigerator, a refrigeration show case, and an air conditioner, home appliances such as a laundry machine and a cleaner, a centrifugal machine, and facility equipment such as a built-in device.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the invention and all modifications which come within the scope of the appended claims are reserved.

### Industrial Applicability

As described above, an oxide coating film of the present invention can obtain high abrasion resistance over a long period of time under, for example, a harsh environment, and therefore improve reliability of a slide section. Therefore, the present invention is widely applicable to various slide members or devices including various slide sections.

### Reference Signs List

- 100: refrigerant compressor (device incorporating oxide coating film)
- 108: crankshaft (slide member)
- 150: oxide coating film
- 151: first portion
- 152: second portion
- 153: third portion
- 154: base material
- 155: fine crystal
- 156: columnar grains
- 157: layered grains
- 160: oxide coating film
- 160a: outermost portion
- 160b: intermediate portion
- 160c: inner portion
- 160d: white portion
- 161: base material
- 170: oxide coating film
- 170a: silicon containing portion
- 170b: spot-shaped silicon containing portion
- 171: base material
- 200: refrigerant compressor (device incorporating oxide coating film)
- 208: crankshaft (slide member)
- 250: oxide coating film
- 251: first portion
- 251a: first **a** portion
- 251b: first **b** portion
- 252: second portion
- 253: third portion
- 254: base material
- 255: fine crystals
- 256: columnar grains
- 257: layered grains
- 258: voids
- 259: needle-shaped grains
- 260: oxide coating film
- 260a: outermost portion
- 260b: intermediate portion
- 260c: inner portion
- 260d: white portion
- 260e: white portion
- 300: refrigerant compressor (device incorporating oxide coating film)
- 308: crankshaft (slide member)
- 400: refrigerant compressor (device incorporating oxide coating film)
- 508: crankshaft (slide member)
- 500: refrigerant compressor (device incorporating oxide coating film)
- 508: crankshaft (slide member)
- 670: refrigerant circuit
- 672: heat radiator
- 673: pressure reducing unit
- 674: heat absorber

## Claims

1. An oxide coating film (170) provided on a surface of an iron-based material which is a base material (171) of a slide member (108), the oxide coating film (170) comprising a portion containing diiron trioxide (Fe₂O₃), in a region which is closer to an outermost surface of the oxide coating film (170), a portion containing diiron trioxide (Fe₂O₃) which is more in quantity than other substances, and a portion containing triiron tetraoxide (Fe₃O₄) which is more in quantity than other substances, the portion containing diiron trioxide (Fe₂O₃) and the portion containing triiron tetraoxide (Fe₃O₄) being arranged in this order from the outermost surface of the oxide coating film (170);
**characterized in that**
the oxide coating film (170) comprises a silicon containing portion (170a) containing silicon (Si) which is more in quantity than silicon (Si) of the base material (171), in a region which is closer to the base material (171).

2. The oxide coating film (170) according to claim 1, further comprising:
a spot-shaped silicon containing portion (170b) which is located closer to the outermost surface of the oxide coating film (170) than the silicon containing portion (170a), the spot-shaped silicon containing portion (170b) being a portion containing silicon (Si) which is more in quantity than silicon (Si) contained in a region surrounding the spot-shaped silicon containing portion (170b).

3. The oxide coating film (170) according to claim 1 or 2,
wherein the oxide coating film (170) further comprises:
a portion containing iron oxide (FeO) which is more in quantity than other substances, the portion containing diiron trioxide (Fe₂O₃), the portion containing triiron tetraoxide (Fe₃O₄), and the portion containing iron oxide (FeO) being arranged in this order from the outermost surface of the oxide coating film (170).

4. The oxide coating film (170) according to any one of claims 1 to 3,
wherein the oxide coating film (170) has a thickness in a range of 1 to 5µm.

5. A slide member (108) comprising the oxide coating film (170) as recited in any one of claims 1 to 4, which is provided on a slide surface of a base material (171) of the slide member (108).

6. The slide member (108) according to claim 5,
wherein the iron-based material which is the base material (171) is cast iron.

7. The slide member (108) according to claim 5 or 6,
wherein the iron-based material which is the base material (171) contains 0.5 to 10% silicon.

8. A device incorporating the slide member (108) provided with the oxide coating film (170), which is recited in any one of claims 5 to 7.

## Patentansprüche

1. Oxidbeschichtungsfilm (170), der auf einer Oberfläche eines eisenbasierten Materials vorgesehen ist, das ein Basismaterial (171) eines Gleitelements (108) ist, wobei der Oxidbeschichtungsfilm (170) einen Abschnitt, der Di-Eisentrioxid (Fe₂O₃) enthält, in einem Bereich, der näher an einer äußersten Oberfläche des Oxidbeschichtungsfilms (170) liegt, einen Abschnitt, der Di-Eisentrioxid (Fe₂O₃) in einer größeren Menge als andere Substanzen enthält, und einen Abschnitt, der Tri-Eisentetraoxid (Fe₃O₄) in einer größeren Menge als andere Substanzen enthält, umfasst, wobei der Abschnitt, der Di-Eisentrioxid (Fe₂O₃) enthält, und der Abschnitt, der Tri-Eisentetraoxid (Fe₃O₄) enthält, ausgehend von der äußersten Oberfläche des Oxidbeschichtungsfilms (170) in dieser Reihenfolge angeordnet sind;
**dadurch gekennzeichnet, dass**
der Oxidbeschichtungsfilm (170) in einem Bereich, der näher an dem Basismaterial (171) liegt, einen Silizium enthaltenden Abschnitt (170a) umfasst, der Silizium (Si) in einer größeren Menge enthält als das Silizium (Si) des Basismaterials (171).

2. Oxidbeschichtungsfilm (170) nach Anspruch 1, ferner umfassend:
einen punktförmigen Silizium enthaltenden Abschnitt (170b), der näher an der äußersten Oberfläche des Oxidbeschichtungsfilms (170) angeordnet ist als der Silizium enthaltende Abschnitt (170a), wobei der punktförmige Silizium enthaltende Abschnitt (170b) ein Abschnitt ist, der Silizium (Si) in einer größeren Menge enthält als das Silizium (Si), das in einem Bereich enthalten ist, der den punktförmigen Silizium enthaltenden Abschnitt (170b) umgibt.

3. Oxidbeschichtungsfilm (170) nach Anspruch 1 oder 2,
wobei der Oxidbeschichtungsfilm (170) ferner umfasst:
einen Abschnitt, der Eisenoxid (FeO) in einer größeren Menge als andere Substanzen enthält, wobei der Abschnitt, der Di-Eisentrioxid (Fe₂O₃) enthält, der Abschnitt, der Tri-Eisentetraoxid (Fe₃O₄) enthält, und der Abschnitt, der Eisenoxid (FeO) enthält, ausgehend von der äußersten Oberfläche des Oxidbeschichtungsfilms (170) in dieser Reihenfolge angeordnet sind.

4. Oxidbeschichtungsfilm (170) nach einem der Ansprüche 1 bis 3,
wobei der Oxidbeschichtungsfilm (170) eine Dicke in einem Bereich von 1 bis 5 µm aufweist.

5. Gleitelement (108), das den Oxidbeschichtungsfilm (170) nach einem der Ansprüche 1 bis 4 umfasst, der auf einer Gleitfläche eines Basismaterials (171) des Gleitelements (108) vorgesehen ist.

6. Gleitelement (108) nach Anspruch 5,
wobei das eisenbasierte Material, das das Basismaterial (171) ist, Gusseisen ist.

7. Gleitelement (108) nach Anspruch 5 oder 6,
wobei das eisenbasierte Material, das das Basismaterial (171) ist, 0,5 bis 10 % Silizium enthält.

8. Vorrichtung, die mit dem Gleitelement (108) nach einem der Ansprüche 5 bis 7 ausgestattet ist, das mit dem Oxidbeschichtungsfilm (170) versehen ist.

## Revendications

1. Film de revêtement d'oxyde (170) disposé sur une surface d'un matériau à base de fer qui est un matériau de base (171) d'un élément coulissant (108), le film de revêtement d'oxyde (170) comprenant une partie contenant du trioxyde de difer (Fe₂O₃), dans une région qui est plus proche d'une surface la plus à l'extérieur du film de revêtement d'oxyde (170), une partie contenant du trioxyde de difer (Fe₂O₃) qui est présent en une quantité supérieure à celle des autres substances et une partie contenant du tétraoxyde de trifer (Fe₃O₄) qui est présent en une quantité supérieure à celle des autres substances, la partie contenant du trioxyde de difer (Fe₂O₃) et la partie contenant du tétraoxyde de trifer (Fe₃O₄) étant agencées dans cet ordre à partir de la surface la plus à l'extérieur du film de revêtement d'oxyde (170) ;
**caractérisé en ce que**
le film de revêtement d'oxyde (170) comprend une partie contenant du silicium (170a) contenant du silicium (Si) qui est présent en une quantité supérieure à la quantité de silicium (Si) du matériau de base (171), dans une région qui est plus proche du matériau de base (171).

2. Film de revêtement d'oxyde (170) selon la revendication 1, comprenant en outre :
une partie contenant du silicium en forme de points (170b) qui est située plus près de la surface la plus à l'extérieur du film de revêtement d'oxyde (170) que la partie contenant du silicium (170a), la partie contenant du silicium en forme de points (170b) étant une partie contenant du silicium (Si) qui est présent en une quantité supérieure à la quantité de silicium (Si) contenue dans une région entourant la partie contenant du silicium en forme de points (170b).

3. Film de revêtement d'oxyde (170) selon la revendication 1 ou 2,
dans lequel le film de revêtement d'oxyde (170) comprend en outre :
une partie contenant de l'oxyde de fer (FeO) qui est présent en une quantité supérieure à celle des autres substances, la partie contenant du trioxyde de difer (Fe₂O₃), la partie contenant du tétraoxyde de trifer (Fe₃O₄) et la partie contenant de l'oxyde de fer (FeO) étant agencées dans cet ordre à partir de la surface la plus à l'extérieur du film de revêtement d'oxyde (170).

4. Film de revêtement d'oxyde (170) selon l'une quelconque des revendications 1 à 3,
dans lequel le film de revêtement d'oxyde (170) présente une épaisseur dans une plage de 1 à 5 µm.

5. Élément coulissant (108) comprenant le film de revêtement d'oxyde (170) selon l'une quelconque des revendications 1 à 4, qui est disposé sur une surface de coulissement d'un matériau de base (171) de l'élément coulissant (108).

6. Élément coulissant (108) selon la revendication 5,
dans lequel le matériau à base de fer qui est le matériau de base (171) est de la fonte.

7. Élément coulissant (108) selon la revendication 5 ou 6,
dans lequel le matériau à base de fer qui est le matériau de base (171) contient 0,5 à 10 % de silicium.

8. Dispositif incorporant l'élément coulissant (108) selon l'une quelconque des revendications 5 à 7 pourvu du film de revêtement d'oxyde (170).
